# EUROPEAN PATENT SPECIFICATION

(11) **EP 2 187 106 B1**
(45) Date of publication and mention of the grant of the patent: **03.07.2019**
(21) Application number: 08778147.2
(22) Date of filing: 14.07.2008
(51) Int. Cl.: F16L 47/00, F16L 19/02, F16L 55/00, F16L 55/027, F16L 47/32, F16L 47/04, F16L 43/00, F16L 19/04

(54) **RESIN PIPE FITTING AND METHOD FOR PRODUCING THE SAME**
HARZROHRANSCHLUSSSTÜCK UND HERSTELLUNGSVERFAHREN DAFÜR
RACCORD DE TUYAU EN RESINE ET SON PROCEDE DE PRODUCTION

(30) Priority: 23.08.2007 JP 2007216961
(43) Date of publication of application: 19.05.2010
(73) Proprietor: NIPPON PILLAR PACKING CO., LTD., Nishi-ku Osaka-shi, Osaka 550-0013 (JP)
(72) Inventor: KAWAMURA, Hitoshi, Osaka-shi, Osaka 532-0022 (JP); IIDA, Toshihide, Sanda-shi Hyogo 669-1333 (JP); KOIKE, Tomoyuki, Sanda-shi Hyogo 669-1333 (JP)
(74) Representative: Fleuchaus, Michael A.
(86) International application number: PCT/JP2008/062676
(87) International publication number: WO 2009/025136

(56) References cited:
- WO-A1-2004/027305
- WO-A1-2007/032150
- FR-A5- 2 072 490
- JP-A- 10 054 489
- JP-A- 2005 344 795
- JP-A- 2006 337 234
- JP-A- 2006 337 234
- JP-U- S6 317 904
- JP-U- 02 085 606
- JP-U- 06 065 694
- JP-U- 63 017 904
- US-A- 3 091 483
- US-A- 3 976 314
- US-A1- 2006 157 975

## Description

### Technical Field

The present invention concerns a pipe fitting made of resin and a method for producing the same and more specifically relates to a pipe fitting made of resin applicable to a liquid piping for the liquid of high-purity, the water of ultra-high purity, the pharmaceutical liquid or the like which are handled during a production process of the semi-conductor, the liquid crystal and the pharmaceutical products as well as to a method for producing the same.

### Background Art

In order to adjust the flow amount of the liquid, conventionally used are a flow-amount adjusting valve, a throttle plate having an orifice structure (for example, see Patent Literature 1), a spacer and a sleeve. When using the flow-adjusting valve, after having been arranged in a piping, it was required to perform a flow-adjusting work independently and also was more costly. In the case of utilizing the throttle plate with the orifice structure, it was not required to perform the flow-adjusting work as in the case of the above-mentioned flow-amount adjusting valve and besides it was less costly. However, a large space was necessary in the aspect of piping-design so as to arrange the throttle plate or the like in a flow-passage. In addition, the more throttle plates were provided, the more sealing portions were formed. Thus this was unfavorable from the view point of leakage.

On the other hand, recently, many of the following first, second and third resin pipe fittings have been used in a standard way as the liquid piping for the liquid of high-purity, the water of ultra-high purity and the pharmaceutical liquid to be treated during the production process for the semi-conductor, the liquid crystal and the pharmaceutical products.

A first resin pipe fitting is disclosed in the Patent Literature 2 or the like. This is shown in Figs. 1 to 8. Fig. 1 is a sectional view showing the first resin pipe fitting as it is assembled. Fig. 2 is a sectional view showing a main body to be provided in the first resin pipe fitting. Fig. 3 is a sectional view showing an inner ring to be prepared in the first resin pipe fitting. Fig. 4 is a sectional view showing a press ring to be provided in the first resin pipe fitting.

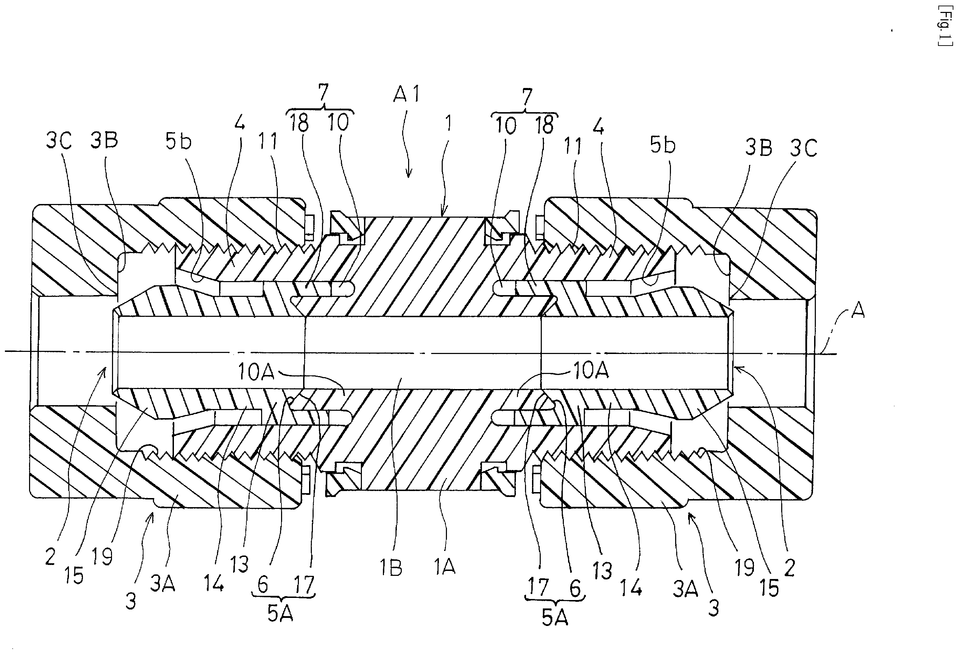

In Figs. 1 to 4, the first resin pipe fitting A1 is formed by molding from fluorine resin such as PFA, PTFE and ETFE. It comprises a tubular main body 1 which is a straight tube, an inner ring 2 in the form of a sleeve and a press ring 3 that is a union nut in the shape of a cap nut. One inner ring 2 and one press ring 3 are provided for each of the end portions of the main body 1, respectively. Since the main body 1 of the first resin pipe fitting A1, which is the straight tube, has two end portions, two inner rings 2 and two press rings 3 are provided therefor, respectively.

The main body 1 is formed at each of its end portions with a receiving port 4, which comes to be a tubular female connection port. There is formed between the receiving ports 4 a tubular barrel portion 1A including a fluid flow-passage 1B which has the same inner diameter as that of each of the tubular members 12, 24, which are tubes made of fluorine resin such as PFA, PTFE, ETFE to be connected, and allows the receiving ports 4 to be mutually connected in communication with each other coaxially of an axis (A). Each of the receiving ports 4 has an inlet port formed with a slant sealing surface 5b that crosses the axis (A) and forms a third sealing portion 5B to be mentioned later and has an inner remote portion formed with an annular sealing end surface 6 which forms a primary sealing portion 5A to be also mentioned later. The annular sealing end surface 6 is formed at its radially outer side position with a cylindrical groove portion 10 of a suitable depth along an axial direction, which forms a secondary sealing portion 7 to be mentioned later. This cylindrical groove portion 10 is provided at its radially more inner portion with an annular portion 10A, an end portion of which comes to be the annular sealing surface 6, and each of the receiving ports 4 is formed on its outer periphery with a male threaded portion 11.

The sleeve-like inner ring 2 has an inner periphery formed to have an inner diameter identical to those of tubular members 12, 24 as well as to that of the tubular barrel portion 1A of the main body 1 so as not to interrupt the movement of the fluid and has an inner end portion provided with a fitting portion 13 of an outer diameter able to be fitted with each of the receiving ports 4 of the main body 1. A tubular-member push-in portion 14 formed in continuity with the fitting portion 13 has an outer periphery on its leading end portion side formed with a projection portion 15 shaped like a mountain in section. The inner ring 2 also has an outer peripheral sealing surface 16b which pushes the push-in portion 14 into one end portion of each of the tubular members 12, 24 with the fitting portion 13 projecting from one end portion of each of the tubular members 12, 24, thereby enabling a peripheral wall portion of each of the tubular portions 12, 24 at a portion corresponding to the projection portion 15 to radially enlarge so that the outer peripheral sealing surface 16b is brought into butting contact with the slant sealing surface 5b formed at the inlet of the receiving port 4 of the main body 1 from an axial direction to form the third sealing portion 5B. It is also provided with a portion 16 for inserting each of the tubular members 12, 24 of the inner ring 2 to be inserted into the receiving port 4 of the main body 1. The fitting portion 13, which is a projection portion from each of the tubular members 12, 24, is formed with a projecting inner end surface 17 that is brought into butting contact with the annular sealing end surface 6 from the axial direction so as to form the primary sealing portion 5A when the insertion portion 16 of each of the tubular members 12, 24 is inserted into the receiving port 4 of the main body 1. Each of the projecting inner end surface 17 and the annular sealing end surface 6 is progressively tapered as it comes closer to its inner peripheral side. The projecting inner end surface 17 comprising the tapered surface is formed at its radially outer side position integrally with a cylindrical sealing portion 18 so that the cylindrical sealing portion 18 projects more outwards than the projecting inner end surface 17 in the axial direction and is pushed into the cylindrical groove portion 10 to form the secondary sealing portion 7.

The press ring 3, a union nut in the shape of a cap nut, has a cylindrical portion 3A an inner peripheral surface of which is formed with a female threaded portion 19 to be fitted with the male threaded portion 11 of the main body 1 in screw-thread engagement, and an outer end portion of which is integrally and continuously provided with an annular press piece 3B extending toward its axial side, which is formed with a press-edge 3C at an inner end of its inner peripheral side.

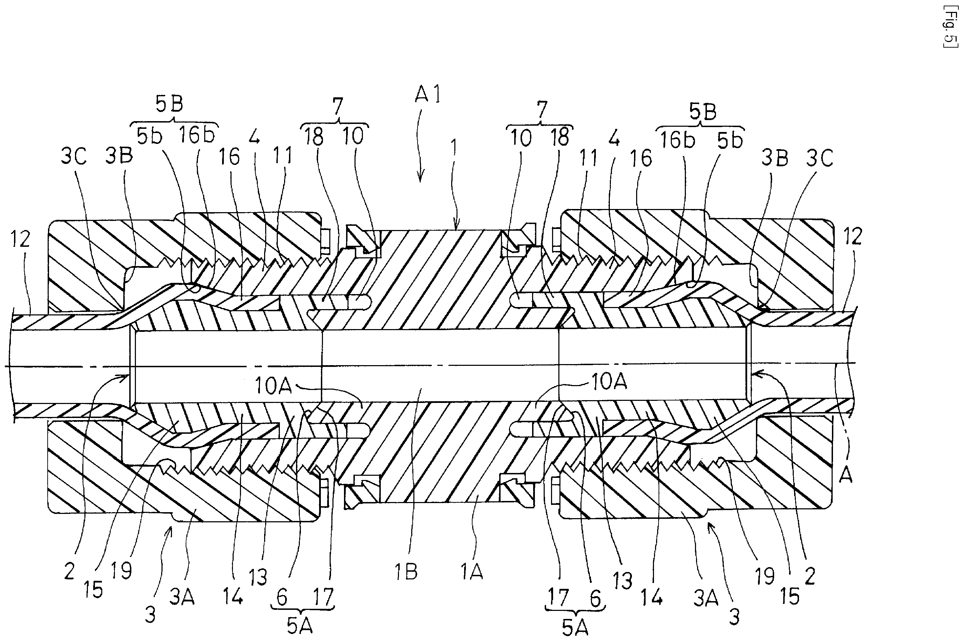

Fig. 5 is a sectional view showing the first resin pipe fitting when it is used. In Fig. 5, the first resin pipe fitting A1 connects two tubular members 12 to each other in alignment. In this case, while one receiving port 4 of the main body 1 is connected to an end portion of one of the tubular members 12 by using an inner ring 2 and a press ring 3, the other receiving port 4 of the main body 1 is connected to an end portion of the other tubular member 12 through employing the other inner ring 2 and the other press ring 3. The one receiving port 4 of the main body 1 is connected to the one tubular member 12 in the same manner as the other receiving port 4 of the main body 1 is connected to the other tubular member 12.

Now in the first resin pipe fitting A1 with the respective constituent elements 1, 2 and 3, in order for the main body 1 to have one of its receiving ports 4 connected to a tubular member 12, first the push-in portion 14 of the inner ring 2 is pushed into one end portion of the tubular member 12 with the fitting portion 13 projecting from one end portion of the tubular member 12, thereby enlarging the peripheral wall portion of the tubular member 12 at a portion corresponding to the projection portion 15 formed at the push-in portion 14 to integrally join both of them 2, 12 to one another so as to form the insertion portion 16 of the tubular member 12. Then the cylindrical sealing portion 18 projected from the fitting portion 13 on the inner ring 2 side axially outwards is advanced toward the cylindrical groove portion 10 on the main body 1 side by inserting the insertion portion 16 of the tubular member 12 into the one receiving port 4 of the main body 1. At this time, the projecting inner end surface 17 on the inner ring 2 side is in the state opposite to the annular sealing end surface 6 on the main body 1 side. Next, before pushing in the inner ring 2, the press ring 3 preliminarily fitted with play into the tubular member 12 has the female threaded portion 19 fitted into screw-thread engagement with the male threaded portion 11 of the main body 1 and is screwed toward the main body 1 side, thereby allowing the cylindrical sealing portion 18 of the inner ring 2 to be pushed into the cylindrical groove portion 10 of the main body 1 from its leading end to produce a radial surface-pressure between inner and outer peripheral surfaces of both of the sealing portion 18 and the groove portion 10 so as to form an axially long secondary sealing portion 7. Further, the press ring 3 is screwed and fastened with a predetermined torque to increase the axial length of the secondary sealing portion 7 and the projecting inner end surface 17 on the inner ring 2 side is brought into butting contact with the annular sealing end surface 6 at the receiving port 4 of the main body 1 as shown in Fig. 5 to produce an axial surface-pressure between both of the end surfaces 17 and 6 so as to form the primary sealing portion 5A. Furthermore, the insertion portion 16 of the tubular member 12 has the outer peripheral sealing surface 16b, which is brought into butting contact with the slant sealing surface 5b formed at the inlet of the receiving port 4 of the main body 1 axially to form the third sealing portion 5B. Thus the connection of the tubular member 12 to the receiving port 4 of the main body 1 is completed.

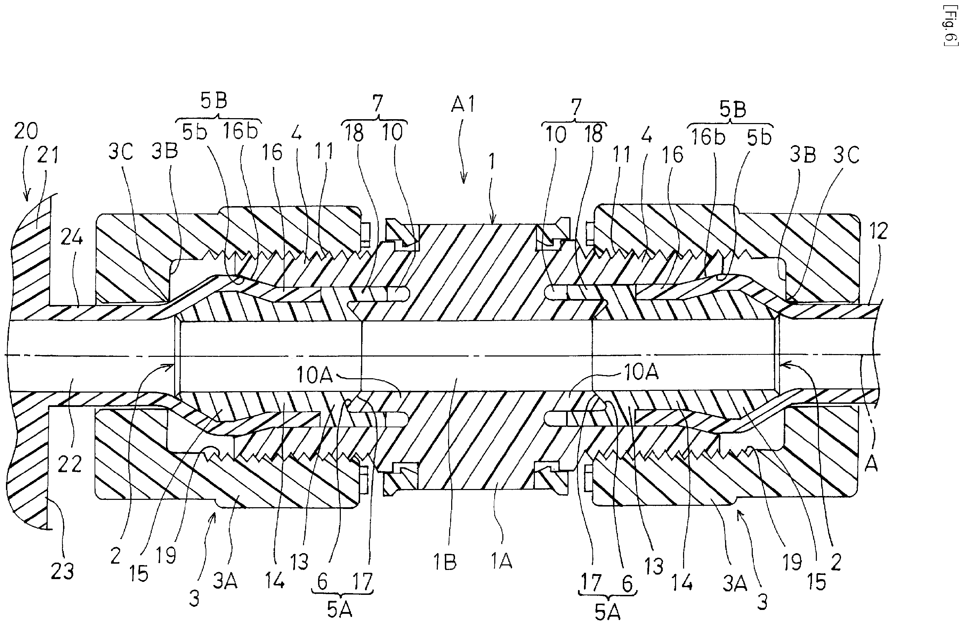

Fig. 6 is a sectional view showing the first resin pipe fitting in the state of another use. In Fig.6, the first resin pipe fitting A1 connects a tubular member 12 to a fluid instrument 20 such as valves, a filter, a pump, gauges and a tank. In this case, the fluid instrument 20 comprises a main body 21 having a fluid flow-passage 22 at an open end surface 23 of which is integrally formed with a tubular portion 24 concentrically of the fluid flow-passage 22 and elastically deformable in a radial direction so that the tubular portion 24 is projected therefrom. While one receiving port 4 of the main body 1 is connected to an end portion of the tubular member 12 by using the inner ring 2 and the press ring 3, the other receiving port 4 of the main body 1 is connected to an end portion of the tubular portion 24 of the fluid flow-passage 22 through employing the other inner ring 2 and the other press ring 3. The one receiving port 4 of the main body 1 is connected to the tubular member 12 and the other receiving port 4 of the main body 1 is connected to the end portion of the tubular portion 24 of the fluid flow-passage 22 in the same manner as the receiving port 4 of the main body 1 is connected to the tubular member 12 in Fig. 5.

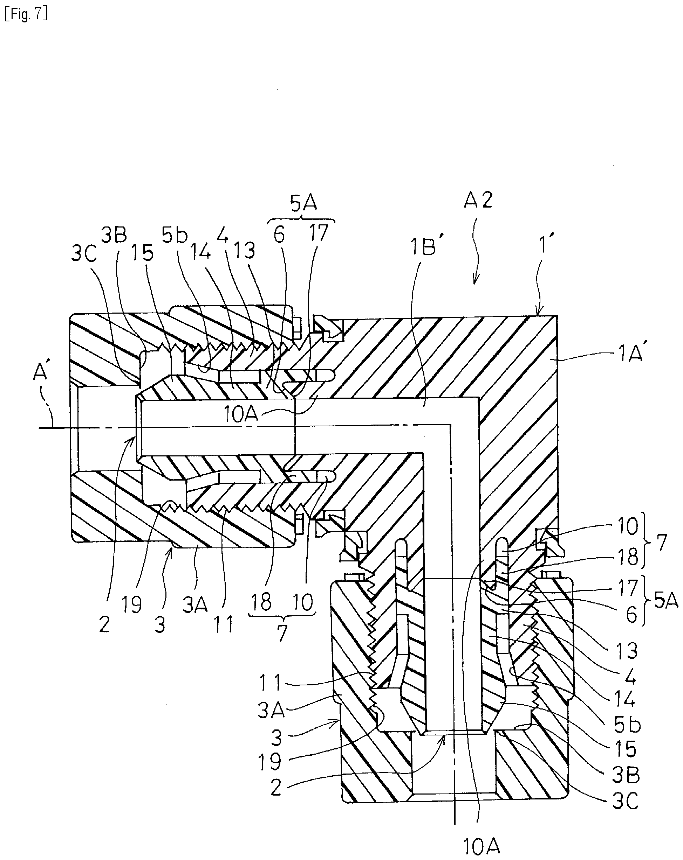

Fig. 7 is a sectional view showing how another first resin pipe fitting (elbow) is assembled. This another first resin pipe fitting (elbow) A2 is used for connecting two tubular members 12 mutually forming right angles or for connecting the tubular members 12 mutually forming right angles to the tubular portion 24 of the fluid instrument 20. This pipe fitting (elbow) A2 has the same structure of union-type as the first resin pipe fitting A1 shown in Fig. 1 except that it owns an L-shaped main body 1' with an L-shaped fluid flow-passage 1B' as the main body. In order to avoid duplicated explanation, identical constructions are designated by identical reference numerals.

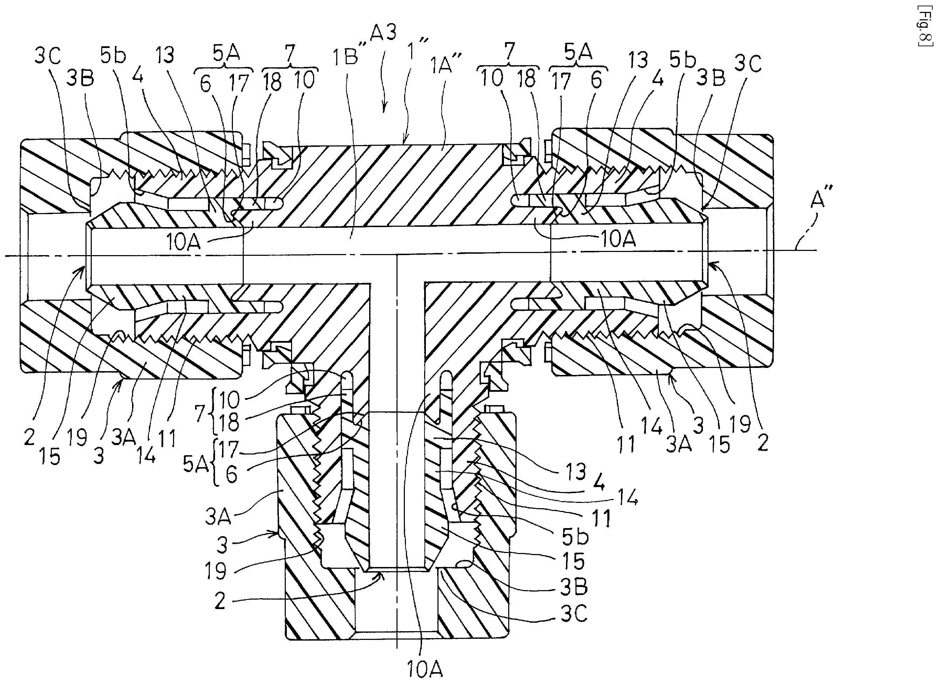

Fig. 8 is a sectional view showing how still another first resin pipe fitting (T) is assembled. This still another first resin pipe fitting (T) A3 is used for connecting three tubular members 12 mutually or for connecting three tubular members 12 which include the tubular members 12 and the tubular portion 24 of the fluid instrument 20 mutually, into a T-shape. This pipe fitting (T) A3 has the same structure of union-type as the first resin pipe fitting A1 except that it owns a T-shaped main body 1" with a T-shaped fluid flow-passage 1B" as the main body. In order to avoid duplicated explanation, identical constructions are designated by identical reference numerals.

The above-mentioned first resin pipe fittings A1, A2 and A3, when they are in the state of use (the state upon completion of the connection) shown in Figs. 5 and 6, each forms the secondary sealing portion 7 for producing radial surface-pressure, the primary sealing portion 5A and the third sealing portion 5B for producing axial surface-pressure, between the tubular members 12, 24 and the main body 1. As such, each of them forms a double or triplicate sealing portion, so that it can secure an excellent hermetical-sealing property to ensure not only the prevention of the fluid leakage but also the initial hermetical-sealing property for a long time because owing to the existence of the secondary sealing portion 7 which produces the radial sealing surface-pressure, even if creeps and stress-relaxation occur with age in the press ring 3 and the resin tubular members 12 as well as in the tubular portion 24, the sealing-surface pressure is reduced only little. Besides, the hermetical-sealing property does not rely on the axial fastening force. This dispenses with the necessity of strictly controlling the axial fastening force on performing the connection-work with the result of being not required to exercise a high technique and skill for performing the connection-work, which leads to the possibility of executing the predetermined connection-work simply and easily.

Additionally, the projecting inner end surface 17 on the inner ring 2 side and the annular sealing end surface 6 on the main body 1 side mutually butting together to form the primary sealing portion 5A are tapered so that their diameters are progressively reduced as they come closer to their inner peripheral sides. Therefore, should a tumbling force be acted in a direction of the thus reduced diameter on the annular portion 10A radially more inwards than on the cylindrical groove portion 10 of the main body 1 side through the tubular member 12, the tubular portion 24 and the inner ring 2 in the predetermined sate of connection, the tumbling force would be intercepted by the tapered surfaces 17, 6 to inhibit the annular portion 10A on the radially inward side from being tumbled to result in preventing the reduction of the hermetical-sealing property at the secondary sealing portion 7 and at the same time increasing the force exerted when the projecting inner end surface 17 on the inner ring 2 side and the annular sealing end surface 6 on the main body 1 side, which form the primary sealing portion 5A, butt against each other so as to be able to more improve the hermetical-sealing property attributable to the double sealing.

Moreover, the inner periphery of the inner ring 2, the inner periphery of each of the tubular members 12, 24 and the inner periphery of the barrel portion 1A of the main body 1 each has the same diameter so as not to interrupt the movement of the fluid. Thus the flow-passage becomes coincident, in section, enough to secure the fluid flow-passage property of enabling the fluid to smoothly move without staying, which results in the possibility of being suitably used as a pipe fitting for the liquid of high-purity and the water of ultra-high purity.

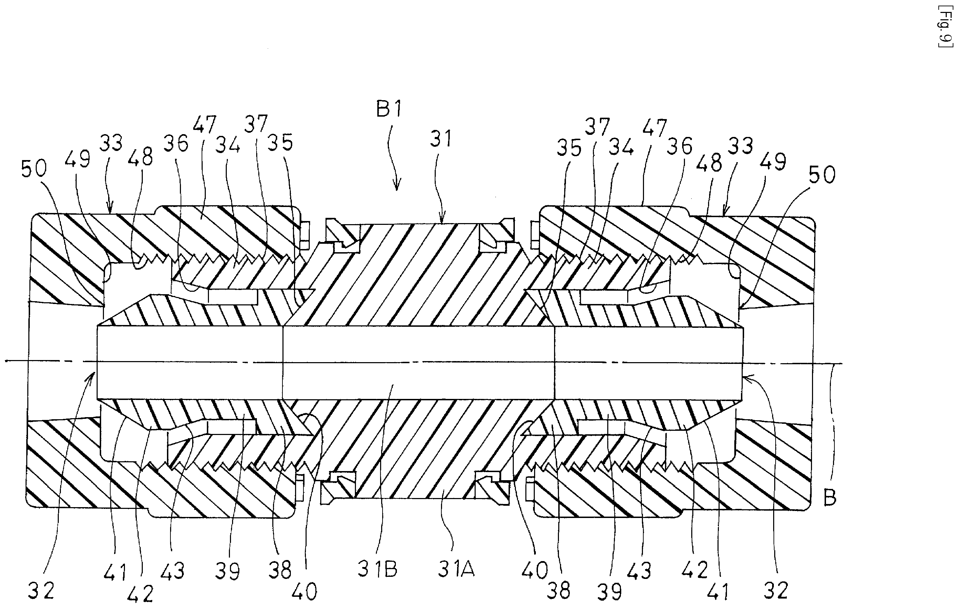

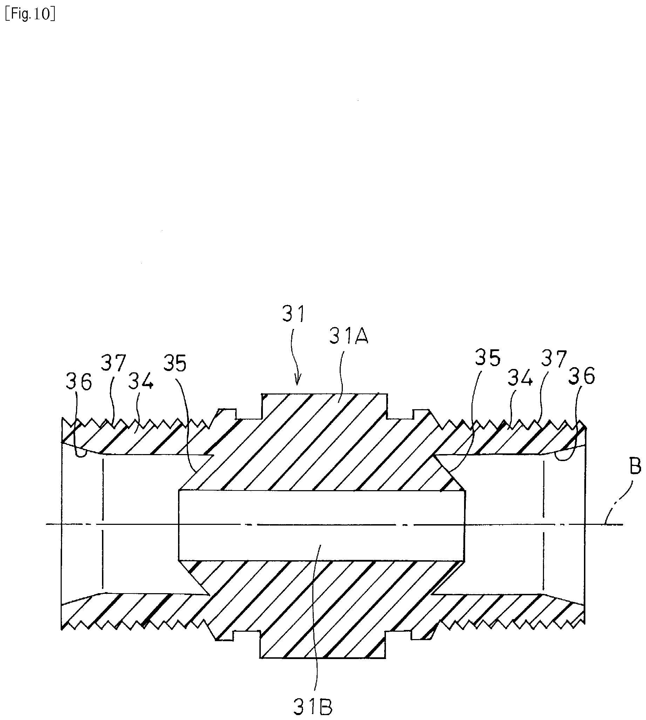

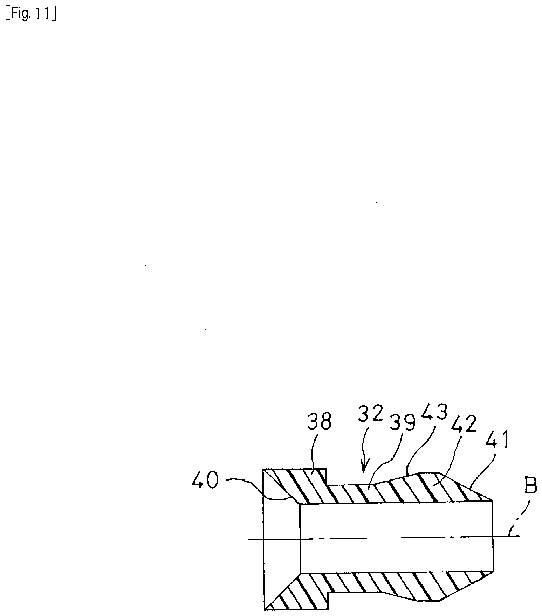

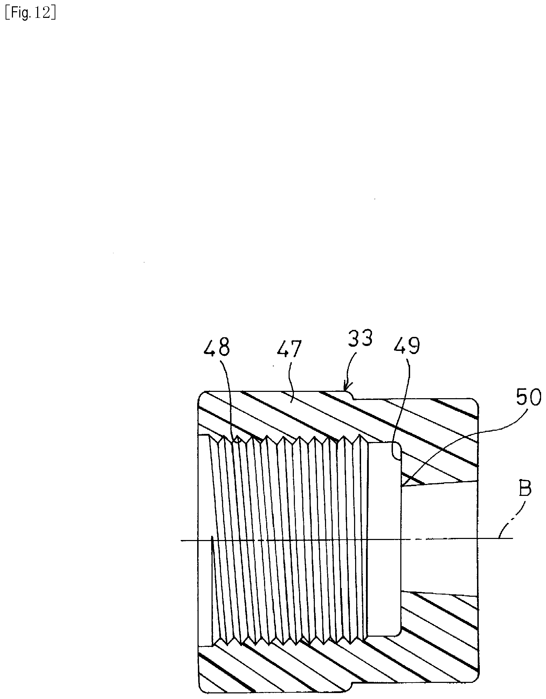

Next, a second resin pipe fitting is disclosed in Patent Literature 3 or the like. The second resin pipe fitting is shown in Fig. 9 to Fig. 16. Fig. 9 is a sectional view showing the second resin pipe fitting as it is assembled. Fig. 10 is a sectional view showing a main body to be provided for the second resin pipe fitting. Fig. 11 is a sectional view showing an inner ring to be prepared for the second resin pipe fitting. Fig. 12 is a press ring to be presented for the second resin pipe fitting.

In Fig. 9 to Fig.12, the second resin pipe fitting B1 comprises a tubular main body 31, a straight tube, which is formed by molding from fluorine resin such as PFA, PTFE or ETFE, a sleeve-like inner ring 32, and a press ring 33 which is a union-nut in the shape of a cap nut. As for the inner ring 32 and the press ring 33, each of them is provided in the number of one for one of the ends of the main body 31. The main body 31 of the second resin pipe fitting B1 being a straight tube with two ends, the inner ring 32 and the press ring 33 are provided in the number of two, respectively.

The main body 31 has both ends each of which is provided with a receiving port 34 that comes to be a tubular female threaded connection port. There is formed between the receiving ports 34 a tubular barrel portion 31A which includes a fluid flow-passage 31B having the same inner diameter as that of each of the tubular members 12, 24 made of fluorine resin such as PFA, PTFE, ETFE to be connected, and connecting the receiving ports 34 in mutual communication coaxially of the axis (B). Each of the receiving ports 34 has an inner remote portion formed with a primary sealing portion 35 crossing the axis (B) and has an inlet formed with a secondary sealing portion 36 crossing the axis (B) as well. Besides, each of the receiving ports 34 has an outer periphery formed with a male threaded portion 37 and has an inner diameter larger than that of the barrel portion 31A (a diameter of the fluid flow-passage). The inner remote portion of the receiving port 34 is formed with the primary sealing portion 35 by a tapered surface which extends to a radially inner surface of the barrel portion 31A while progressively reducing its diameter axially outwards. On the other hand, the secondary sealing portion 36 is formed from a tapered surface that extends to a base of the male threaded portion 37 while gradually increasing its diameter from the inner remote portion side of the receiving port 34 axially outwards. In other words, the secondary sealing portion 36 is formed at the inlet of a receiving port 34.

The inner ring 32 has its inner end portion formed with a fitting portion 38 of an outer diameter able to be fitted with the receiving port 34 of the main body 31, and has a push-in portion 39 formed in continuity with the fitting portion 38 and being of an outer diameter smaller by a length corresponding to the thickness of each of the tubular members 12, 24 in the vicinity of a connection portion to the fitting portion 38 to become a sleeve-like one as a whole. This inner ring 32 has an inner periphery of the same diameter, namely the same inner diameter or substantially the same inner diameter as that of each of the tubular members 12, 24 and that of the barrel portion 31A of the main body 31 so as not to interrupt the movement of the fluid. Further, the inner ring 32 has an inner end formed with an inner-end sealing portion 40 which comprises a tapered surface to butt against the primary sealing portion 35. On the other hand, the inner ring 32 has an outer periphery at its outer end portion, namely the outer periphery of the push-in portion 39, formed with a tapered outer-end sealing portion 41 which has a diameter progressively increasing from the outer end to the inner end side axially and has the outer end crossing the inner periphery of the inner ring 32. The outer-end sealing portion 41 has a top portion a diameter of which is set to be larger than at least the outer diameter of the push-in portion 39 at the connection portion to the fitting portion 38 and in the Example as shown, larger than the outer diameter of the fitting portion 38 of the inner ring 32. More specifically, the outer-end sealing portion 41 has a larger diameter side that comes to be a projection portion 42, which has a mountain-like shape in section, formed on an outer peripheral surface of the outer end portion of the inner ring 32. A tapered surface 43 progressively reducing its diameter from a top portion of the projection portion 42 to the inner end side of the inner ring 32 has an angle of inclination coincident with that of the secondary sealing portion 36 of the main body 31 and when the inner-end sealing portion 40 is brought into butting contact with the primary sealing portion 35 of the main body 31, it is so formed that the secondary sealing portion 36 opposes to the tapered surface 43 by a spacing corresponding to a thickness of each of the tubular members 12, 24. Such an inner ring 32 is integrally joined to the tubular members 12, 24 while the push-in portion 39 is pushed into one end portion of each of the tubular members 12, 24 so as to enlarge the diameter of the peripheral wall of the one end portion of each of the tubular members 12, 24, and the fitting portion 38 of the inner ring 32 is projecting from one end portion of each of the tubular members 12, 24. At this time, the enlarged diameter portion of the peripheral wall of each of the tubular members 12, 24 comes to be an insertion portion 44 that is inserted into the receiving port 34 of the main body 31. Besides, with the insertion portion 44 inserted into the receiving port 34 of the main body 31, the inner-end sealing portion 40 butts against the primary sealing portion 35 of the main body 31 and the outer-end sealing portion 41 butts against an inner surface of an inclined portion 45 of the insertion portion 44. Additionally, one end of each of the tubular members 12, 24 is held as it is inclined between the secondary sealing portion 36 of the main body 31 and the tapered surface 43 of the inner ring 32. In other words, each of the tubular members 12, 24 has an outer peripheral surface deformed along the tapered surface 43 of the inner ring 32 to become an outer peripheral sealing surface 46 that butts against the secondary sealing portion 36.

The press ring 33 has a cylindrical portion 47 an inner peripheral surface of which is formed with a female threaded portion 48 fitted with a male threaded portion 37 of the main body 31 in screw-thread engagement and has an outer end portion formed with an annular press piece 49 extending toward the axial side. This press piece 49 has an inner surface side an inner end of which is formed with a press-edge portion 50. This press-edge portion 50 is formed at a position which is set to be nearer to the axial side than, as a matter of course, the top portion of the projection portion 42 and the outer diameter of the portion adjacent to the fitting portion 38 are. Such press ring 33 presses the inner ring 32 toward the main body 31 side through the tubular members 12, 24 (in more detail, presses the main body 31 and the inner ring 32 against each other) and the tubular members 12, 24 toward the main body 31 side as well (in more detail, presses the main body 31 and the tubular members 12, 24 against one another) to integrally join and hold the main body 31, the inner ring 32 and the tubular members 12, 24 all together and apply hermetical-sealing force to the inner end sealing portion 40 of the inner ring 32 and the primary sealing portion 35 of the receiving port 34 as well as to the outer peripheral sealing surface 46 of each of the tubular members 12, 24 and the secondary sealing portion 36 of the receiving port 34.

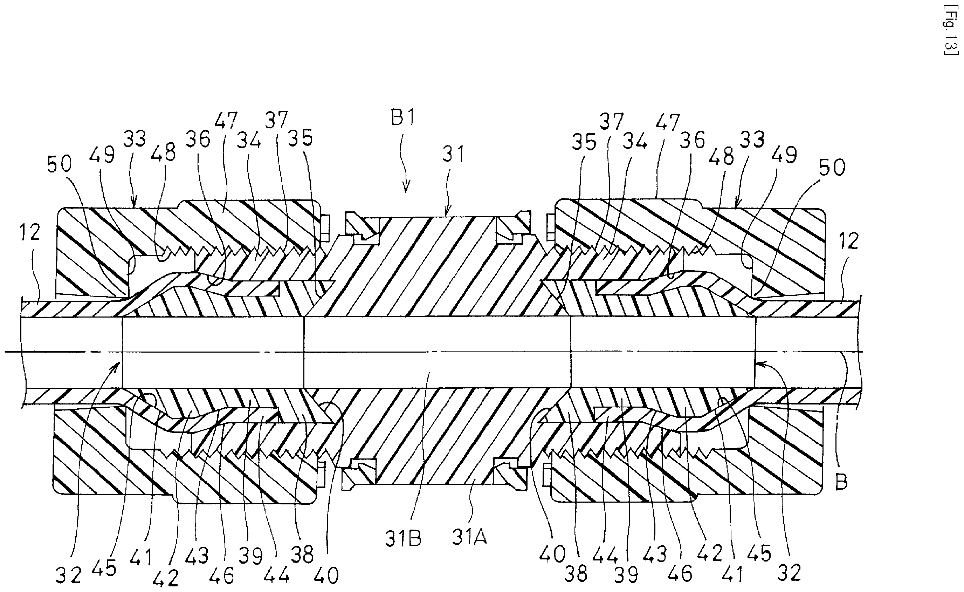

Fig.13 is a sectional view showing the second resin pipe fitting when it is used. In Fig. 13, the second resin pipe fitting B1 connects two tubular members 12 to each other in alignment. In this case, while one receiving port 32 of the main body 31 is connected to an end portion of one of the tubular members 12 by using one inner ring 22 and one press ring 33, the other receiving port 34 of the main body 31 is connected to an end portion of the other tubular member 12 through employing the other inner ring 32 and the other press ring 33. The one receiving port 34 of the main body 31 is connected to the one tubular member 12 in the same manner as the other receiving port 34 of the main body 31 is connected to the other tubular member 12.

Now in the second resin pipe fitting B1 with the respective constituent elements 31, 32 and 33, in order for the main body 31 to have one of its receiving ports 34 connected to a tubular member 12, first the push-in portion 39 of the inner ring 32 is pushed into one end portion of the tubular member 12, thereby enlarging the diameter of one end portion of the tubular member 12 as a whole and allowing a position corresponding to the projection portion 42 of the inner ring 32 to become an insertion portion 44 of more enlarged diameter. Then, as such, the inner ring 32 pushed into the one end portion of the tubular member 12 and the pressed-in portion 44 pushed into the latter are inserted into the receiving port 34 of the main body 31, thereby allowing the inner-end sealing portion 40 to butt against the primary sealing portion 35. Then before pushing in the inner ring 32, the press ring 33 preliminarily fitted with play into the tubular member 12 has a female threaded portion 48 fitted into screw-thread engagement with the male threaded portion 37 of the main body 31 to be screwed and fastened with a predetermined torque so as to axially hold the inner ring 32 by the press-edge portion 50 of the press ring 33 and the primary sealing portion 35 of the main body 31. Thus the tubular member 12 can be connected to the main body 31.

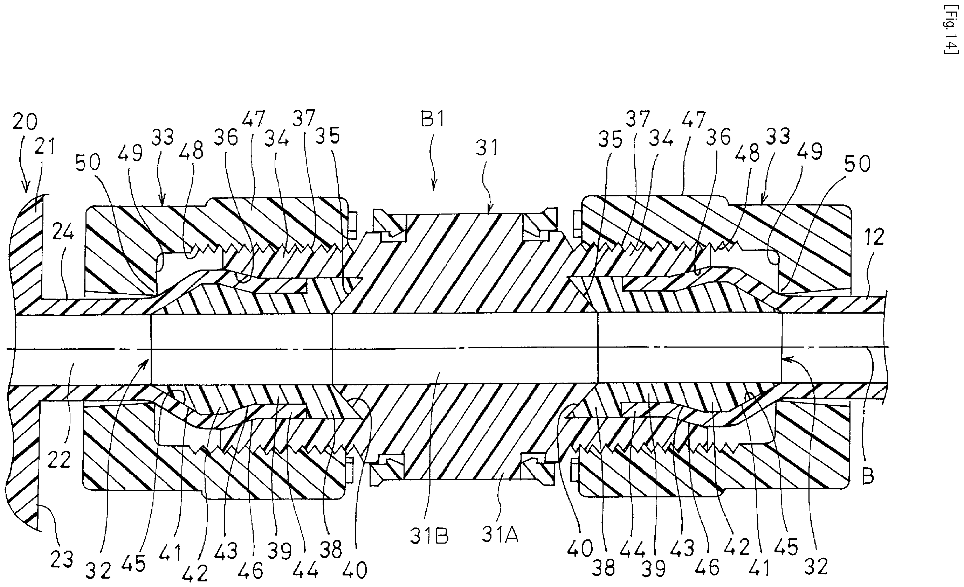

Fig. 14 is a sectional view showing the second resin pipe fitting in the state of another use. In Fig.14, the second resin pipe fitting B1 comprises a tubular member 12 connected to a fluid instrument 20 such as valves, a filter, a pump, gauges and a tank. In this case, the fluid instrument 20 comprises a main body 21 having a fluid flow-passage 22 at an open end surface 23 of which is integrally formed with a tubular portion 24 concentrically of the fluid flow-passage 22 and elastically deformable in a radial direction so that the tubular portion 24 is projected. While one receiving port 34 of the main body 31 is connected to an end portion of the tubular member 12 by using one inner ring 32 and one press ring 33, the other receiving port 34 of the main body 31 is connected to an end portion of the tubular portion 24 of the fluid flow-passage 22 through employing the other inner ring 32 and the other press ring 33. The one receiving port 34 of the main body 31 is connected to the tubular member 12 and the other receiving port 34 of the main body 31 is connected to the end portion of the tubular portion 24 of the fluid flow-passage 22 in the same manner as the receiving port 34 of the main body 31 is connected to the tubular member 12 in Fig. 13.

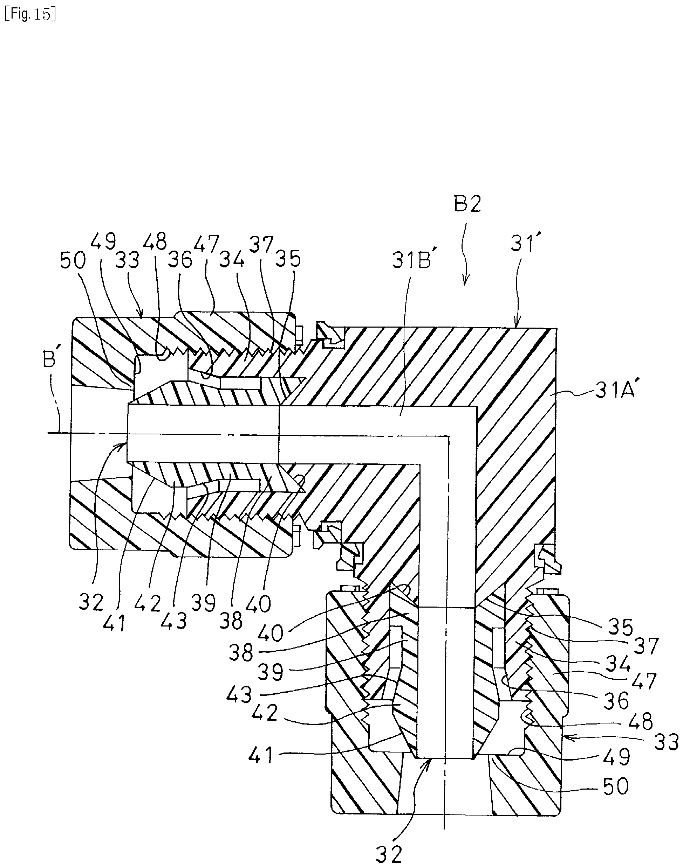

Fig. 15 is a sectional view showing how another second resin pipe fitting (elbow) is assembled. This another second resin pipe fitting (elbow) B2 is used for connecting two tubular members 12 mutually forming right angles or for connecting the tubular members 12 mutually forming right angles to the tubular portion 24 of the fluid instrument 20. This pipe fitting (elbow) B2 has the same structure of union-type as the second resin pipe fitting B1 shown in Fig. 9 except that it owns an L-shaped main body 31' with an L-shaped fluid flow-passage 31B' as the main body. In order to avoid duplicated explanation, identical constructions are designated by identical reference numerals.

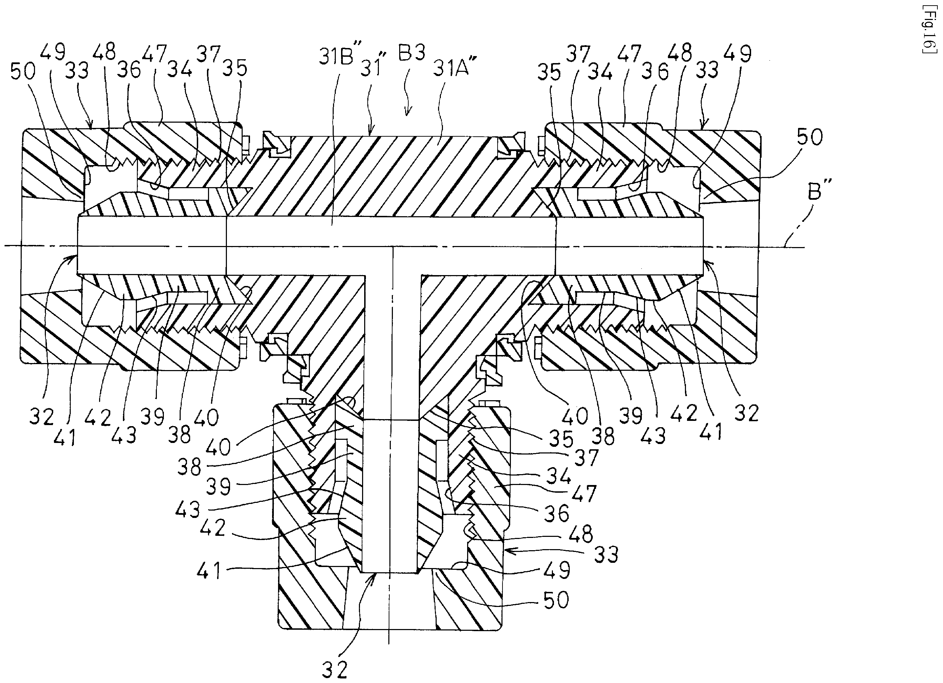

Fig. 16 is a sectional view showing how still another second resin pipe fitting (T) is assembled. This still another second resin pipe fitting (T) B3 is used for connecting three tubular members 12 mutually or for connecting three tubular members which include the tubular members 12 and the tubular portion 24 of the fluid instrument 20 mutually, into the T-shape. This pipe fitting (T) B3 has the same structure of union-type as the second resin pipe fitting B1 shown in Fig. 9 except that it owns a T-shaped main body 31" with a T-shaped fluid flow-passage 31B" as the main body. In order to avoid duplicated explanation, identical constructions are designated by identical reference numerals.

The above-mentioned second resin pipe fittings B1, B2 and B3, when they are in the state of use (the state upon completion of the connection) shown in Figs.13 and 14, the insertion portion 44 of each of the tubular members 12, 24 is held by the axially held inner ring 32 and the press ring 33 as well as by the push-in portion 39 of the inner ring 32 and the secondary sealing portion 36 of the receiving port 34. Besides it is susceptible to the local holding exerted by the outer-end sealing portion 41 of the inner ring 32 and the press-edge portion 50 of the press ring 33. In consequence, the tubular members 12, 24 are held by a strong force for inhibiting their extraction in order to prevent them from moving for escape. Further, the press ring 33 is screwed and fastened with a predetermined torque, thereby allowing the primary sealing portion 35 of the main body 31 to be brought into press-contact with the inner-end sealing portion 40 of the inner ring 32 with the result of producing a strong hermetically close-contact force therebetween. At the same time, the secondary sealing portion 36 of the main body 31 is brought into press-contact with the outer peripheral sealing surface 46 of each of the tubular members 12, 24 as well as the outer-end sealing portion 41 of the inner ring 32 is brought into press-contact with an inner surface of the slant portion 45 of each of the tubular members 12, 24, which come to be a second primary sealing portion, thereby producing a strong hermetically sealing force therebetween, which seals both surfaces on the outer periphery and the inner periphery of one end portion of each of the tubular members 12, 24. In consequence, in this second resin pipe fittings B1, B2 and B3, the primary sealing portions 35 and 40 are formed, respectively between the main body 31 and the inner ring 32 as well as between the inner ring 32 and the tubular members 12, 24 so that an excellent sealing property can be secured to be able to assuredly prevent the fluid leakage and the invasion of foreign matters. Further, the secondary sealing portions 36, 46 are also formed between the main body 31 and the tubular members 12, 24. Thus should some problem be caused in the primary sealing portions 35, 40 by the creep or the like which occurs due to the heat cycling, the secondary sealing portions 36, 46 would prevent the fluid leakage and the invasion of the foreign matters to result in an extremely high sealing reliability. Additionally, in the case of this second resin pipe fittings B1, B2 and B3, an axial pressing force is applied at all of the three sealing portions by the screw-thread engagement of the main body 31 with the press ring 34, so that, on treating, as a matter of course, the liquid of normal temperature and even the fluid of high temperature, the breakage of sealing caused by the stress-relaxation is inhibited with the result of being able to secure an excellent sealing property.

Moreover, the inner periphery of the inner ring 32 is formed to have the same diameter as that of each of the tubular members 12, 24 as well as that of the barrel portion 31A of the main body 31 so as not to interrupt the movement of the fluid. Thus the fluid flow-passage becomes coincident, in section, enough to ensure the flow-passage property of enabling the fluid to smoothly move without staying, which leads to being suitably usable as a pipe fitting for the liquid of high-purity and the water of ultra-high purity.

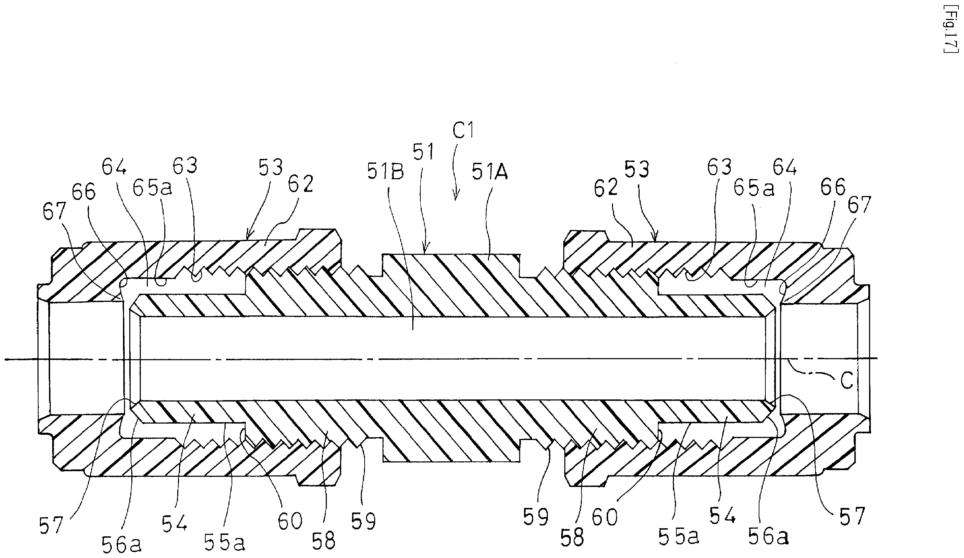

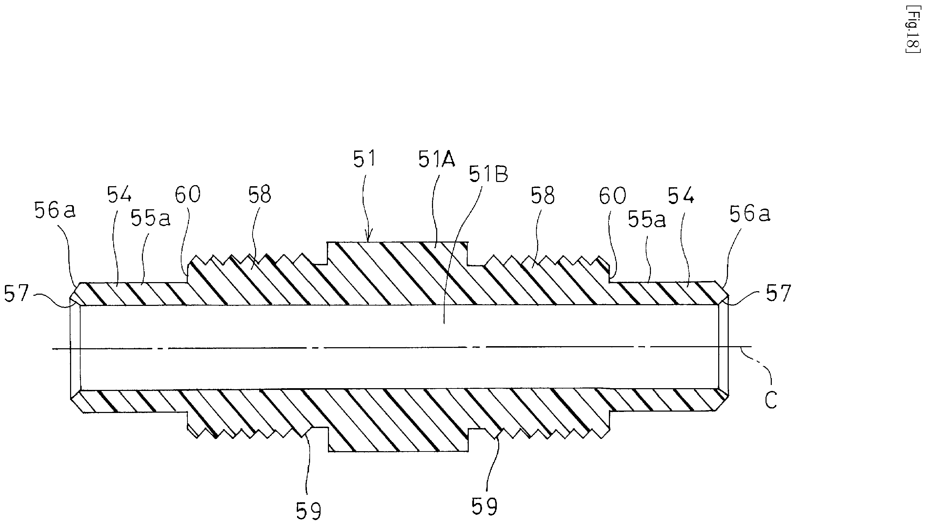

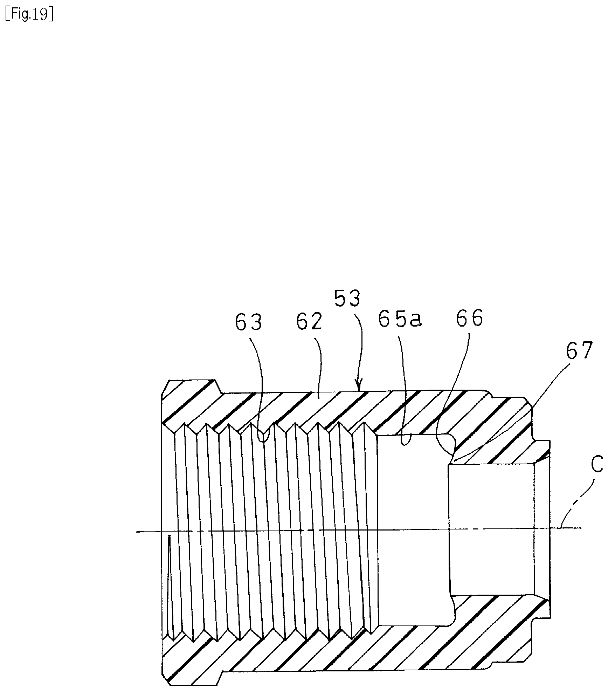

Next, a third resin pipe fitting is shown in Fig. 17 to Fig. 23. Fig. 17 is a sectional view showing the third resin pipe fitting as it is assembled. Fig. 18 is a sectional view showing a main body to be provided for the third resin pipe fitting. Fig. 19 is a press ring to be presented for the third resin pipe fitting.

In Fig. 17 to Fig.19, the third resin pipe fitting C1 comprises a tubular main body 51, which is a straight tube, and which is formed by molding from fluorine resin such as PFA, PTFE or ETFE and a press ring 53 which is a union nut in the shape of a cap nut. As for the press ring 53, it is provided in the number of one for either of the ends of the main body 51. The main body 51 of the third resin pipe fitting C1 being a straight tube with two ends, two press rings 53 are provided.

The main body 51 is formed with a tubular barrel portion 51A which includes a fluid flow-passage 51B having the same inner diameter as that of each of the tubular members 12, 24 made of fluorine resin such as PFA, PTFE, ETFE to be connected. A tubular-member push-in portion 54, for each of the tubular members, that comes to be a tubular male threaded connection port of the main body 51 is formed to extend from each of the end portions of the barrel portion 51A along an axis (C) outwards. This tubular-member push-in portion 54 is formed to have an inner diameter identical to that of the barrel portion 51A, coaxilly of the barrel portion 51A. The fluid flow-passage 51B also has the identical diameter and extends toward each of the end portions of the main body 51. And it is opened into each of the end surfaces of the main body 51. The tubular-member push-in portion 54 is also formed to have a thickness substantially identical to or slightly larger than that of each of the walls of the tubular members 12, 24 and is formed to have an outer diameter substantially identical to or slightly larger than that of each of the tubular members 12, 24. And the tubular-member push-in portion 54 is provided on its outer surface with an inner sealing surface 55a that forms an inner-surface sealing portion 55 to be mentioned later. Besides the tubular-member push-in portion 54 has an outer surface at its leading end portion, which comprises a tapered surface progressively increasing its diameter from the outer side toward the inner side axially to provide a sealing end surface 56a that forms a primary sealing portion 56 to be mentioned later and has an inner surface at its leading end portion formed with a tapered surface 57 that gradually reduces its diameter from the outer side toward the inner side axially and crosses the sealing end surface 56a. The barrel portion 51 has end portions each of which is formed with a tubular threaded portion 58. This tubular threaded portion 58 is formed at its outer surface with a male threaded portion 59. The tubular threaded portion 58 has a thickness larger than that of the tubular-member push-in portion 54 so that it forms a stepped surface with difference from the tubular-member push-in portion 54 on the outer surface of the main body 51 as well as a surface 60 stepped with difference and made upright at right angles from the inner-end portion of the sealing surface 55a outwards in a radial direction at a height slightly smaller than a thickness of the wall of each of the tubular members 12, 24. As for such a main body 51, each of the tubular members 12, 24 has one end portion provided with a flaring portion 61 formed by conducting a work to increase the diameter, which is fitted onto an outer periphery of the tubular-member push-in portion 54, thereby enabling the inner sealing surface 55a on the outer surface of the tubular-member push-in portion 54 to face the inner sealing surface 55b formed on the inner surface of the flaring portion 61 and allowing the tubular-member push-in portion 54 to have the sealing end surface 56a at its leading end opposed to a sealing end surface 56b formed at an inner remote portion of the flaring portion 61.

The press ring 53 which is a union nut in the shape of a cap nut has a cylindrical portion 62 an inner peripheral surface of which is formed with a female threaded portion 63 to be engaged with the male threaded portion 59 of the main body 51. The female threaded portion 63 has its inner remote side formed with a pressing surface 65a opposite to the sealing surface 55a of the main body 51 with a gap 64 slightly smaller than a thickness of the flaring portion 61 provided therebetween. The cylindrical portion 62 has an outer end portion integrally and continuously formed with an annular press-piece 66 which extends toward the axis and is formed at an inner end on its inner peripheral side with a press-edge 67. Such a press ring 53 presses the outer surface at the inner end of the flaring portion 61 by the press-edge 67 to the inner side of the main body 51 along the axis (C) as well as the outer surface 65b of the flaring portion 61 by the pressing surface 65a radially inwards. Then while holding the main body 51 and the tubular members 12, 24 as they are integrally joined all together, it allows the sealing end surface 56b of the flaring portion 61 to hermetically hold the sealing end surface 56a of the tubular-member push-in portion 54 to thereby form the primary sealing portion 56 and also the inner sealing surface 55a of the tubular-member push-in portion 54 to hermetically hold the inner sealing surface 55b of the flaring portion 61 to thereby form the inner-surface sealing portion 55 in continuity with the primary sealing portion 56. Additionally, the pressing surface 65a is brought into hermetically close-contact with the outer surface 65b of the flaring portion 61 to form the outer-surface sealing portion 65 by making use of the pressing surface 65a and the outer surface 65b of the flaring portion 61 in hermetically close-contact for the outer sealing surface. These inner-surface sealing portion 55 and outer-surface sealing portion 65 form the secondary sealing portion 68 of an inside-and-outside double structure.

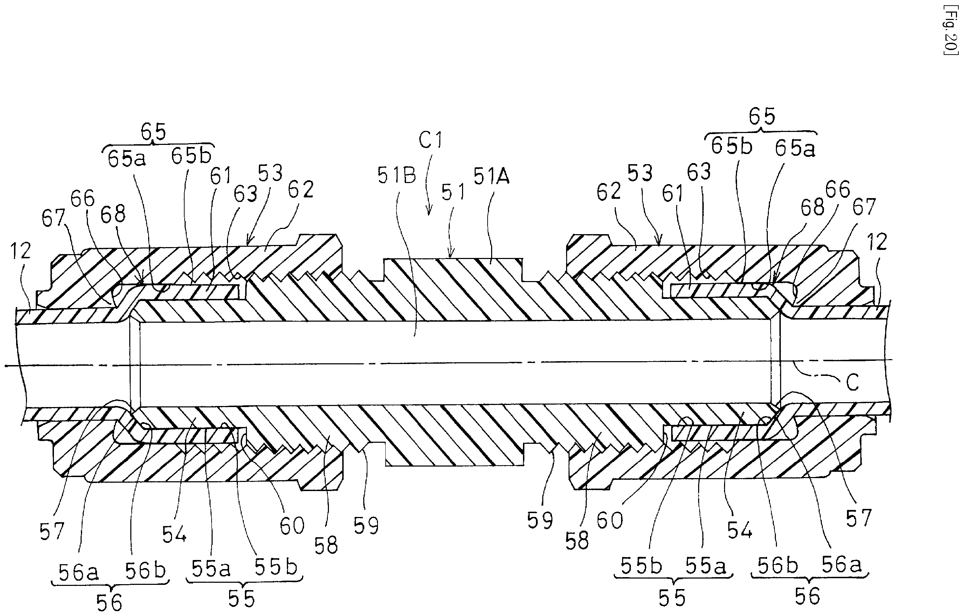

Fig. 20 is a sectional view showing the third resin pipe fitting when it is used. In Fig. 20, the third resin pipe fitting C3 connects two tubular members 12 to each other in alignment. In this case, while one receiving port 54 of the main body 51 is connected to an end portion of one of the tubular members 12 by using one press ring 53, the other receiving port 54 of the main body 51 is connected to an end portion of the other tubular member 12 through employing the other press ring 53. The one receiving port 54 of the main body 51 is connected to the one tubular member 12 in the same manner as the other receiving port 54 of the main body 51 is connected to the other tubular member 12.

Now in the third resin pipe fitting C3 with the respective constituent elements 51 and 53, in order for the main body 51 to have one of its receiving ports 54 connected to a tubular member 12, first the tubular member 12 has one end portion formed with the flaring portion 61 by conducing the diameter-enlarging work, which is fitted onto the outer periphery of the tubular-member push-in portion 54, thereby allowing the inner-sealing surface 55b of the flaring portion 61 to face the inner sealing surface 55a of the tubular-member push-in portion 54 as well as the tubular-member push-in portion 54 to have its sealing end surface 56a opposed to the sealing end surface 56b of the flaring portion 61. Then before conducting the diameter-enlarging work to the one end portion of the tubular member 12, the press ring 53 preliminarily fitted with play into the tubular member 12 has a female threaded portion 63 fitted into screw-thread engagement with the male threaded portion 59 of the main body 51 and is screwed toward the main body 51 side. Thus the sealing end surface 56b of the flaring portion 61 is made to hermetically hold the sealing end surface 56a of the tubular-member push-in portion 54 to form the primary sealing portion 56 and the inner sealing surface 55a of the tubular-member push-in portion 54 is made to hermetically hold the inner sealing surface 55b of the flaring portion 61 to form the inner-surface sealing portion 55 in continuity with the primary sealing portion 56. Additionally, the pressing surface 65a is brought into hermetically close-contact with the outer surface 65b of the flaring portion 61 to form the outer-surface sealing portion 65 by using the pressing surface 65a and the outer surface 65b of the flaring portion 61 in hermetically close-contact for the outer sealing surface. These inner-surface sealing portion 55 and outer-surface sealing portion 65 form the secondary sealing portion 68 of the inside-and-outside double structure.

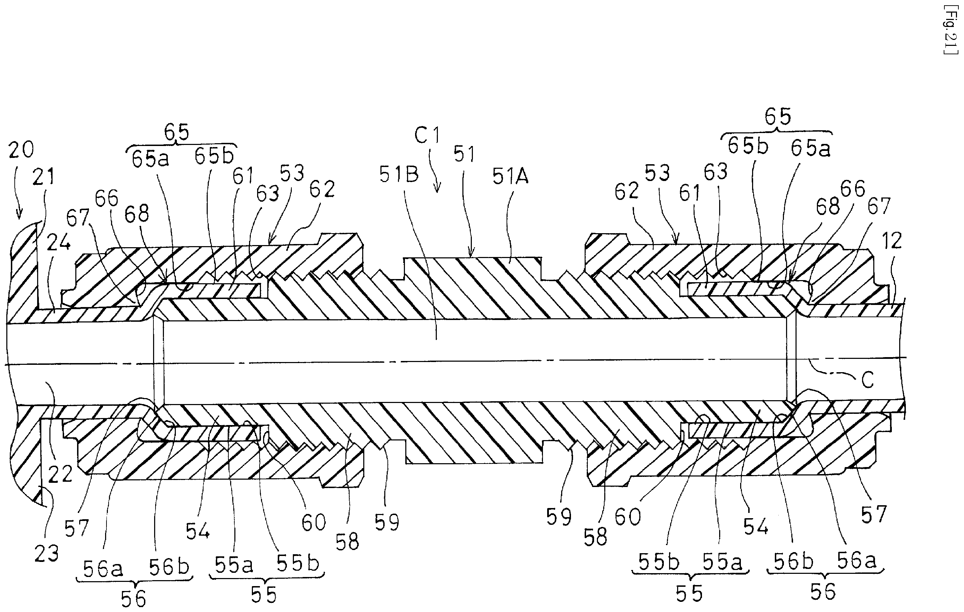

Fig. 21 is a sectional view showing the third resin pipe fitting in the state of another use. In Fig. 21, the third resin pipe fitting C3 comprises the tubular member 12 connected to a fluid instrument 20 such as valves, a filter, a pump, gauges and a tank. In this case, the fluid instrument 20 comprises a main body 21 having a fluid flow-passage 22 at an open end surface 23 of which is integrally formed with a tubular portion 24 concentrically of the fluid flow-passage 22 and elastically deformable in a radial direction so that the tubular portion 24 is projected. While one receiving port 54 of the main body 51 is connected to an end portion of the tubular member 12 by using the press ring 53, the other receiving port 54 of the main body 51 is connected to an end portion of the tubular portion 24 of the fluid flow-passage 22 through employing the other press ring 53. The one receiving port 54 of the main body 51 is connected to the tubular member 12 and the other receiving port 54 of the main body 51 is connected to the end portion of the tubular portion 24 of the fluid flow-passage 22 in the same manner as the port 54 of the main body 51 is connected to the tubular member 12 in Fig. 21.

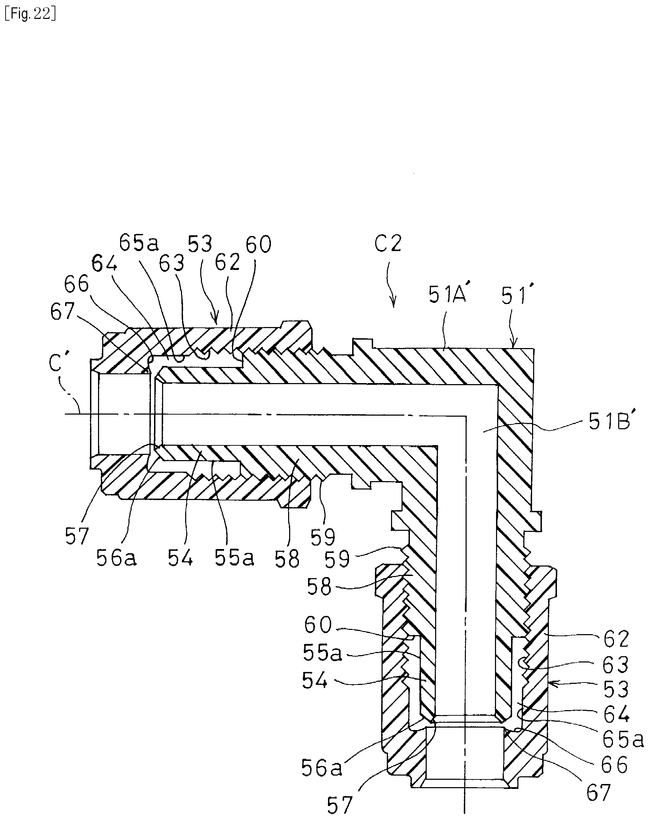

Fig. 22 is a sectional view showing how another third resin pipe fitting (elbow) is assembled. This another third resin pipe fitting (elbow) C3 is used for connecting two tubular members mutually forming right angles to each other or for connecting the tubular members 12 mutually forming right angles to the tubular portion 24 of the fluid instrument 20. This pipe fitting (elbow) C3 has the same structure of union-type as the third resin pipe fitting C1 shown in Fig. 17 except that it owns an L-shaped main body 51' with an L-shaped fluid flow-passage 51B' as the main body. In order to avoid duplicated explanation, identical constructions are designated by identical reference numerals.

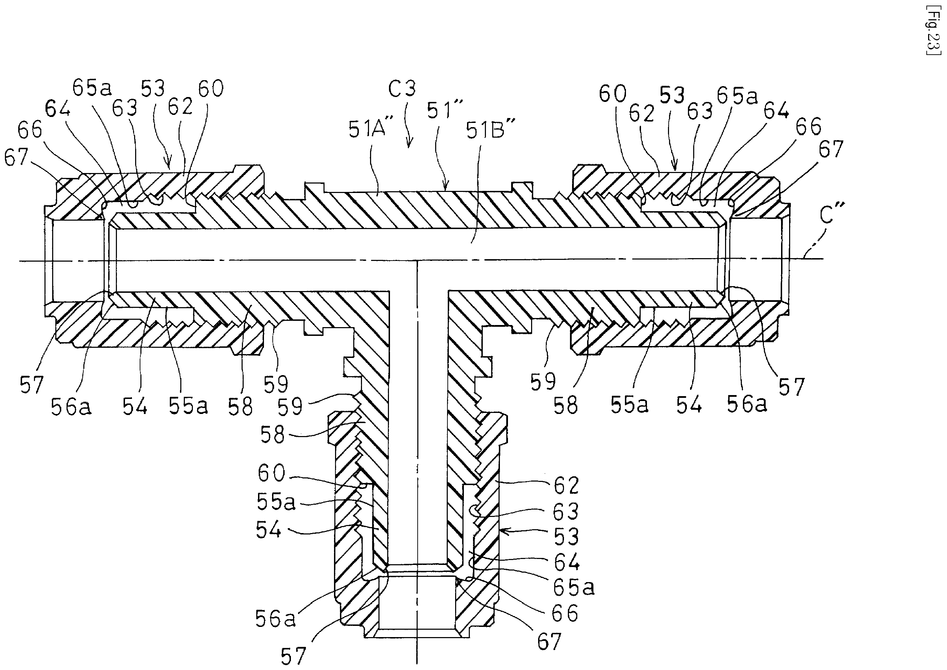

Fig. 23 is a sectional view showing how still another third resin pipe fitting (T) is assembled. This still another third resin pipe fitting (T) C3 is used for connecting three tubular members 12 mutually or for connecting three tubular members which include the tubular members 12 and the tubular portion 24 of the fluid instrument 20 mutually, into the T-shape. This pipe fitting (T) C3 has the same structure of union-type as the third resin pipe fitting C1 shown in Fig. 17 except that it owns a T-shaped main body 51" with a T-shaped fluid passage 51B" as the main body. In order to avoid duplicated explanation, identical constructions are designated by identical reference numerals.

The above-mentioned third resin pipe fittings C1, C2 and C3, when they are in the state of use (the state upon completion of the connection) shown in Figs. 20 and 21, each forms the primary sealing portion 56 and the secondary sealing portion 68 of the inside-and-outside double structure between the tubular members 12, 24 and the main body 51, to secure an excellent hermetical-sealing property to result in, as a matter of course, assuredly preventing the fluid leakage. Thus even if creeps and stress-relaxation occur with age in the press ring 53, the resin tubular member 12 and the resin tubular portion 24, owing to the existence of the secondary sealing portion 68 which produces radial sealing-surface pressure, the sealing-surface pressure is reduced only little and therefore the initial hermetical-sealing property can be ensured for a long period of time. Besides, the hermetical-sealing property does not rely on the axial fastening force. This dispenses with the necessity of strictly controlling the axial fastening force on performing the connection-work with the result of being not required to exercise a high technique and skill on performing the connection-work, which leads to the possibility of executing the predetermined connection-work simply and easily.

Moreover, the inner periphery of the tubular-member push-in portion 54 has the same diameter as that of each of the tubular members 12, 24 as well as that of the barrel portion 51A of the main body 51 so as not to interrupt the movement of the fluid. Thus the fluid flow-passage becomes coincident, in section, enough to ensure the flow property of enabling the fluid to smoothly move without staying, with the result of being suitably available as a pipe fitting for the liquid of high-purity and the water of ultra-high purity.
Patent Literature 1: Utility Model Application Laid-Open No. 61-76315
Patent Literature 2: Patent Application Laid-Open No. 10-54489
Patent Literature 3: Utility Model Publication No. 7-20471 JP2006337234A discloses a resin pipe fitting according to the preamble of claim 1.

### Disclosure of the Invention

### The Problem the Invention Attempts to Solve

The problem the present invention attempts to solve is to provide a resin pipe fitting enabling an orifice to be arranged on a piping in the same space and by the same work as in the case of a standard resin pipe fitting that constitutes the piping, and allowing the target flow amount to be readily gained.

### Means for Solving the Problem

In order to solve the above-mentioned problem, the resin pipe fitting according to the present invention is a resin pipe fitting according to the technical features of claim 1.

Like the resin pipe fitting as defined in claim 1, it is possible to provide any one of the standard resin pipe fitting, each of which constitutes a piping, with an orifice by integrally forming the orifice with the main body. This enables the orifice to be arranged on the piping in the same space and by the same work as in the case of the standard resin pipe fitting that constitutes the piping, and allows the target flow amount to be readily obtained.

Besides, as regards the resin pipe fitting defined in claim 2, there is provided a fitting structure for connecting either of end portions of the main body to a tube made of resin. By using such a resin pipe fitting as defined in claim 2, the orifice can be arranged at the portion for connecting the tube on the piping.

Additionally, regarding the resin pipe fitting as defined in claim 3, in the resin pipe fitting as defined in claim 1, there is provided a fitting structure for connecting an end portion of the main body to a fluid instrument. By using such a resin pipe fitting as defined in claim 3, the orifice can be arranged at the portion for connecting the fluid instrument on the piping.

Moreover, concerning the resin pipe fitting as defined in claim 4, in the resin pipe fitting as defined in claim 2 or claim 3, the fitting structure is in the shape of a union-type using a resin union nut. Such a resin pipe fitting as defined in claim 6 enables the tube or the fluid instrument on the piping to be readily attached and detached and therefore allows the target flow amount to be more easily gained.

Further, the resin pipe fitting as defined in claim 1 to claim 4 can be obtained by the production method according to claim 5 and claim 6. More specifically, the method for producing the pipe fitting as defined in claim 5 is to injection-mold the main body and provide a wall of the main body with an orifice by post-working (machining, for example, boring-work).

Besides, the resin pipe fitting according to any one of claims 1 to 4 can be also produced by the method for producing the resin pipe fitting as defined in claim 6. In other words, the method for producing the resin pipe fitting as defined in claim 6 forms an orifice integrally with a main body when injection-molding the main body.

As defined in claim 1, the resin pipe fitting uses fluorine resin for the material of the main body in the method for producing the resin pipe fitting as defined in claim 5 or claim 6 and it is applied to the portion of the resin pipe fitting in contact with the liquid, high heat-resistance, high pharmaceutical-resistant property (high corrosion-resistance), high friction-resistant property and non-adhesiveness. Accordingly, it can be suitably employed as the piping for the liquid of high-purity, the water of ultra-high purity and the pharmaceutical liquid to be handled during the production process of the semi-conductor, the liquid crystal and the pharmaceutical products.

### Effect of the Invention

As mentioned above, the resin pipe fitting and the production method of the resin pipe fitting according to the present invention can provide the orifice on a piping in the same space and by the same work as in the case of a standard resin pipe fitting that constitutes the piping and can readily obtain the target flow amount.

### Brief Description of the Drawings

[Fig. 1] is a sectional view showing how a standard first resin pipe fitting is assembled:

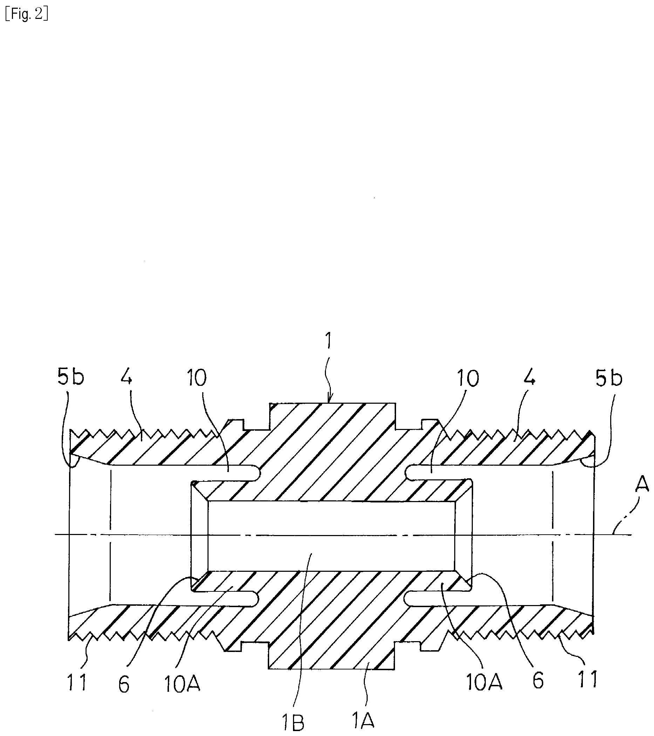

[Fig. 2] is a sectional view showing a main body to be prepared for the first resin pipe fitting;

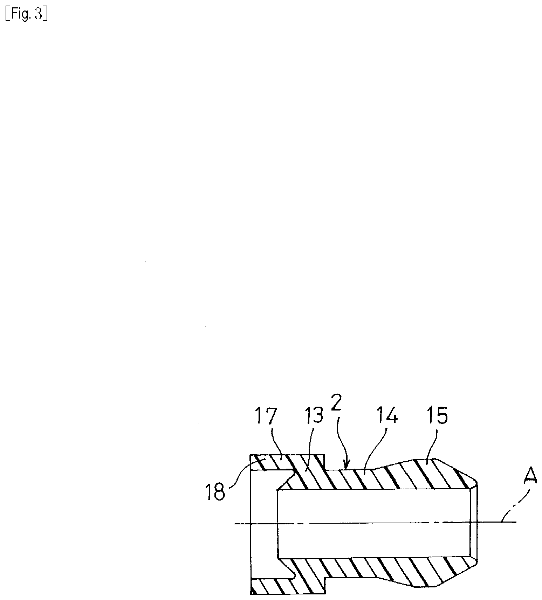

[Fig. 3] is a sectional view showing an inner ring to be prepared for the first resin pipe fitting;

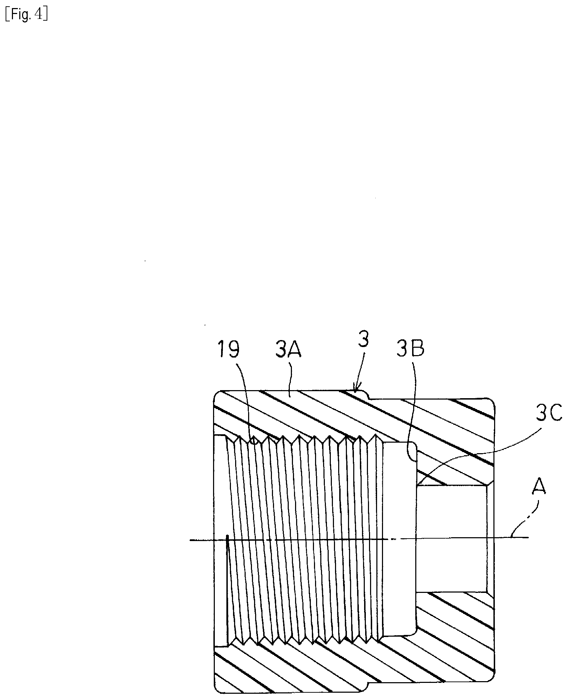

[Fig. 4] is a sectional view showing a press ring to be provided for the first resin pipe fitting;
[Fig. 5] is a sectional view showing the first resin pipe fitting when it is used;
[Fig. 6] is a sectional view showing the first resin pipe fitting in the state of another use;
[Fig. 7] is a sectional view showing how another first resin pipe fitting (elbow) is assembled;
[Fig. 8] is a sectional view showing how still another first resin pipe fitting (T) is assembled;
[Fig. 9] is a sectional view showing how a standard second resin pipe fitting is assembled:
[Fig. 10] is a sectional view showing a main body to be prepared for the second resin pipe fitting;
[Fig. 11] is a sectional view showing an inner ring to be prepared for the second resin pipe fitting;
[Fig. 12] is a sectional view showing a press ring to be provided for the second resin pipe fitting;
[Fig. 13] is a sectional view showing the second resin pipe fitting when it is used;
[Fig. 14] is a sectional view showing the second resin pipe fitting in the state of another use;
[Fig. 15] is a sectional view showing how another second resin pipe fitting (elbow) is assembled;
[Fig. 16] is a sectional view showing how still another second resin pipe fitting (T) is assembled;
[Fig. 17] is a sectional view showing how a standard third resin pipe fitting is assembled:
[Fig. 18] is a sectional view showing a main body to be prepared for the third resin pipe fitting;
[Fig. 19] is a sectional view showing a press ring to be provided for the third resin pipe fitting;
[Fig. 20] is a sectional view showing the third resin pipe fitting when it is used;
[Fig. 21] is a sectional view showing the third resin pipe fitting in the state of another use;
[Fig. 22] is a sectional view showing how another third resin pipe fitting (elbow) is assembled;
[Fig. 23] is a sectional view showing how still another first resin pipe fitting (T) is assembled;

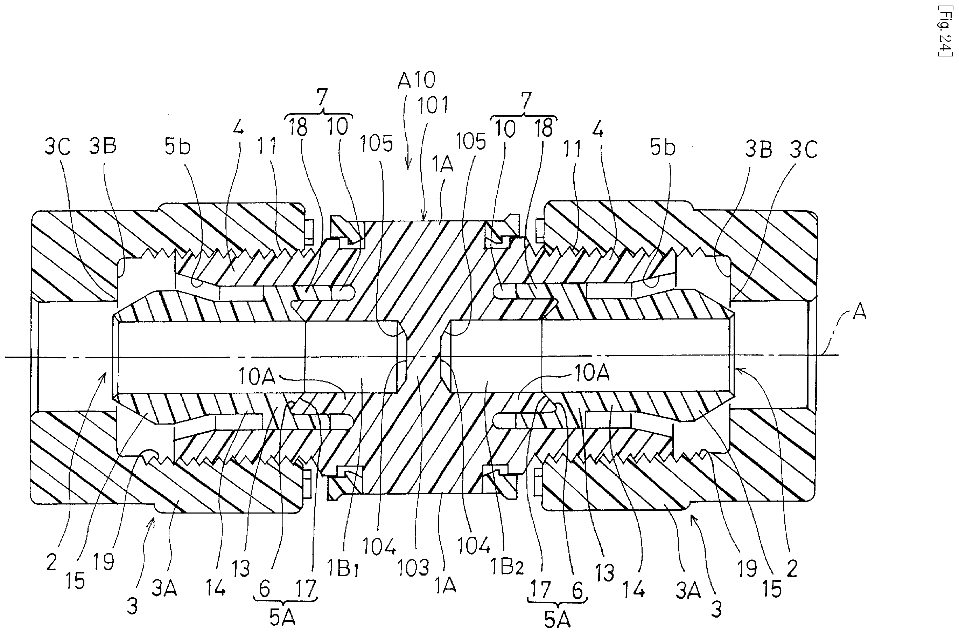

[Fig. 24] is a sectional view showing how a resin pipe fitting according to a first embodiment of the present invention is assembled:

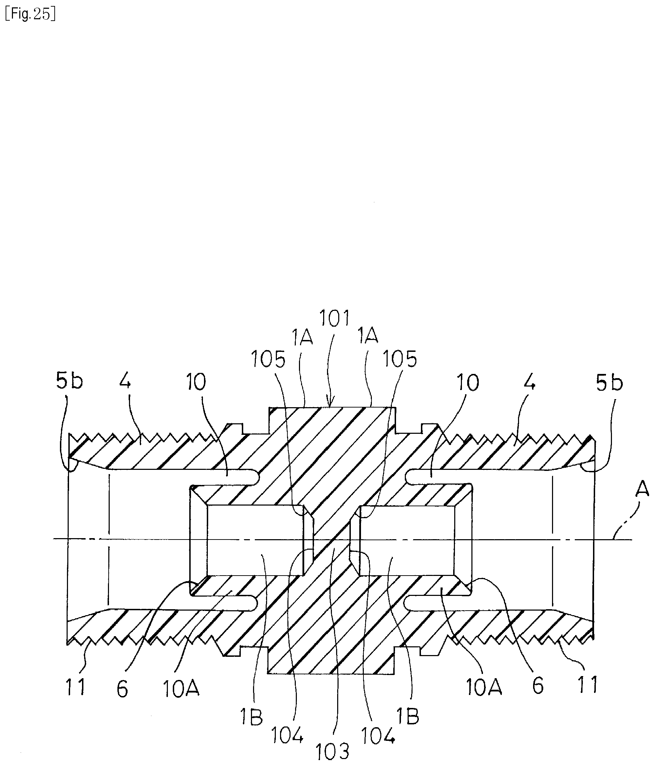

[Fig. 25] is a sectional view showing a main body to be prepared for the resin pipe fitting according to the first embodiment;

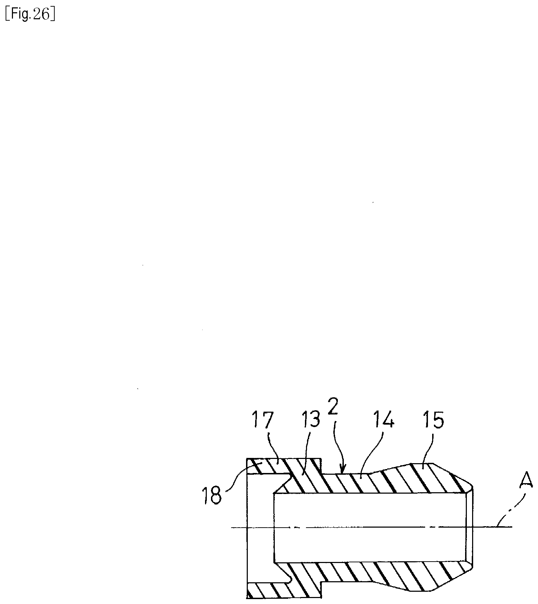

[Fig. 26] is a sectional view showing an inner ring to be prepared for the resin pipe fitting according to the first embodiment;

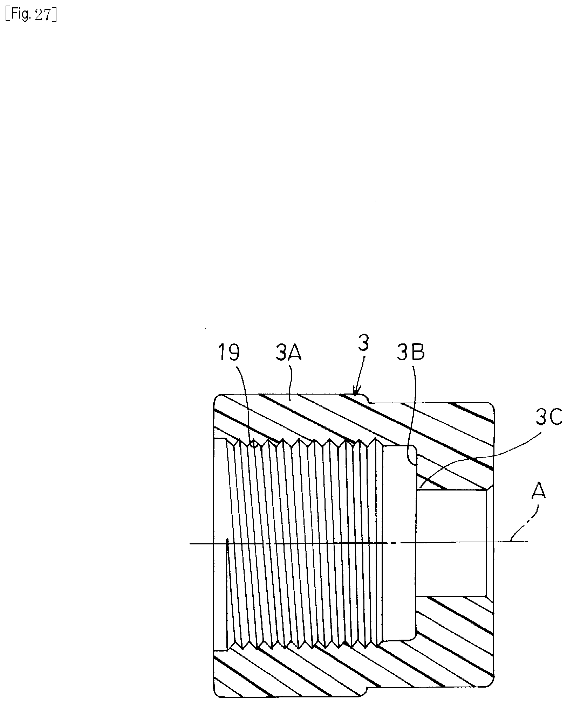

[Fig. 27] is a sectional view showing a press ring to be provided for the resin pipe fitting according to the first embodiment;

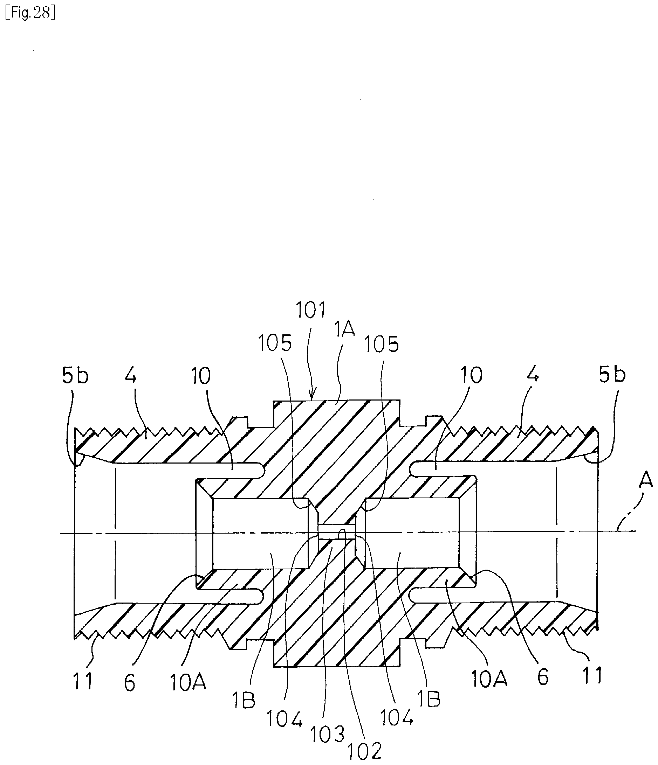

[Fig. 28] is a sectional view showing an orifice of the main body after it has been added, which is prepared for the resin pipe fitting according to the first embodiment;

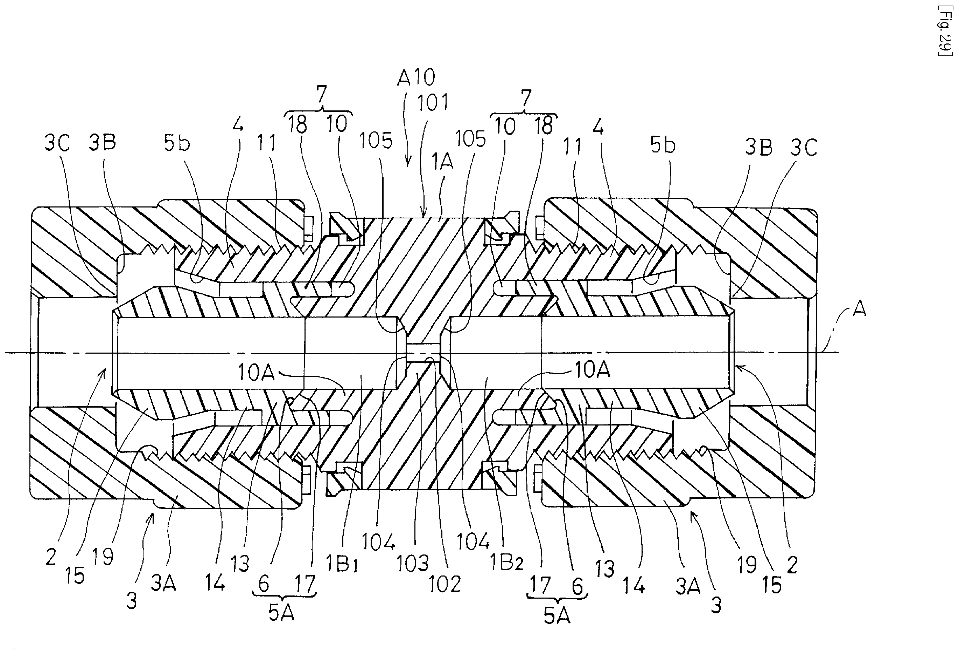

[Fig. 29] is a sectional view showing how the resin pipe fitting according to the first embodiment is assembled after the orifice has been added;

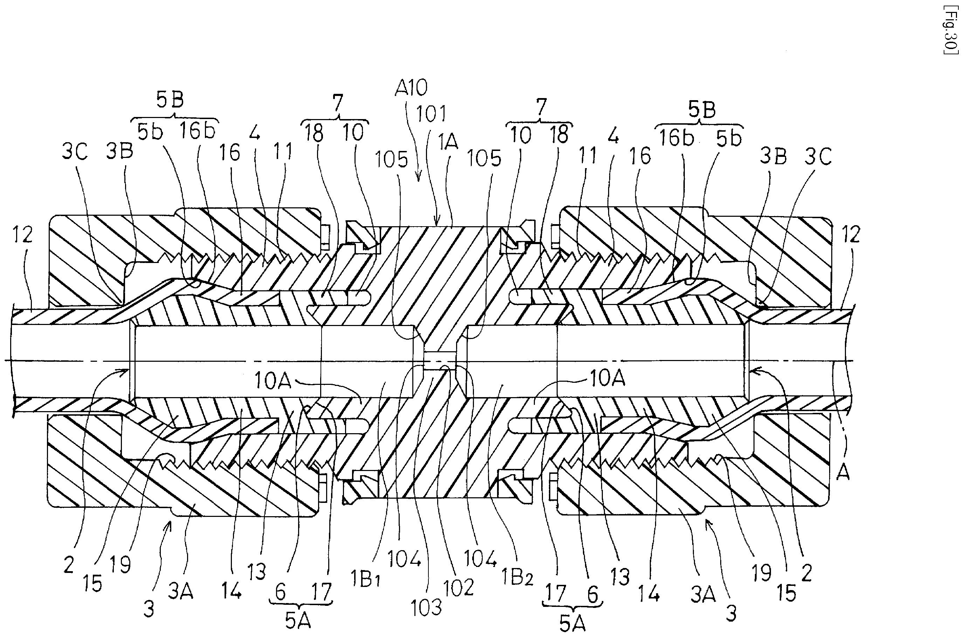

[Fig. 30] is a sectional view showing the resin pipe fitting according to the first embodiment when it is used;

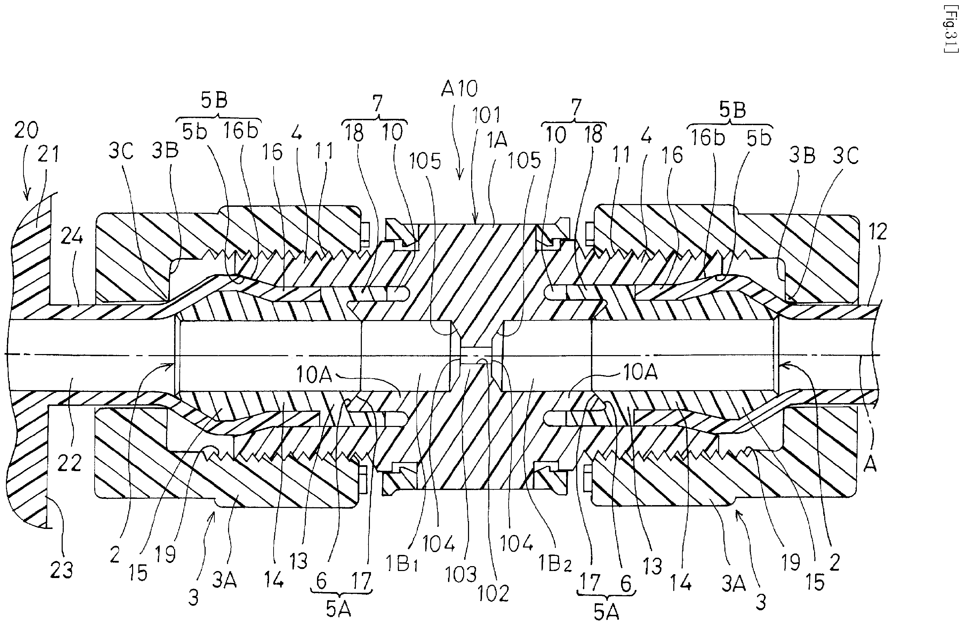

[Fig. 31] is a sectional view of the resin pipe fitting according to the first embodiment in the state of another use;

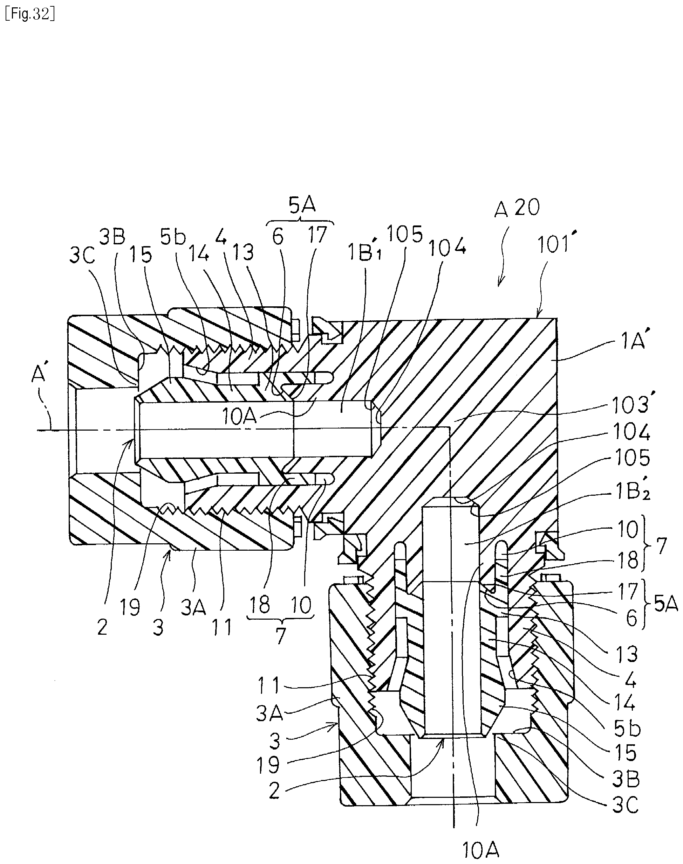

[Fig. 32] is a sectional view showing how another resin pipe fitting (elbow) of the first embodiment is assembled;

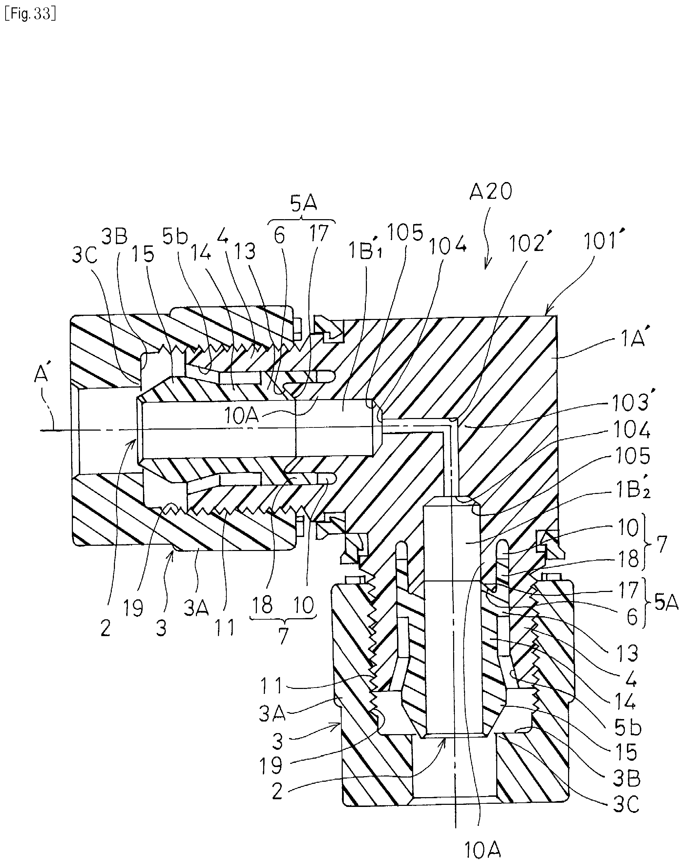

[Fig. 33] is a sectional view showing how still another resin pipe fitting (elbow) of the first embodiment is assembled after the orifice has been added;

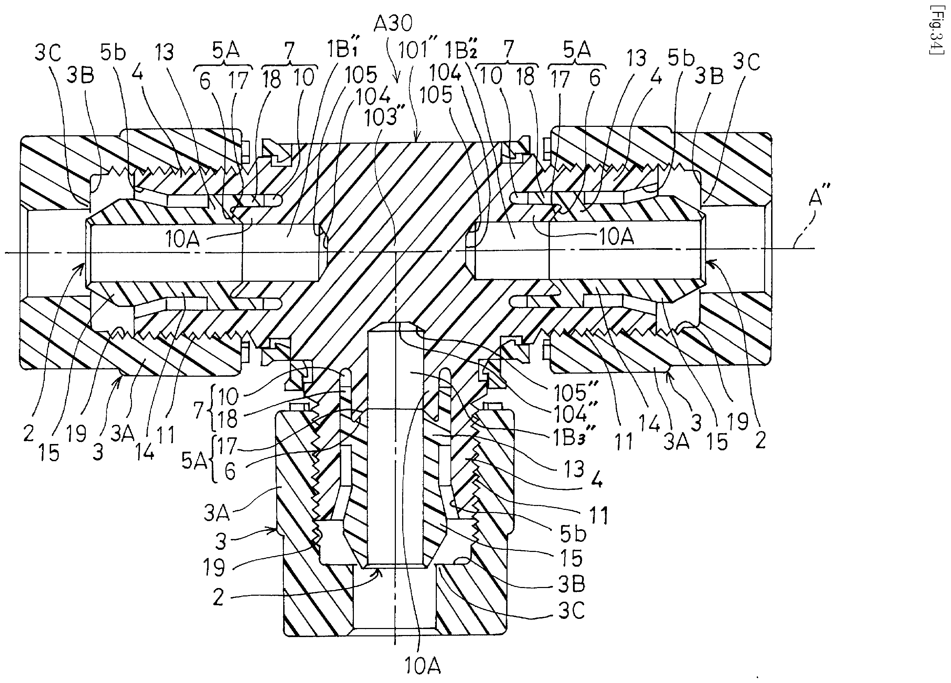

[Fig. 34] is a sectional view showing how still another resin pipe fitting (T) of the first embodiment is assembled;

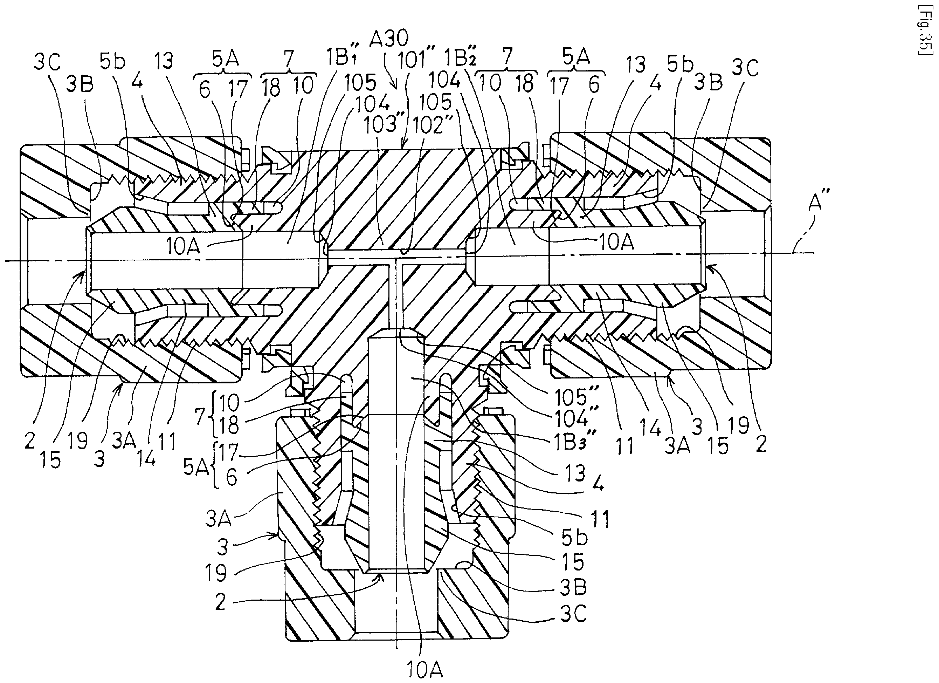

[Fig. 35] is a sectional view showing how another second resin pipe fitting (T) of the first embodiment is assembled after the orifice has been added;

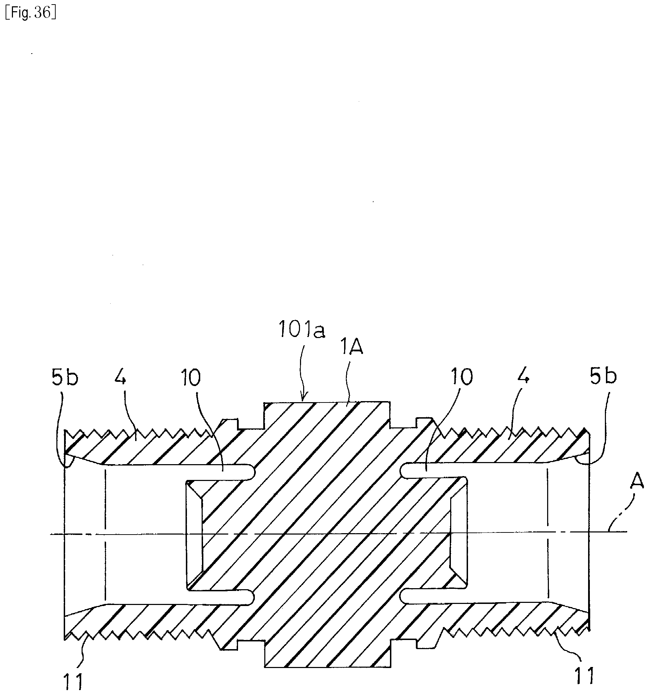

[Fig. 36] is a sectional view showing another method of integrally forming a wall to provide an orifice in the main body, which is prepared for the resin pipe fitting according to the first embodiment;

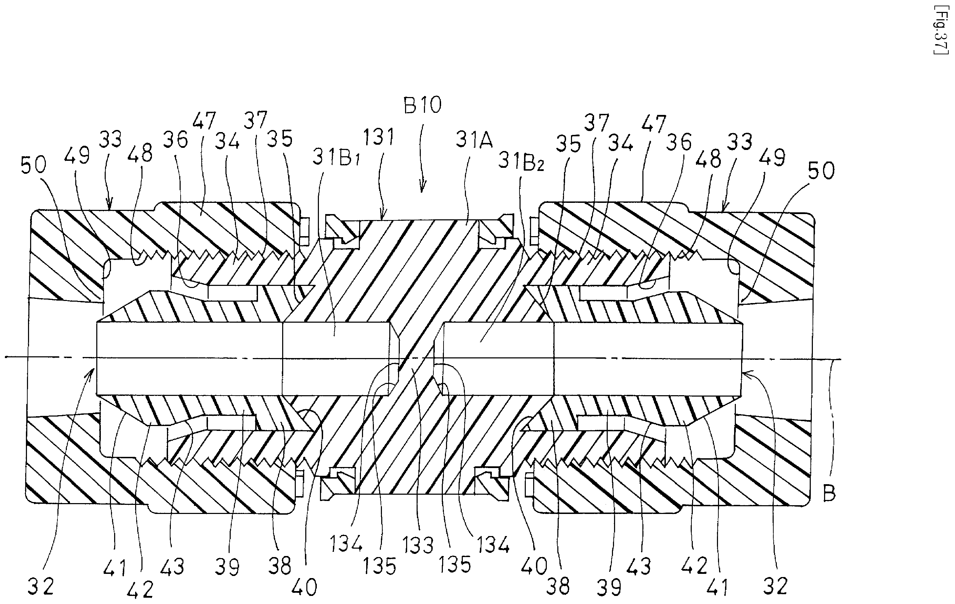

[Fig. 37] is a sectional view showing how a resin pipe fitting according to a second embodiment of the present invention is assembled:

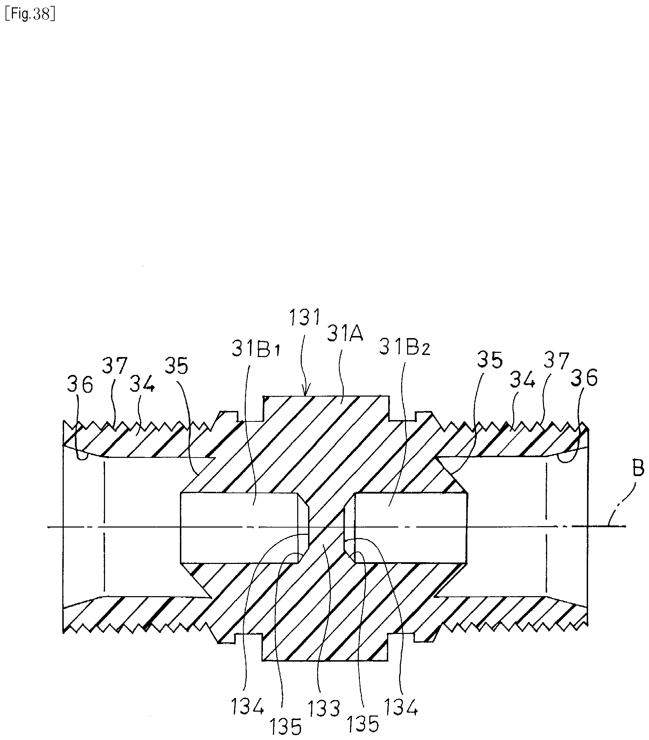

[Fig. 38] is a sectional view showing a main body to be prepared for the resin pipe fitting according to the second embodiment;

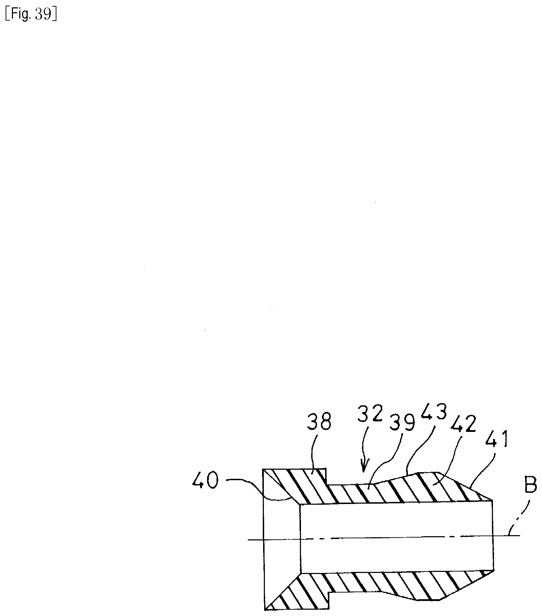

[Fig. 39] is a sectional view showing an inner ring to be prepared for the resin pipe fitting according to the second embodiment;

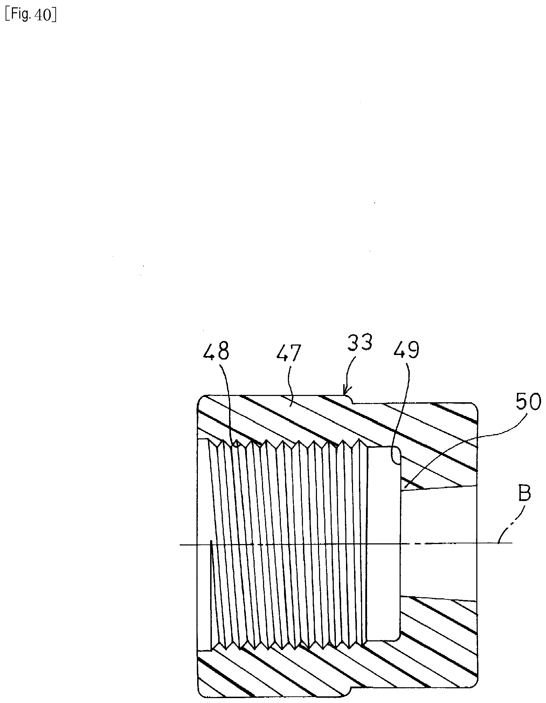

[Fig. 40] is a sectional view showing a press ring to be provided for the resin pipe fitting according to the second embodiment;

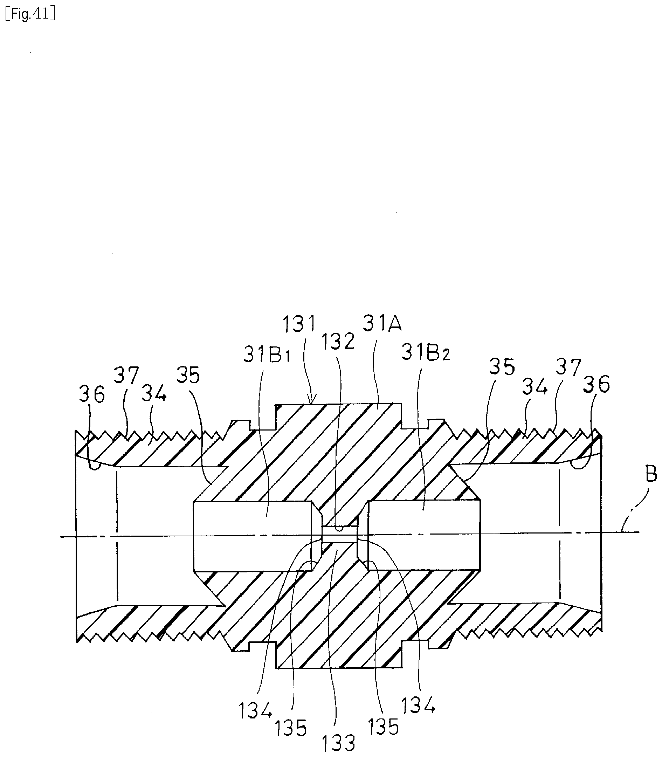

[Fig. 41] is a sectional view showing an orifice of the main body after it has been added, which is prepared for the resin pipe fitting according to the second embodiment;

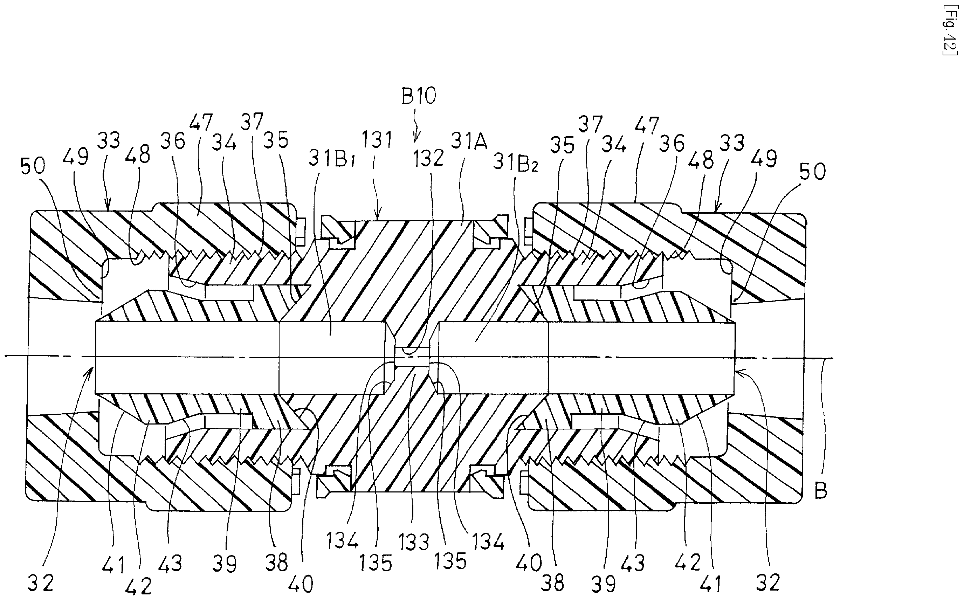

[Fig. 42] is a sectional view showing how the resin pipe fitting according to the second embodiment is assembled after the orifice has been added;

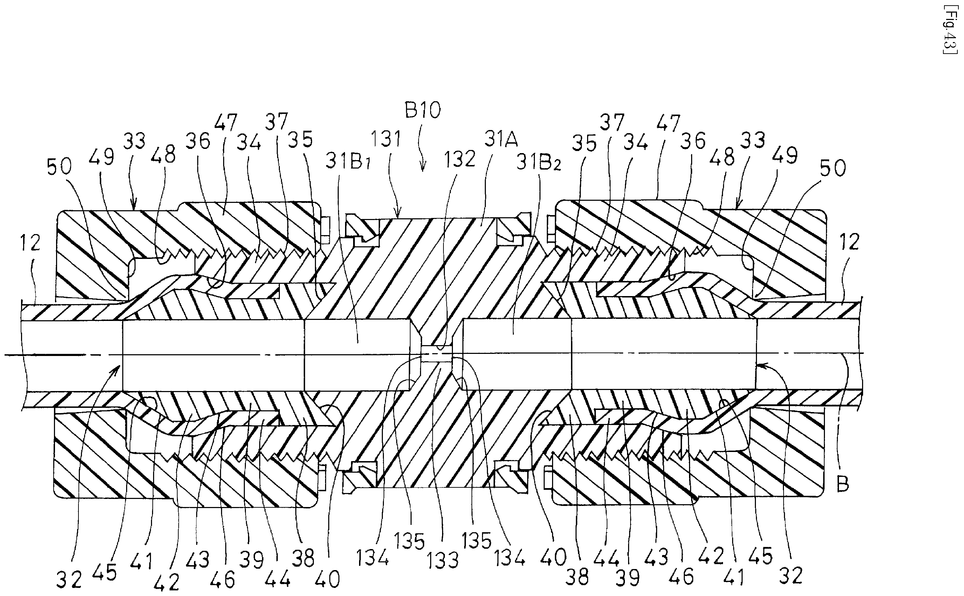

[Fig. 43] is a sectional view showing the resin pipe fitting according to the second embodiment when it is used;

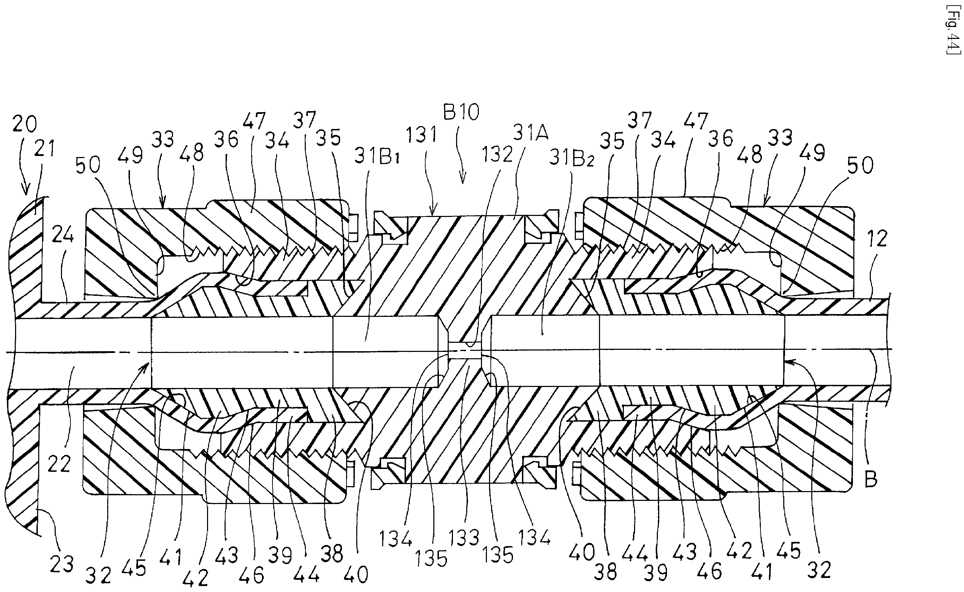

[Fig. 44] is a sectional view showing the resin pipe fitting according to the second embodiment in the state of another use;

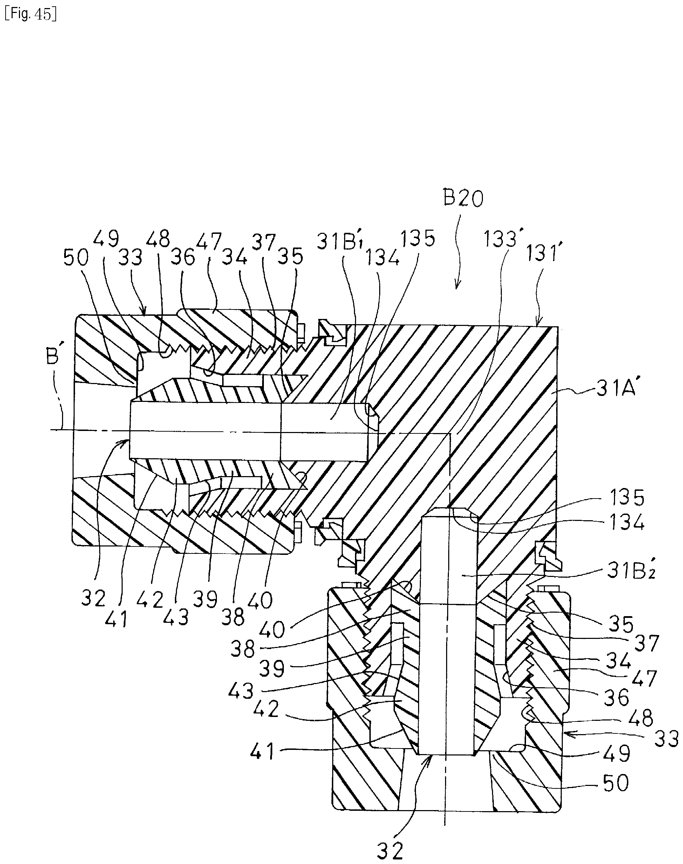

[Fig. 45] is a sectional view showing how another resin pipe fitting (elbow) according to the second embodiment is assembled;

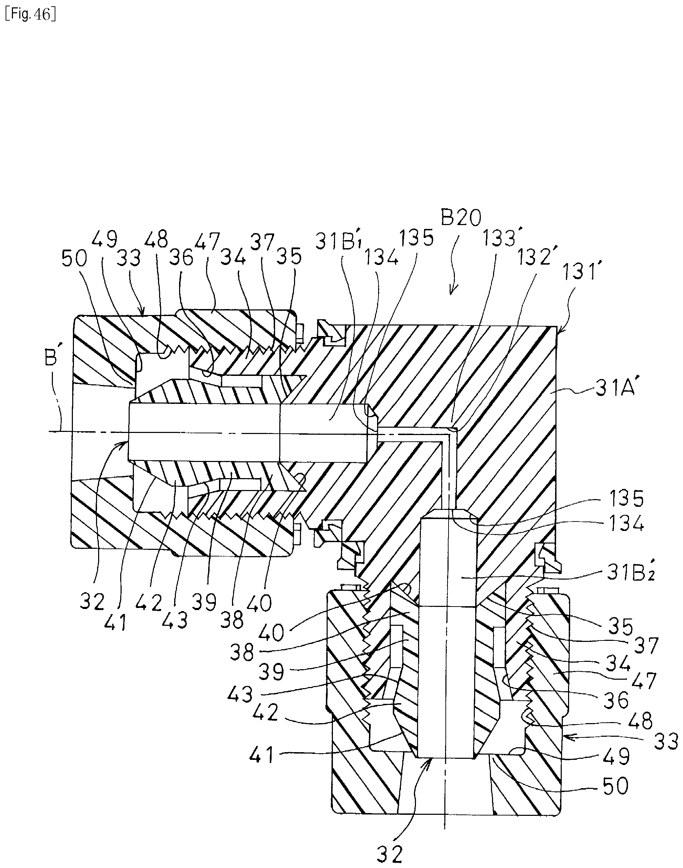

[Fig. 46] is a sectional view showing how another resin pipe fitting (elbow) according to the second embodiment is assembled after the orifice has been added;

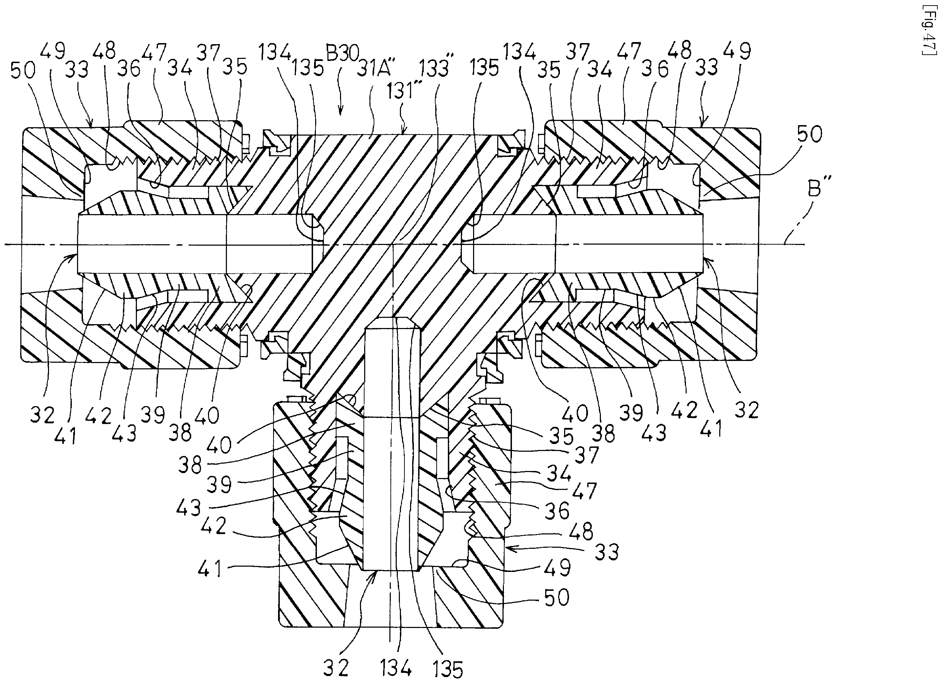

[Fig. 47] is a sectional view showing how still another resin pipe fitting (T) according to the second embodiment is assembled;

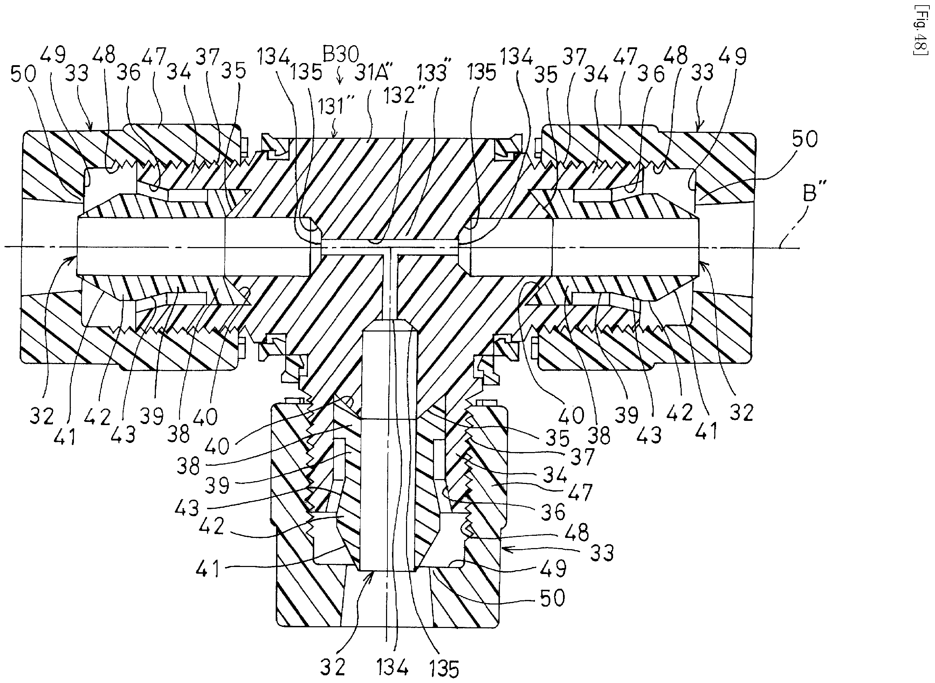

[Fig. 48] is a sectional view showing how still another resin pipe fitting (T) according to the second embodiment is assembled after the orifice has been added;

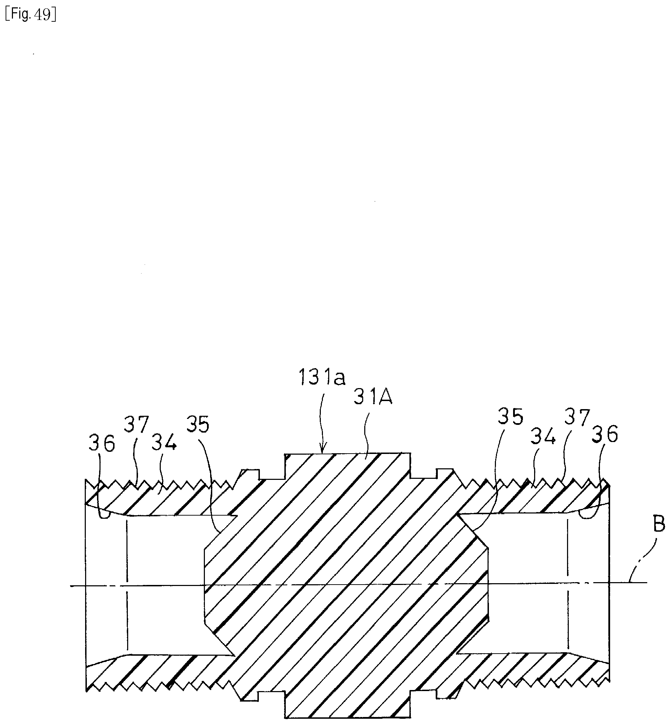

[Fig. 49] is a sectional view showing another method of integrally forming a wall to provide an orifice in the main body, which is prepared for the resin pipe fitting according to the second embodiment;

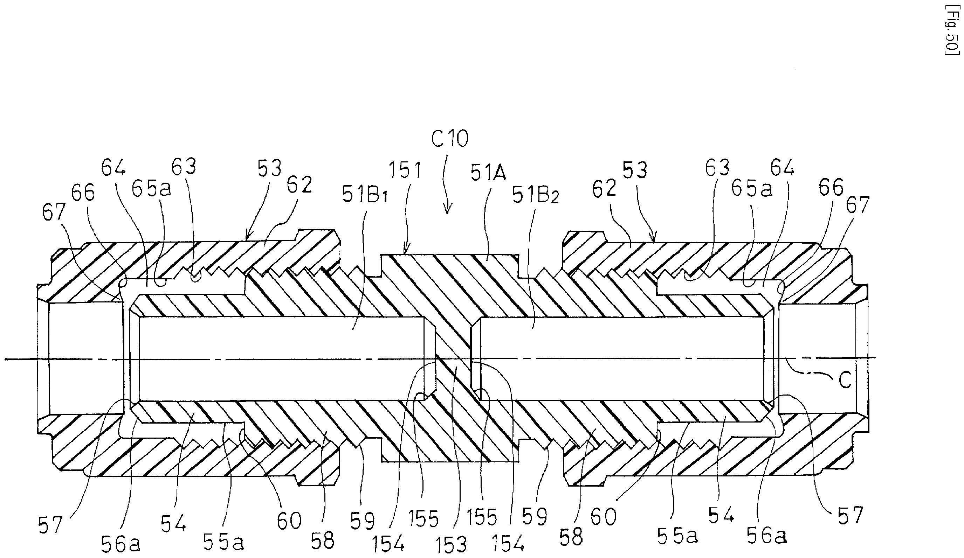

[Fig. 50] is a sectional view showing how a resin pipe fitting according to a third embodiment is assembled:

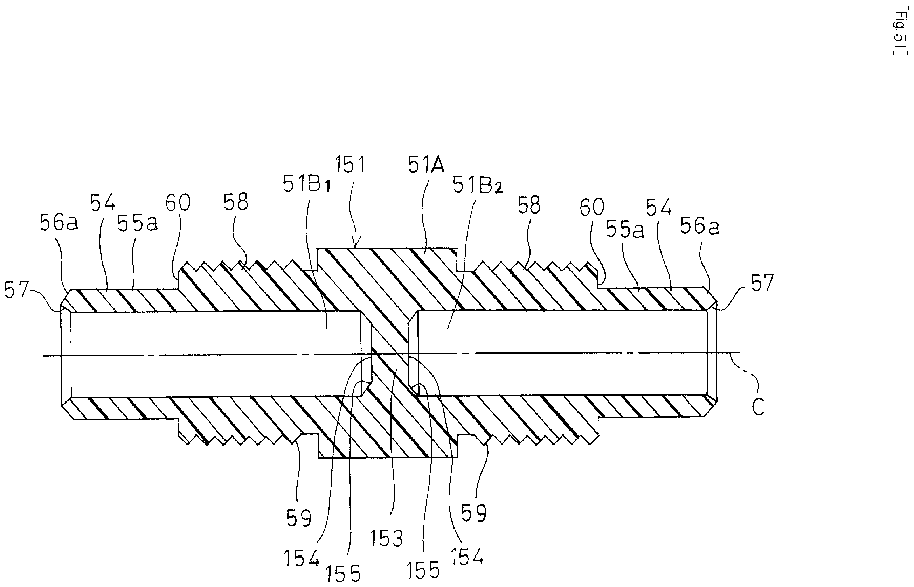

[Fig.51] is a sectional view showing a main body to be prepared for the resin pipe fitting according to the third embodiment;

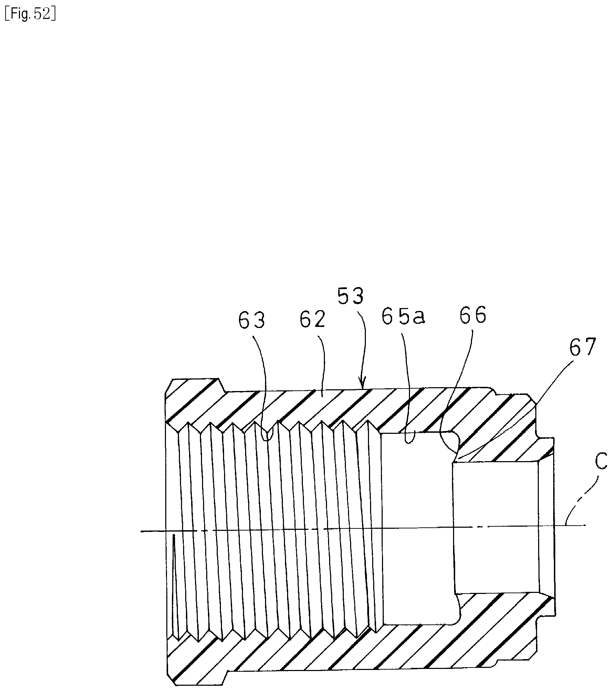

[Fig. 52] is a sectional view showing a press ring to be provided for the resin pipe fitting according to the third embodiment;

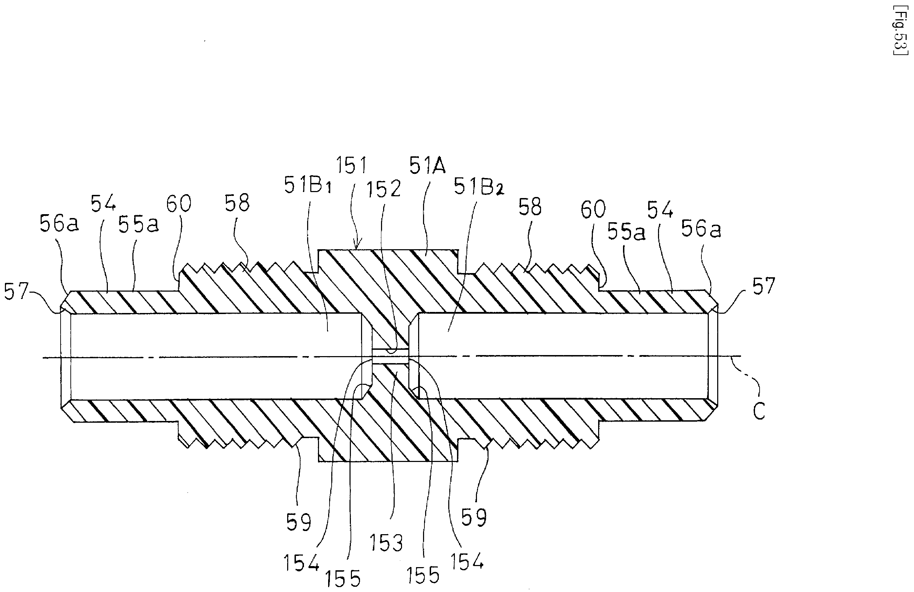

[Fig. 53] is a sectional view showing an orifice of the main body after it has been added, which is prepared for the resin pipe fitting according to the third embodiment;

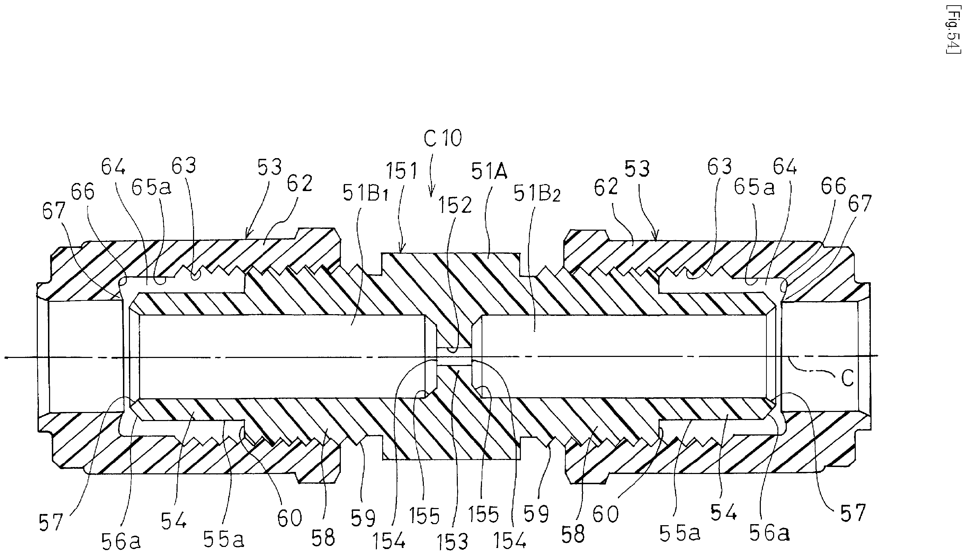

[Fig. 54] is a sectional view showing how the resin pipe fitting according to the third embodiment is assembled after the orifice has been added;

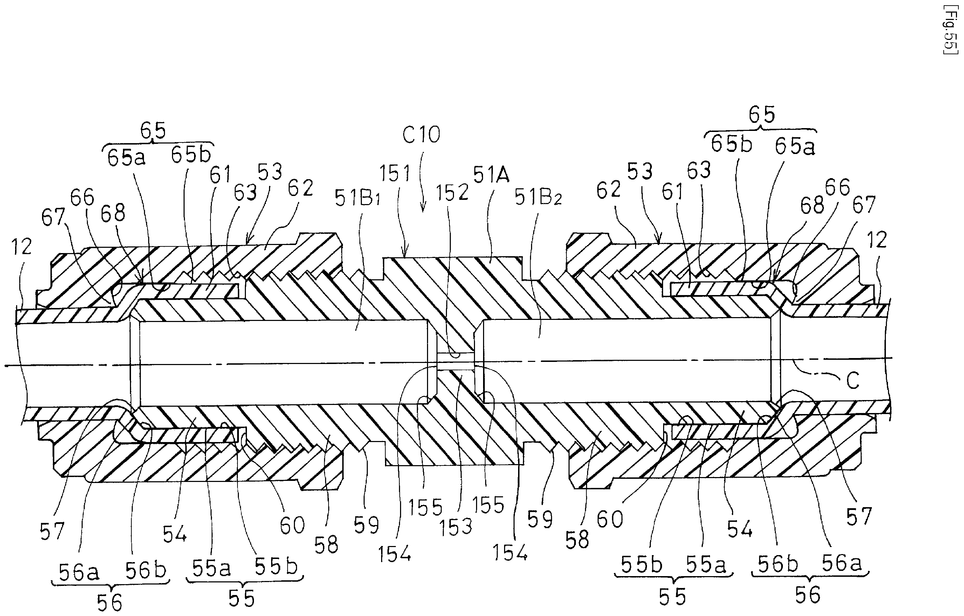

[Fig. 55] is a sectional view showing the resin pipe fitting according to the third embodiment when it is used;

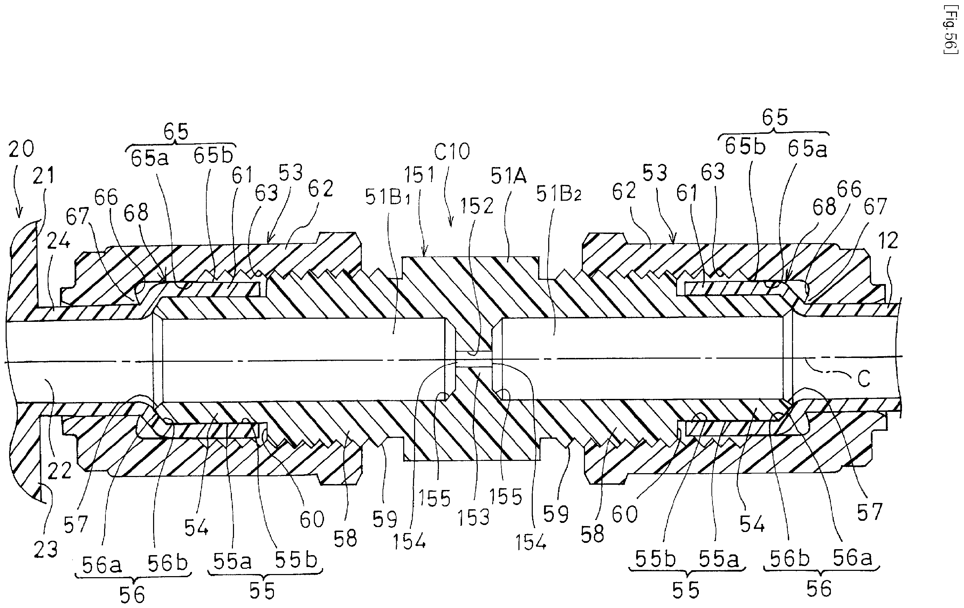

[Fig. 56] is a sectional view of the resin pipe fitting according to the third embodiment in the state of another use;

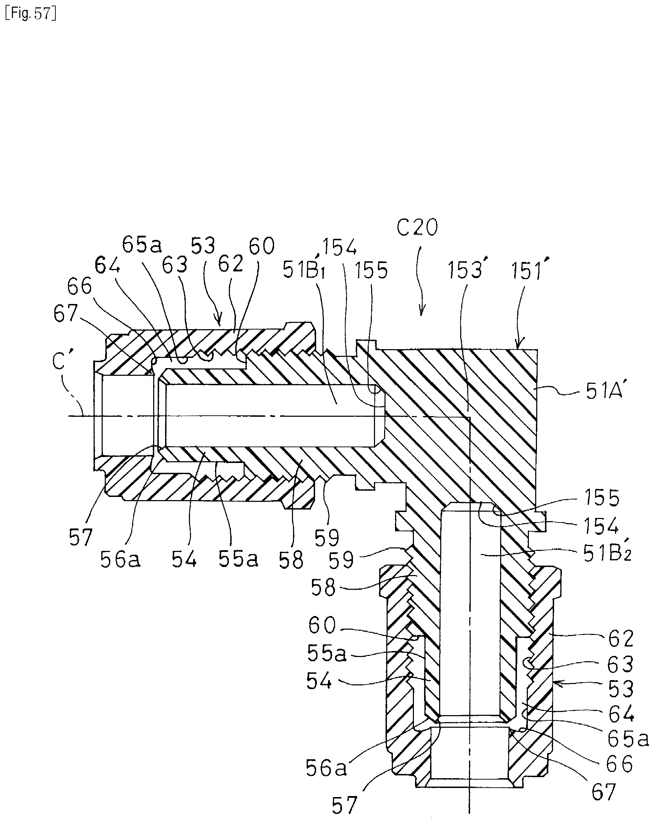

[Fig. 57] is a sectional view showing how another resin pipe fitting (elbow) according to the third embodiment is assembled;

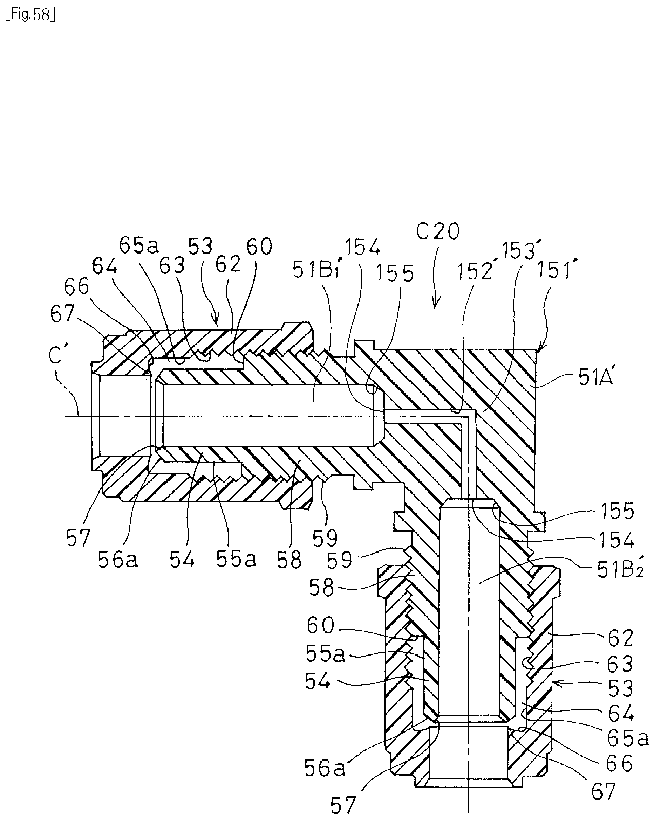

[Fig. 58] is a sectional view showing how another resin pipe fitting (elbow) according to the third embodiment is assembled after the orifice has been added;

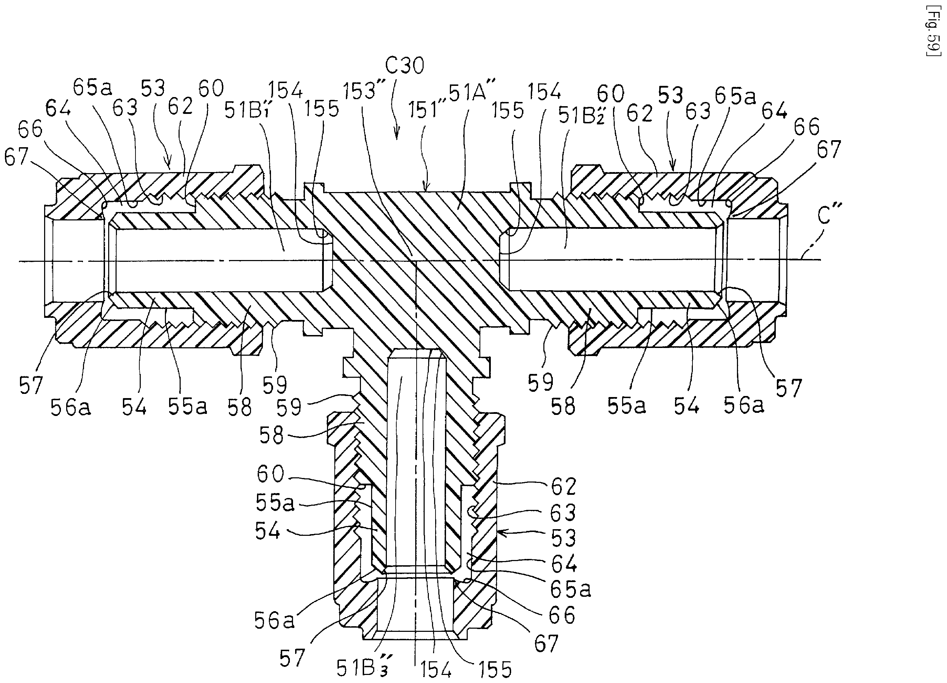

[Fig. 59] is a sectional view showing how still another resin pipe fitting (T) according to the third embodiment is assembled;

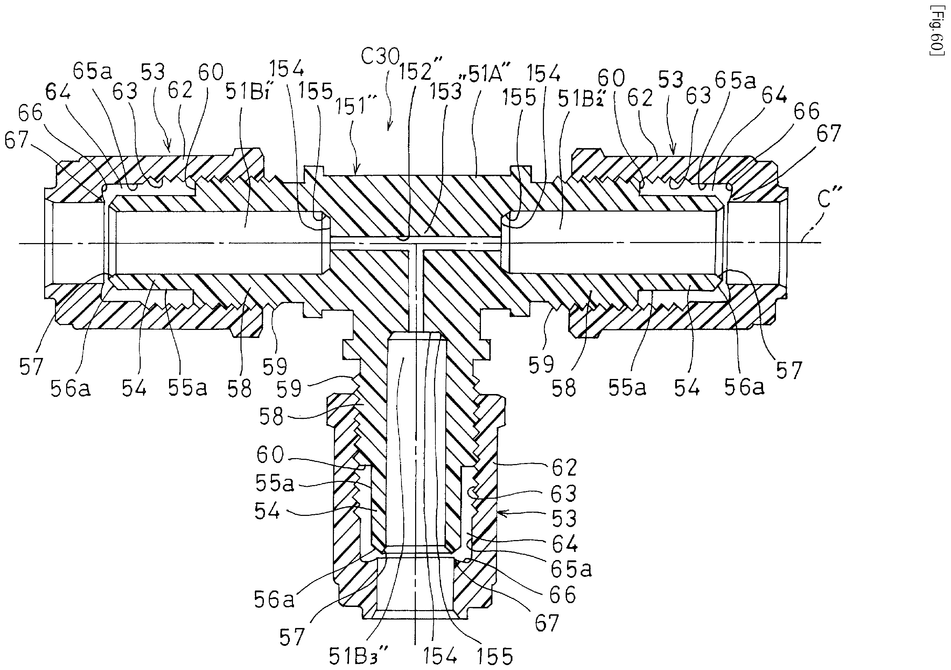

[Fig. 60] is a sectional view showing how still another resin pipe fitting (T) according to the third embodiment is assembled after the orifice has been added;

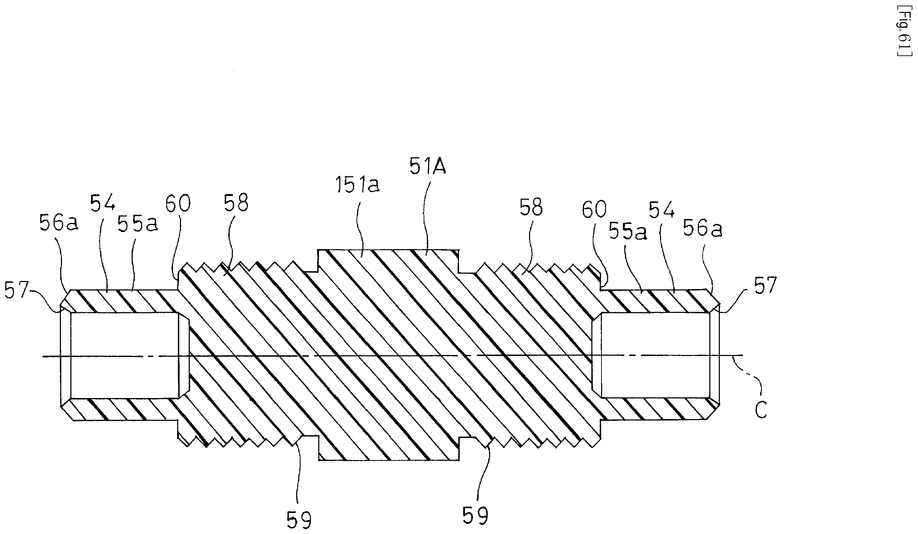

[Fig. 61] is a sectional view showing another method of integrally forming a wall to provide an orifice in the main body, which is prepared for the resin pipe fitting according to the third embodiment:

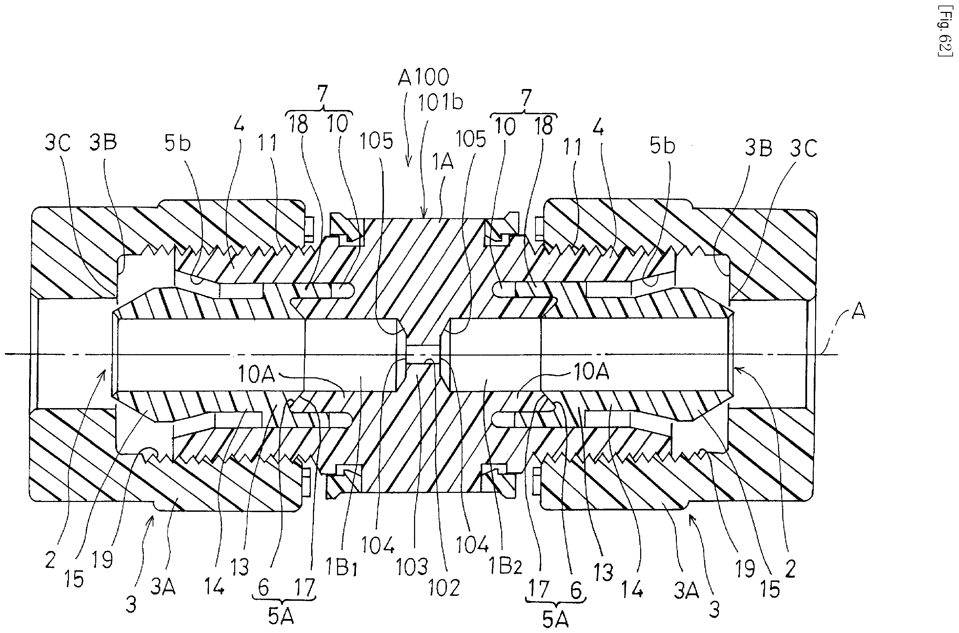

[Fig. 62] is a sectional view showing how a resin pipe fitting according to a fourth embodiment of the present invention is assembled:

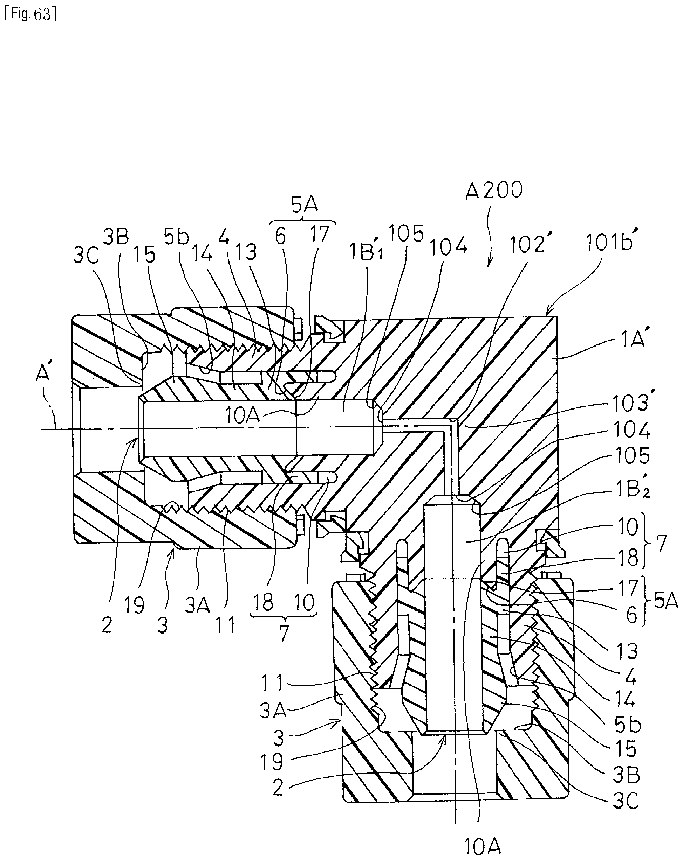

[Fig. 63] is a sectional view showing how another resin pipe fitting (elbow) according to the fourth embodiment is assembled;

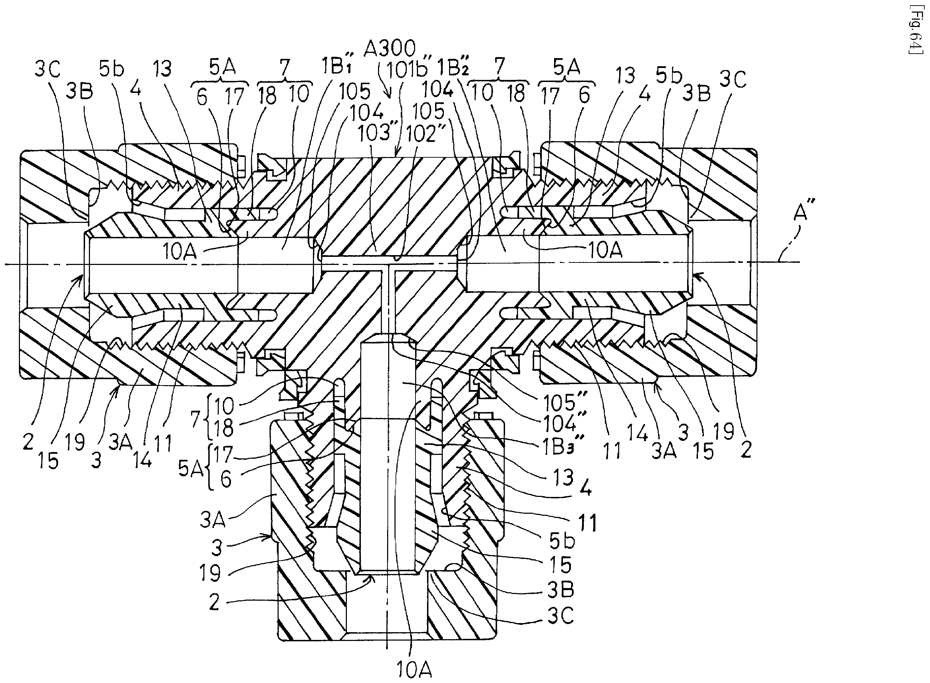

[Fig. 64] is a sectional view showing how still another resin pipe fitting (T) according to the fourth embodiment is assembled;

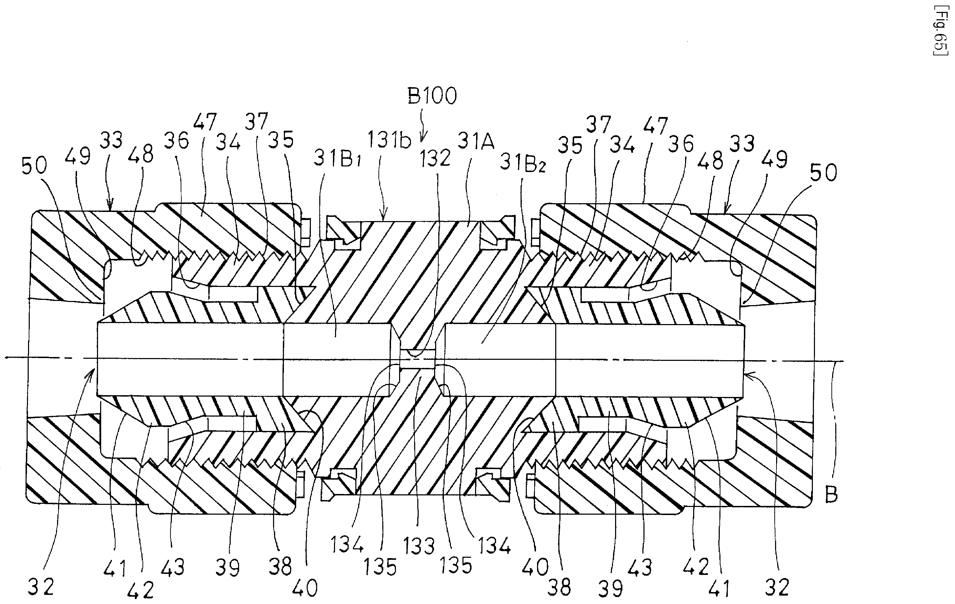

[Fig. 65] is a sectional view showing how a resin pipe fitting according to a fifth embodiment of the present invention is assembled:

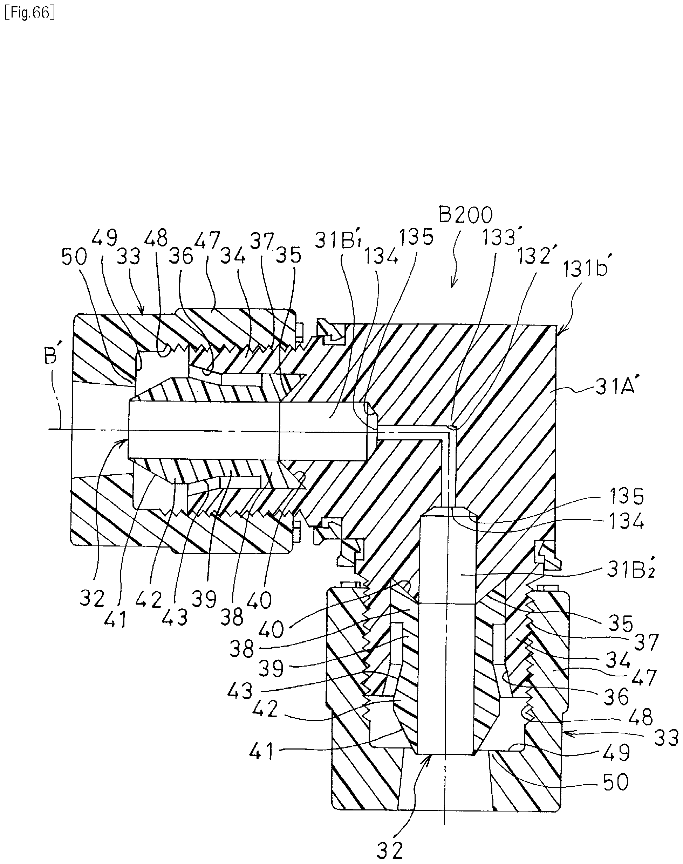

[Fig. 66] is a sectional view showing how another resin pipe fitting (elbow) according to the fifth embodiment is assembled;

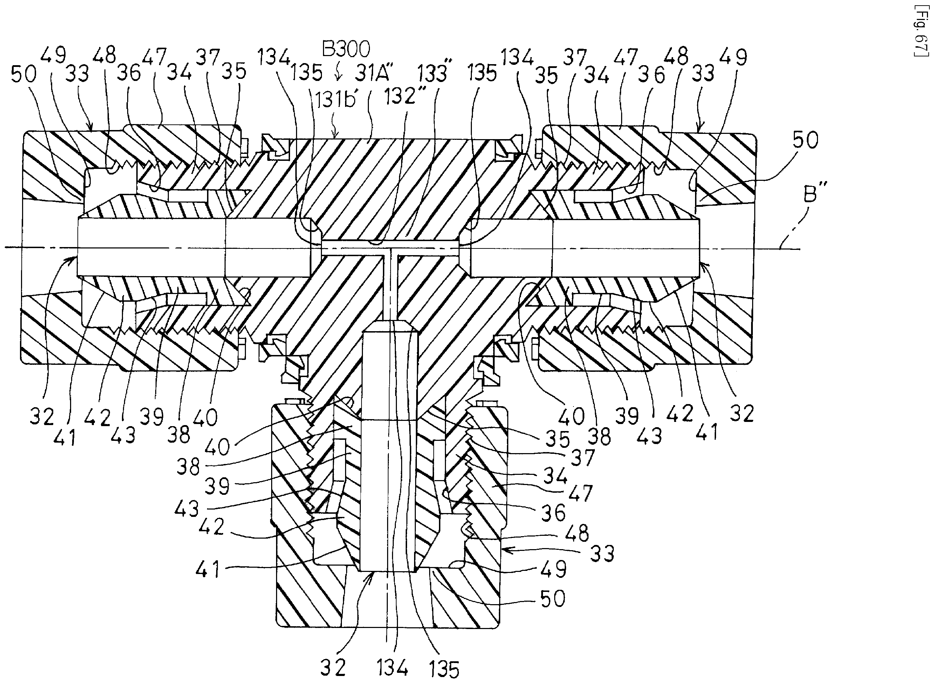

[Fig. 67] is a sectional view showing how still another resin pipe fitting (T) according to the fifth embodiment is assembled;

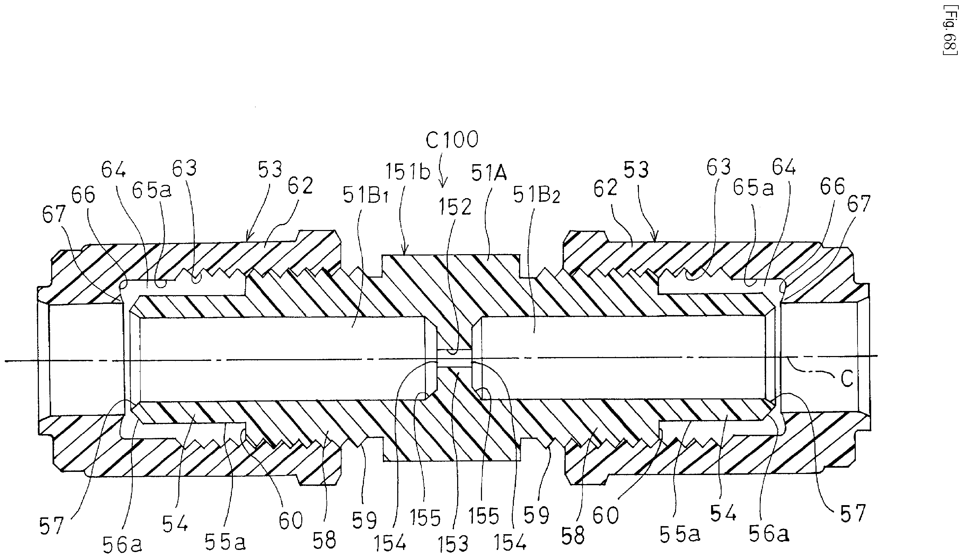

[Fig. 68] is a sectional view showing how a resin pipe fitting according to a sixth embodiment of the present invention is assembled:

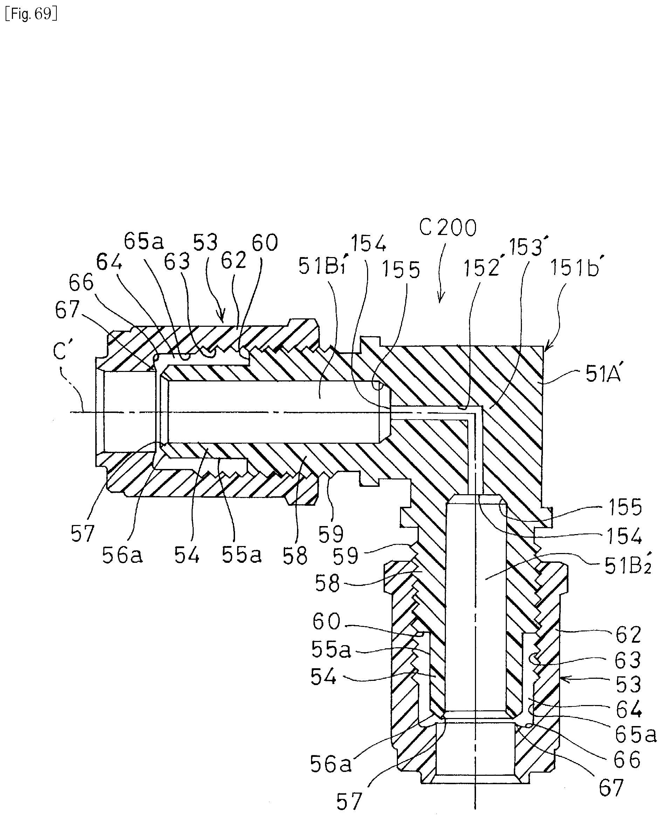

[Fig. 69] is a sectional view showing how another resin pipe fitting (elbow) according to the sixth embodiment is assembled; and

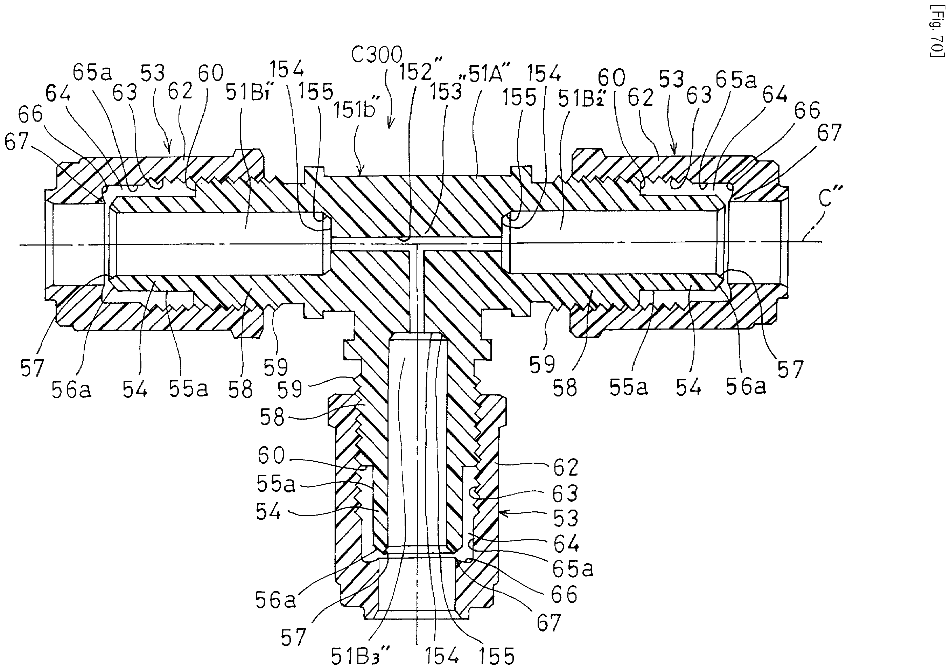

[Fig. 70] is a sectional view showing how still another resin pipe fitting (T) according to the sixth embodiment is assembled;

### Explanation of Numerals

A1 ... a first resin pipe fitting
A2 ... another first resin pipe fitting (elbow)
A3 ... still another first resin pipe fitting (T)
B1 ... a second resin pipe fitting
B2 ... another second resin pipe fitting (elbow)
B3 ... still another second resin pipe fitting (T)
C1 ... a third resin pipe fitting
C2 ... another third resin pipe fitting (elbow)
C3 ... still another third resin pipe fitting (T)
A10 ... a resin pipe fitting according to a first embodiment
A20 ... another resin pipe fitting (elbow) according to the first embodiment
A30 ... still another resin pipe fitting (T) according to the first embodiment
B10 ... a resin pipe fitting according to a second embodiment
B20 ... another resin pipe fitting (elbow) according to the second embodiment
B30 ... still another resin pipe fitting (T) according to the second embodiment
C10 ... a resin pipe fitting according to a third embodiment
C20 ... another resin pipe fitting (elbow) according to the third embodiment
C30 ... still another resin pipe fitting (T) according to the third embodiment
A100 ... a resin pipe fitting according to a fourth embodiment
A200 ... another resin pipe fitting (elbow) according to the fourth embodiment
A300 ... still another resin pipe fitting (T) according to the fourth embodiment
B100 ... a resin pipe fitting according to a fifth embodiment
B200 ... another resin pipe fitting (elbow) according to the fifth embodiment
B300 ... still another resin pipe fitting (T) according to the fifth embodiment
C100 ... a resin pipe fitting according to a sixth embodiment
C200 ... another resin pipe fitting (elbow) according to the sixth embodiment
C300 ... still another resin pipe fitting (T) according to the sixth embodiment
3, 33, 53 ... press ring (union nut)
101, 101', 101", 131, 131', 131", 151, 151', 151", 151a, 101b, 101b', 101b", 131b, 131b', 131b", 151b, 151b', 151b" ... main body of the pipe fitting
1B, 1B', 1B", 31B, 31B', 31B", 51B, 51B', 51B" ... fluid flow-passage
1B₁', 1B₁", 31B₁, 31B₁', 31B₁", 51B₁, 51B₁', 51B₁" ... first fluid flow-passage
1B₂, 1B₂', 1B₂", 31B₂, 31B₂', 31B₂", 51B₂, 51B₂', 51B₂" ... second fluid flow-passage
1B₃", 31B₃", 51B₃" ... third fluid flow-passage 102, 102', 102", 132, 132', 132", 152, 152', 152" ... orifice
103, 103', 103", 133, 133', 133", 153, 153', 153" ... wall
104, 134, 154 ... plane

### Most Preferred Embodiment of the Invention

Hereafter, an embodiment (referred to below as 'a first embodiment') of the present invention (as defined in claims 1 to 6) is explained with reference to Fig. 24 to Fig.36. Fig. 24 is a sectional view showing how a resin pipe fitting according to a first embodiment is assembled. Fig. 25 is a sectional view showing a main body to be prepared for the resin pipe fitting according to the first embodiment. Fig. 26 is a sectional view showing an inner ring to be prepared for the resin pipe fitting according to the first embodiment. Fig. 27 is a sectional view showing a press ring to be provided for the resin pipe fitting according to the first embodiment. Fig. 28 is a sectional view showing an orifice of the main body after it has been added, which is prepared for the resin pipe fitting according to the first embodiment. Fig. 29 is a sectional view showing how the resin pipe fitting according to the first embodiment is assembled after the orifice has been added. Fig. 30 is a sectional view showing the resin pipe fitting according to the first embodiment when it is used. Fig. 31 is a sectional view showing the resin pipe fitting according to the first embodiment in the state of another use. Fig. 32 is a sectional view showing how another resin pipe fitting (elbow) according to the first embodiment is assembled. Fig. 33 is a sectional view showing how another resin pipe fitting (elbow) according to the first embodiment is assembled after the orifice has been added. Fig. 34 is a sectional view showing how still another resin pipe fitting (T) according to the first embodiment is assembled. Fig. 35 is a sectional view showing how still another resin pipe fitting (T) according to the first embodiment is assembled after the orifice has been added. The first embodiment as shown is made by embodying the present invention in any one of the first resin pipe fittings A1, A2 and A3 illustrated in Fig. 1 to Fig. 8.

More specifically, a resin pipe fitting A10 according to the first embodiment includes, for the main body 1 of the first resin pipe fitting A1, a main body 101 integrally formed with a wall 103 to partition a fluid flow-passage 1B at right angles and provide an orifice 102 in the midway of the fluid flow-passage 1B (see Figs. 28 and 29) by post-working. In the other parts, it has a structure of the same union-type as that of the first resin pipe fitting A1. In order to avoid duplicated explanation, identical constructions are designated by identical reference numerals. The wall 103 most preferably partitions the fluid flow-passage 1B at right angles. But substantially right angles are not excluded (for example, ±15 degrees of the right angles are acceptable).

Here, the main body 101 has the fluid flow-passage 1B partitioned by the wall 103 into a first fluid flow-passage 1B₁ having one end opened into one receiving port 4 and a second fluid flow-passage 1B₂ having one end opened into the other receiving port 4. Further, each of the fluid flow-passages 1B₁ and 1B₂ has a closed end surface on the other end side (inner side), namely all the surfaces of the wall 103 of the main body 101, each of which is provided with a circular plane 104 perpendicular to each of the fluid flow-passages 1B₁ and 1B₂ and has an axis (A) as its center. The plane 104 has a periphery provided with a tapered surface 105 progressively increasing its diameter axially outwards and being in continuity with a peripheral wall surface of each of the fluid flow-passages 1B₁, 1B₂, The wall 103 is formed constant in thickness except vicinities of the tapered surface.

The main body 101 is a product formed from fluorine resins such as PFA, PTFE and ETFE by injection-molding into a shape as shown in Fig. 25. The molded main body 101 can be provided on its wall 103 with an orifice (fluid throttling one) 102 having the axis (A) for its center axis as shown in Fig.28, by machining the wall 103, in more detail, performing the boring-work with the use of a drill. Thus the main body 101 can be formed by working into the state of use where the first fluid flow-passage 1B₁ and the second fluid flow-passage 1B₂ partitioned by the wall 103 are mutually connected in communication with each other through the orifice 102. The main body 101 after the orifice 102 has been added thereto can constitute the resin pipe fitting A10 of the first embodiment into the one with the orifice 102, by the inner ring 2 and the press ring 3 as shown in Fig. 29.

Then the resin pipe fitting A10 with the orifice 102 according to the first embodiment has the same structure as that of the first resin pipe fitting A1 except that the orifice 102 is added in the midway of the fluid flow-passage 1B of the main body 1 of the first resin pipe fitting A1, when it is in use. This makes it possible to connect two tubular members 12 mutually in alignment or to connect the tubular member 12 to a tubular portion 24 of a fluid instrument 20 as well as in the case of the first resin pipe fitting A1, as shown in Figs. 30 and 31. This connection itself is the provision of the orifice 102 onto the piping.

The another resin pipe fitting (elbow) A20 according to the first embodiment as shown in Fig. 32 has, for the L-shaped main body 1' of the another first resin pipe fitting A2 (elbow), an L-shaped main body 101' integrally formed with a wall 103' to partition the L-shaped fluid flow-passage 1B' (filling the crossing portion of the L-shaped fluid flow-passage 1B') and provide an L-shaped orifice 102' (see Fig. 33) which mutually connects the partitioned first fluid flow-passage 1B₁' and second fluid flow-passage 1B₂' in communication with each other. In the other parts, it has the same fitting structure of the union-type and the fluid flow-passage partition structure as those of the resin pipe fitting A10 in the first embodiment. In order to avoid duplicated explanation, identical constructions are designated by identical reference numerals.

Further, the main body 101' is a product formed from fluorine resins such as PFA, PTFE and ETFE by injection-molding into a shape as shown in Fig. 32. The molded main body 101' can be provided in its wall 103' with an L-shaped orifice (fluid throttling one) 102' having an L-shaped axis (A)' for its center axis as shown in Fig.28, by machining the wall 103', in more detail, performing the boring-work with the use of a drill from two directions along the L-shaped axis (A)'. Thus the main body 101 can be formed by working, into the state of use where the first fluid flow-passage 1B₁' and second fluid flow-passage 1B₂' partitioned by the wall 103' are mutually connected in communication with each other through the orifice 102'. The main body 101' after the orifice 102' has been added thereto can constitute the another resin pipe fitting A20 of the first embodiment into the one with the orifice 102', by the inner ring 2 and the press ring 3 as shown in Fig. 33.

Then the resin pipe fitting A20 with the orifice 102' according to the first embodiment has the same structure as that of the another first resin pipe fitting A2 except that the orifice 102' is added in the midway of the fluid flow-passage 1B' of the main body 1' of the another first resin pipe fitting A2, when it is in use. This makes it possible to connect two tubular members 12 mutually forming right angles or to connect the tubular members 12 mutually forming right angles, to the tubular portion 24 of the fluid instrument 20 as well as in the case of the another first resin pipe fitting A2. This connection itself becomes the provision of the orifice 102' onto the piping.

The still another resin pipe fitting (T) A30 according to the first embodiment as shown in Fig. 34 has, for the T-shaped main body 1" of the still another first resin pipe fitting (T) A3, a T-shaped main body 101" integrally formed with a wall 103" to partition a T-shaped fluid flow-passage 1B" (filling the crossing portion of the T-shaped fluid flow-passage 1B") and provide a T-shaped orifice 102" (see Fig. 35) which mutually connects the partitioned first fluid flow-passage 1B₁", second fluid flow-passage 1B₂" and third fluid flow-passage 1B₃" in mutual communication. In the other parts, it has the same fitting structure of the union-type and the fluid flow-passage partition structure as those of the resin pipe fitting A10 in the first embodiment. In order to avoid duplicated explanation, identical constructions are designated by identical reference numerals.

Besides, the main body 101" is a product formed from fluorine resins such as PFA, PTFE and ETFE by injection-molding into a shape as shown in Fig. 34. The molded main body 101" can be provided in its wall 103" with a T-shaped orifice (fluid throttling one) 102" having a T-shaped axis (A)" for its center axis as shown in Fig. 35, by machining the wall 103", in more detail, performing the boring-work with the use of a drill from two directions along the T-shaped axis (A)". Thus the main body 101" can be formed by working, into the state of use where the first fluid flow-passage 1B₁", the second fluid flow-passage 1B₂" and the third fluid flow-passage 1B₃" partitioned by the wall 103" are connected in mutual communication through the orifice 102". The main body 101" after the orifice 102' has been added thereto can construct the still another resin pipe fitting A30 according to the first embodiment, into the one with the orifice 102", by the inner ring 2 and the press ring 3 as shown in Fig. 35.

Then the still another resin pipe fitting A30 with the orifice 102" according to the first embodiment has the same structure as that of the still another first resin pipe fitting A3 except that the orifice 102" is added in the midway of the fluid flow-passage 1B" of the main body 1" of the still another first resin pipe fitting A3, when it is in use. This makes it possible to connect three tubular members 12 mutually into T-shape or to connect three tubular members including the tubular members 12 and the tubular portion 24 of the fluid instrument 20 mutually into T-shape as well as in the case of the still another first resin pipe fitting A3. This connection itself becomes the provision of the orifice 102" onto the piping.

As mentioned above, the resin pipe fitting A10, A20 or A30 according to the first embodiment is a resin pipe fitting provided with a resin main body 101, 101' or 101" which includes a plurality of receiving ports (connection ports) 4 and a fluid flow-passage 1B, 1B' or 1B" connecting the receiving ports 4 in mutual communication. The main body 101, 101' or 101" is integrally formed with a wall 103, 103' or 103" to partition a fluid flow-passage 1B, 1B' or 1B" at right angles and provide an orifice 102, 102' or 102" which connects the thus partitioned fluid flow-passages 1B (1B₁, 1B₂), 1B' (1B'₁, 1B'₂) or 1B" (1B₁", 1B₂", 1B₃") in mutual communication. The orifice 102, 102' or 102" can be integrally formed with the main body 101, 101' or 101" by post-working to be provided therein.

Additionally, the resin pipe fitting A10, A20 or A30 according to the first embodiment is a resin pipe fitting provided with a resin main body 101, 101' or 101" which include a plurality of receiving ports (connection ports) 4 and a fluid flow-passage 1B, 1B' or 1B" connecting the receiving ports 4 in mutual communication. The main body 101, 101' or 101" is integrally formed with a wall 103, 103' or 103" which partitions the fluid flow-passages 1B, 1B' and 1B" at right angles and with an orifices 102, 102' or 102" which connects the thus partitioned fluid flow-passages 1B (1B₁, 1B₂), 1B' (1B'₁, 1B'₂) or 1B" (1B₁", 1B₂", 1B₃") in mutual communication (the resin pipe fittings A10, A20 and A30 with the orifices 102, 102' and 102", respectively, according to the first embodiment).

Like the resin pipe fittings A10, A20 or A30 according to the first embodiment, the main body 101, 101' or 101" is integrally formed with the orifice 102, 102' or 102" to thereby modify any one of the standard first resin pipe fittings A1, A2 and A3, each of which constitutes the piping, into the one with the orifice 102, 102' or 102". This enables the orifices 102, 102' or 102" to be arranged on the piping in the same space and by the same work as in the case of the standard first resin pipe fittings A1, A2 and A3, and allows the target flow amount to be readily gained.

Besides, when compared with those without any orifice 102, 102', 102", if the necessary orifice 102, 102', 102" is added by post-working, the manufacturer can readily provide the resin pipe fitting of an orifice-diameter within a wide range (The smaller the minimum orifice-diameter and the larger the maximum orifice-diameter. For example, preparation of orifice diameters spaced from one another in length by 0.1 mm between the maximum orifice-diameter and the minimum one). The user himself can form and arrange the orifice 102, 102' or 102" of the diameter that he desires. Further, the metal mold can be made common, thereby allowing the main body 101, 101' or 101" to be formed by molding at a lower cost.

Moreover, the resin pipe fittings A10, A20 or A30 according to the first embodiment includes the wall 103, 103' or 103", respectively, each of which is provided on its all surfaces with a plane 104 perpendicular to the fluid flow-passage 1B (1B₁, 1B₂), 1B' (1B'₁, 1B'₂) or 1B" (1B"₁, 1B"₂, 1B"₃). The orifice 102, 102' or 102" is integrally formed with such wall 103, 103' or 103", respectively to be provided therein, thereby enabling the orifice diameter to keep its length constant (with the wall 103, 103' or 103" of X mm in thickness, X mm) and vary only its diameter, differently from those provided by opening the tapered wall surfaces, and therefore allowing the target flow amount to be more readily gained.

Additionally, the resin pipe fittings A10, A20 and A30 according to the first embodiment each comprises a fitting structure for connecting an end portion of the main body 101, 101' or 101" to a tubular member 12 (a resin tube). Thus the orifice 102, 102' or 102" can be arranged at the tubular-member connection portion on the piping.

Besides, the resin pipe fittings A10, A20 and A30 according to the first embodiment each comprises a fitting structure for connecting an end portion of the main body 101, 101' or 101" to a fluid instrument 20. Thus the orifice 102, 102' and 102" can be provided at the portion for connecting the fluid instrument on the piping.

Further, the resin pipe fittings A10, A20 and A30 according to the first embodiment each comprises a fitting structure which is of union-type using the press ring 3 (resin union nut), thereby enabling the tubular member 12 and the fluid instrument 20 on the piping to be easily attached and detached and therefore allowing the target flow amount to be more easily obtained.

Furthermore, the resin pipe fitting A10, A20 or A30 according to the first embodiment includes a main body 101, 101' or 101" made of fluorine resin for the material. This can apply to a portion in contact with the liquid of each of those pipe fittings A10, A20 and A30 according to the first embodiment, high heat-resistance, high pharmaceutical-resistant property (high corrosion-resistance), high friction-resistant property and non-adhesiveness. Therefore, it can be suitably used as the piping for the liquid of high-purity, the water of ultra-high purity and the pharmaceutical liquid to be treated during the production process of the semiconductor, the liquid crystal and the pharmaceutical products.

Fig. 36 is a sectional view showing another method of integrally forming a wall to provide an orifice in the main body, which is prepared for the resin pipe fitting according to the first embodiment. As the another method for integrally forming the wall 103 to provide the orifice 102 in the main body 101, as shown in Fig. 36, a main body 101a having a solid barrel portion 1A is formed by injection-molding and the thus formed main body 101a has its barrel portion 1A formed at its mid portion with a first fluid flow-passage 1B₁ and a second fluid flow-passage 1B₂, each of which has the axis (A) for its center axis and is cap-like, by using a drill thicker than the drill for forming the orifice, from two directions along the axis (A). This method can also integrally form the wall 103 between the first fluid flow-passage 1B₁ and the second fluid flow-passage 1B₂. As such, a boring-work (a secondary working) is conducted for the wall 103 formed by machining (a primary working) through using a drill thinner than that for forming the fluid flow-passage to thereby provide the orifice 102 as shown in Fig. 28. This method for forming the wall 103 of the resin pipe fitting A10 is available for forming the wall 103' of the main body 101' of the another resin pipe fitting A20 as well as for the wall 103" of the main body 101" of the still another resin pipe fitting A30.

Next, another embodiment (hereafter referred to as 'a second embodiment') of the present invention (as defined in claims 1 to 6) is explained below with reference to Fig. 37-Fig. 49. Fig. 37 is a sectional view showing how a resin pipe fitting according to a second embodiment is assembled. Fig. 38 is a sectional view showing a main body to be prepared for the resin pipe fitting according to the second embodiment. Fig. 39 is a sectional view showing an inner ring to be prepared for the resin pipe fitting according to the second embodiment. Fig. 40 is a sectional view showing a press ring to be provided for the resin pipe fitting according to the second embodiment. Fig. 41 is a sectional view showing an orifice of the main body after it has been added, which is prepared for the resin pipe fitting according to the second embodiment. Fig. 42 is a sectional view showing how the resin pipe fitting according to the second embodiment is assembled after the orifice has been added. Fig. 43 is a sectional view showing the resin pipe fitting according to the second embodiment when it is used. Fig. 44 is a sectional view of the resin pipe fitting according to the second embodiment in the state of another use. Fig. 45 is a sectional view showing how another resin pipe fitting (elbow) according to the second embodiment is assembled. Fig. 46 is a sectional view showing how another resin pipe fitting (elbow) according to the second embodiment is assembled after the orifice has been added. Fig. 47 is a sectional view showing how still another resin pipe fitting (T) according to the second embodiment is assembled. Fig. 48 is a sectional view showing how still another resin pipe fitting (T) according to the second embodiment is assembled after the orifice has been added. The illustrated second embodiment is made by embodying the present invention in any one of the second resin pipe fittings B1, B2 and B3 shown in Fig. 9 to Fig. 16.

More specifically, the resin pipe fitting B10 according to the second embodiment includes, for the main body 31 of the second resin pipe fitting B1, a main body 131 which is integrally formed with a wall 133 to partition the fluid flow-passage 31B at right angles and provide an orifice 132 (see Figs. 41 and 42) in the midway of the fluid flow-passage 31B by post-working. In the other parts, it has a fitting structure of the same union-type as that of the second resin pipe fitting. In order to avoid duplicated explanation, identical constructions are designated by identical reference numerals. The wall 133 most preferably partitions the fluid flow-passage 31B at right angles. But substantially right angles are not excluded (for example, ±15 degrees of the right angles are allowable).

Here, the main body 131 has the fluid flow-passage 31B partitioned by the wall 103 into a first fluid flow-passage 31B₁ having one end opened into one receiving port 34 and a second fluid flow-passage 31B₂ having one end opened into the other receiving port 34. Further, each of the fluid flow-passages 31B₁ and 31B₂ has a closed end surface on the other end side (inner side), namely all the surfaces of the wall 133 of the main body 131, each of which is provided with a circular plane 134 perpendicular to each of the fluid flow-passages 31B₁ and 31B₂ and has an axis (B) as a center. The plane 134 has a periphery provided with a tapered surface 135 progressively increasing its diameter axially outwards and being in continuity with a peripheral wall surface of each of the fluid flow-passages 31B₁, 31B₂. The wall 133 is formed constant in thickness except vicinities of the tapered surface.

The main body 131 is a product formed from fluorine resins such as PFA, PTFE or ETFE by injection-molding into a shape as shown in Fig. 38. The molded main body 131 can be provided in its wall 133 with an orifice (fluid throttling one) 132 having an axis (B) for its center axis as shown in Fig. 41, by machining the wall 133, in more detail, performing the boring-work with the use of a drill. Thus the main body 131 can be formed by working, into the state of use where the first fluid flow-passage 31B₁ and second fluid flow-passage 31B₂ partitioned by the wall 133 are mutually connected in communication with each other through the orifice 132. The main body 131 after the orifice 132 has been added thereto can constitute the resin pipe fitting B10 of the second embodiment into the one with the orifice 132, by the inner ring 32 and the press ring 33 as shown in Fig. 42.

Then the resin pipe fitting B10 with the orifice 132 according to the second embodiment has the same structure as that of the second resin pipe fitting B1 except that the orifice 132 is added in the midway of the fluid flow-passage 31B of the main body 31 of the second resin pipe fitting B1, when it is in use. This makes it possible to connect two tubular members 12 mutually in alignment or to connect the tubular member 12 to a tubular portion 24 of a fluid instrument 20 as shown in Figs. 43 and 44 as well as in the case of the second resin pipe fitting B1. This connection itself becomes the provision of the orifice 132 onto the piping.

The another resin pipe fitting (elbow) B20 according to the second embodiment as shown in Fig. 45 has, for the L-shaped main body 31' of the another second resin pipe fitting (elbow) B2, an L-shaped main body 131' which is integrally formed with a wall 133' to partition the L-shaped fluid flow-passage 31B' (filling the crossing portion of the L-shaped fluid flow-passage 31B') and provide an L-shaped orifice 132' (see Fig. 33) which connects the partitioned first fluid flow-passage 31B₁' and second fluid flow-passage 31B₂' to each other in mutual communication. In the other parts, it has the same fitting structure of the union-type and the fluid flow-passage partition structure as those of the resin pipe fitting B10 in the second embodiment. In order to avoid duplicated explanation, identical constructions are designated by identical reference numerals.

Further, the main body 131' is a product formed from fluorine resins such as PFA, PTFE or ETFE by injection-molding into a shape as shown in Fig. 45. The molded main body 131' can be provided in its wall 133' with an L-shaped orifice (fluid throttling one) 132' having an L-shaped axis (B)' for its center axis as shown in Fig. 46, by machining the wall 133', in more detail, performing the boring-work with the use of a drill from two directions along the L-shaped axis (B)'. Thus the main body 131' can be formed by working into the state of use where the first fluid flow-passage 31B1' and the second fluid flow-passage 31B2' partitioned by the wall 133' are mutually connected in communication with each other through the orifice 132'. The main body 131' after the orifice 132' has been added thereto can constitute the another resin pipe fitting B20 of the second embodiment into the one with the orifice 132', by the inner ring 32 and the press ring 33 as shown in Fig. 46.

Then the another resin pipe fitting B20 with the orifice 132' according to the second embodiment has the same structure as that of the another second resin pipe fitting B2 except that the orifice 132' is added in the midway of the fluid flow-passage 31B' of the main body 31' of the another second resin pipe fitting B2, when it is in use. This makes it possible to connect two tubular members 12 mutually forming right angles, to one another, or to connect the tubular members 12 mutually forming right angles, to the tubular portion 24 of the fluid instrument 20 as well as in the case of the another second resin pipe fitting B2. This connection itself becomes the provision of the orifice 132' onto the piping.

The still another resin pipe fitting (T) B30 according to the second embodiment as shown in Fig. 47 has, for the T-shaped main body 31" of the still another second resin pipe fitting (T) B3, a T-shaped main body 131" which is integrally formed with a wall 133" to partition a T-shaped fluid flow-passage 31B" (filling the crossing portion of the T-shaped fluid flow-passage 31B") and provide a T-shaped orifice 132" (see Fig. 48) which connects the partitioned first fluid flow-passage 31B₁", second fluid flow-passage 31B₂" and third fluid flow-passage 31B₃" to each other in mutual communication. In the other parts, it has the same fitting structure of the union-type and the fluid-flow-passage partition wall structure as those of the resin pipe fitting B10 in the second embodiment. In order to avoid duplicated explanation, identical constructions are designated by identical reference numerals.

Besides, the main body 131" is a product formed from fluorine resins such as PFA, PTFE or ETFE by injection-molding into a shape as shown in Fig. 47. The molded main body 131" can be provided in its wall 133" with a T-shaped orifice (fluid throttling one) 132" having a T-shaped axis (B)" for its center axis as shown in Fig. 48, by machining the wall 103", in more detail, performing the boring-work with the use of a drill from two directions perpendicular to one another along the T-shaped axis (B)". Thus the main body 131" can be formed by working into the state of use where the first fluid flow-passage 31B₁", the second fluid flow-passage 31B₂" and the third fluid flow-passage 31B₃" partitioned by the wall 133" are connected in mutual communication through the orifice 132". The main body 131" after the orifice 132" has been added thereto can construct the still another resin pipe fitting B30 according to the second embodiment, into the one with the orifice 132" by the inner ring 32 and the press ring 33 as shown in Fig. 48.

Then the still another resin pipe fitting B30 with the orifice 132" according to the second embodiment has the same structure as that of the still another second resin pipe fitting B3 except that the orifice 132" is added in the midway of the fluid flow-passage 31B" of the main body 31" of the still another second resin pipe fitting B3, when it is in use. This makes it possible to connect three tubular members 12 mutually into T-shape or to connect three tubular members including the tubular members 12 and the tubular portion 24 of the fluid instrument 20 mutually into T-shape, as well as in the case of the still another second resin pipe fitting B3. This connection itself becomes the provision of the orifice 132" onto the piping.

As mentioned above, the resin pipe fitting B10, B20 or B30 according to the second embodiment is a resin pipe fitting provided with a resin main body 131, 131' or 131" which includes a plurality of receiving ports (connection ports) 34 and a fluid flow-passages 31B, 31B' or 31B" connecting the receiving ports 34 in mutual communication. The main body 131, 131' or 131" is integrally formed with a wall 133, 133' or 133" to partition the fluid flow-passage 31B, 31B' or 31B" at right angles and provide an orifice 132, 132' or 132" which connects the thus partitioned fluid flow-passages 31B (31B₁, 31B₂), 31B' (31B'₁, 31B'₂) or 31B" (31B₁", 31B₂", 31B₃") in mutual communication. The orifice 132, 132' or 132" can be integrally formed with the main body 131, 131' or 131", respectively by post-working to be provided therein.

Additionally, the resin pipe fitting B10, B20 or B30 according to the second embodiment is a resin pipe fitting provided with a resin main body 131, 131' or 131" which includes a plurality of receiving ports (connection ports) 34 and a fluid flow-passage 31B, 31B' or 31B" connecting the receiving ports 34 in mutual communication. The main body 131, 131' or 131" is integrally formed with a wall 133, 133' or 133" which partitions the fluid flow-passage 31B, 31B' or 31B" at right angles and with an orifice 132, 132' or 132" which mutually connect the thus partitioned fluid flow-passages 31B (31B₁, 31B₂), 31B' (31B'₁, 31B'₂) or 31B" (31B₁", 31B₂", 31B₃") in communication with each other (the resin pipe fittings B10, B20 and B30 with the orifices 132, 132' and 132" respectively, according to the second embodiment).

Like the resin pipe fittings B10, B20 and B30 according to the second embodiment, the main body 131, 131' or 131" is integrally formed with the orifice 132, 132' or 132", respectively to thereby modify any one of the standard second resin pipe fittings B1, B2 and B3, each of which constitutes the piping, into the one with the orifice 132, 132' or 132". This enables the orifice 132, 132' or 132" to be provided on the piping in the same space and by the same work as in the case of the standard second resin pipe fittings B1, B2 and B3, each of which constitutes the piping, and allows the target flow amount to be readily obtained.

Besides, when compared with those without orifice 132, 132' or 132", if the necessary orifice is added by post-working, the manufacturer can readily provide the resin pipe fitting of an orifice-diameter within a wide range (The smaller the minimum orifice-diameter and the larger the maximum orifice-diameter. For example, preparation of orifice diameters spaced from one another in length by 0.1 mm between the maximum orifice-diameter and the minimum one). The user himself can form and arrange the orifice 132, 132' or 132" of the diameter that he desires. Further, the metal mold can be made common, thereby allowing the main body 131, 131' or 131" to be formed by molding at a lower cost.

Moreover, the resin pipe fittings B10, B20 and B30 according to the second embodiment include the walls 133, 133' and 133", respectively, each of which is provided on its all surfaces with a plane 134 perpendicular to the fluid flow-passages 31B (31B₁, 31B₂), 31B' (31B₁', 31B₂'), or 31B" (31B₁", 31B₂", 31B₃"). The orifice 132, 132' or 132" is integrally formed with such wall 133, 133' or 133", respectively to be provided therein, thereby enabling the orifice diameter to keep its length constant (with the wall 133, 133' or 133" of X mm in thickness, X mm) and vary only its diameter, differently from those provided by opening the tapered wall surfaces, and therefore allowing the target flow amount to be more readily gained.

Additionally, the resin pipe fittings B10, B20 and B30 according to the second embodiment each comprises a fitting structure for connecting an end portion of the main body 131, 131' or 131" to a tubular member 12 (a resin tube). Thus the orifice 132, 132' or 132" can be arranged at the tubular-member connection portion on the piping.

Besides, the resin pipe fittings B10, B20 and B30 according to the second embodiment each comprises a fitting structure for connecting an end portion of the main body 131, 131' or 131" to a fluid instrument 20. Thus the orifice 132, 132' or 132" can be arranged at the portion for connecting the fluid instrument, respectively, on the piping.

Further, the resin pipe fittings B10, B20 and B30 according to the second embodiment each comprises a fitting structure which is of union-type using the press ring 33 (resin union nut), thereby enabling the tubular member 12 and the fluid instrument 20 on the piping to be easily attached and detached and therefore allowing the target flow amount to be more easily obtained.

Furthermore, the resin pipe fitting B10, B20 or B30 according to the second embodiment includes a main body 131, 131' and 131" made of fluorine resin for the material. This can apply to a portion of each of those resin pipe fittings B10, B20 and B30 according to the second embodiment in contact with the liquid, high heat-resistance, high pharmaceutical-resistant property (high corrosion-resistance), high friction-resistant property and non-adhesiveness. Therefore, it can be suitably used as the piping for the liquid of high-purity, the water of ultra-high purity and the pharmaceutical liquid to be treated during the production process of the semiconductor, the liquid crystal and the pharmaceutical products.

Fig. 49 is a sectional view showing another method of integrally forming a wall to provide an orifice in the main body, which is prepared for the resin pipe fitting according to the second embodiment. As the another method for integrally forming the wall 133 to provide the orifice 132 in the main body 131, as shown in Fig. 49, a main body 131a having a solid barrel portion 31A is formed by injection-molding and the thus formed main body 131a has its barrel portion 31A formed at its mid portion with a first fluid flow-passage 31B₁ and a second fluid flow-passage 31B₂, each of which has the axis (B) as its center axis and is like a cap, by using a drill thicker than the drill for forming the orifice, from two directions along the axis (B). This method can also integrally form the wall 133 between the first fluid flow-passage 31B₁ and the second fluid flow-passage 31B₂. As such, a boring-work (a secondary working) is conducted for the wall 133 formed by machining (a primary working) through using a drill thinner than that for forming the fluid flow-passage to thereby provide the orifice 132 as shown in Fig. 41. This method for forming the wall 133 of the resin pipe fitting B10 is available for forming the wall 133' of the main body 131' of the another resin pipe fitting B20 as well as for the wall 133" of the main body 131" of the still another resin pipe fitting B30.

Next, still another embodiment (hereafter referred to as 'a third embodiment') of the present invention (as defined in claims 1 to 6) is explained below with reference to Fig. 50-Fig. 61. Fig. 50 is a sectional view showing how a resin pipe fitting according to a third embodiment is assembled. Fig.51 is a sectional view showing a main body to be prepared for the resin pipe fitting according to the third embodiment. Fig. 52 is a sectional view showing a press ring to be provided for the resin pipe fitting according to the third embodiment. Fig. 53 is a sectional view showing an orifice of the main body after it has been added, which is prepared for the resin pipe fitting according to the third embodiment. Fig. 54 is a sectional view showing how the resin pipe fitting according to the third embodiment is assembled after the orifice has been added. Fig. 55 is a sectional view showing the resin pipe fitting according to the third embodiment when it is used. Fig. 56 is a sectional view of the resin pipe fitting according to the third embodiment in the state of another use. Fig. 57 is a sectional view showing how another resin pipe fitting (elbow) according to the third embodiment is assembled. Fig. 58 is a sectional view showing how another resin pipe fitting (elbow) according to the second embodiment is assembled after the orifice has been added. Fig. 59 is a sectional view showing how still another resin pipe fitting (T) according to the third embodiment is assembled. Fig. 60 is a sectional view showing how still another resin pipe fitting (T) according to the third embodiment is assembled after the orifice has been added. The illustrated third embodiment is made by embodying the present invention in any one of the third resin pipe fittings C1, C2 and C3 shown in Fig. 17 to Fig. 23.

More specifically, the resin pipe fitting C10 according to the third embodiment includes, for the main body 51 of the third resin pipe fitting C1, a main body 151 which is integrally formed with a wall 153 to partition the fluid flow-passage 51B at right angles and provide an orifice 152 (see Figs. 53 and 54) in the midway of the fluid flow-passage 51B by post-working. In the other parts, it has a fitting structure of the same union-type as that of the third resin pipe fitting C1. In order to avoid duplicated explanation, identical constructions are designated by identical reference numerals. The wall 153 most preferably partitions the fluid flow-passage 51B at right angles. But substantially right angles are not excluded (for example, ±15 degrees of the right angles are allowable).

Here, the main body 151 has the fluid flow-passage 51B partitioned by the wall 153 into a first fluid flow-passage 51B₁ having one end opened into one tubular-member push-in portion 54 and a second fluid flow-passage 51B₂ having one end opened into the other tubular-member push-in portion 54. Further each of the fluid flow-passages 51B₁ and 51B₂ has a closed end surface on the other end side (inner side), namely all the surfaces of the wall 153 of the main body 151, each of which is provided with a circular plane 154 perpendicular to each of the fluid flow-passages 51B₁ and 51B₂ and has an axis (C) as a center. The plane 154 has a periphery provided with a tapered surface 155 progressively increasing its diameter axially outwards and being in continuity with a peripheral wall surface of each of the fluid flow-passages 51B₁, 51B₂. The wall 153 is formed constant in thickness except vicinities of the tapered surface.

The main body 151 is a product formed from fluorine resins such as PFA, PTFE, ETFE by injection-molding into a shape as shown in Fig. 51. The molded main body 151 can be provided in its wall 153 with an orifice (fluid throttling one) 152 having an axis (C) for its center axis as shown in Fig. 53, by machining the wall 153, in more detail, performing the boring-work with the use of a drill. Thus the main body 151 can be formed by working into the state of use where the first fluid flow-passage 51B₁ and second fluid flow-passage 51B₂ partitioned by the wall 153 are mutually connected in communication with each other through the orifice 152. The main body 151 after the orifice 152 has been added thereto can constitute the resin pipe fitting C10 of the third embodiment into the one with the orifice 152, by the press ring 53 as shown in Fig. 54.

Then the resin pipe fitting C10 with the orifice 152 according to the third embodiment has the same structure as that of the third resin pipe fitting C1 except that the orifice 152 is added in the midway of the fluid flow-passage 51B of the main body 51 of the third resin pipe fitting C1, when it is in use. This makes it possible to connect two tubular members 12 mutually in alignment or to connect the tubular member 12 to a tubular portion 24 of a fluid instrument 20 as shown in Figs. 55 and 56 as well as in the case of the third resin pipe fitting C1. This connection itself becomes the provision of the orifice 152 onto the piping.

The another resin pipe fitting (elbow) C20 according to the third embodiment as shown in Fig. 57 has, for the L-shaped main body 51' of the another third resin pipe fitting (elbow) C2, an L-shaped main body 151' which is integrally formed with a wall 153' to partition the L-shaped fluid flow-passage 51B' (filling the crossing portion of the L-shaped fluid flow-passage 51B') and provide an L-shaped orifice 152' (see Fig. 58) for connecting the partitioned first fluid flow-passage 51B₁' and second fluid flow-passage 51B₂' to each other in mutual communication. In the other parts, it has the same fitting structure of the union-type and the fluid-flow-passage partition structure as those of the resin pipe fitting C10 in the third embodiment. In order to avoid duplicated explanation, identical constructions are designated by identical reference numerals.

Further, the main body 151' is a product formed from fluorine resins such as PFA, PTFE, ETFE by injection-molding into a shape as shown in Fig. 57. The molded main body 151' can be provided in its wall 153' with an L-shaped orifice (fluid throttling one) 152' having an L-shaped axis (C)' for its center axis as shown in Fig. 58, by machining the wall 153', in more detail, performing the boring-work with the use of a drill from two directions along the L-shaped axis (C)'. Thus the main body 151' can be formed by working into the state of use where the first fluid flow-passage 51B₁' and second fluid flow-passage 51B₂' partitioned by the wall 153' are mutually connected in communication with each other through the orifice 152'. The main body 151' after the orifice 152' has been added thereto can constitute the another resin pipe fitting C20 of the third embodiment into the one with the orifice 152', by the press ring 53 as shown in Fig. 58.

Then the resin pipe fitting C20 with the orifice 152' according to the third embodiment has the same structure as that of the another third resin pipe fitting C2 except that the orifice 152' is added in the midway of the fluid flow-passage 51B' of the main body 51' of the another third resin pipe fitting C2, when it is in use. This makes it possible to connect two tubular members 12 mutually forming right angles or to connect the tubular members 12 mutually forming right angles, to the tubular portion 24 of the fluid instrument 20 as well as in the case of the another third resin pipe fitting C2. This connection itself becomes the provision of the orifice 152' onto the piping.

The still another resin pipe fitting (T) C30 according to the third embodiment as shown in Fig. 59 has, for the T-shaped main body 51'' of the still another third resin pipe fitting (T) C3, a T-shaped main body 151'' which is integrally formed with a wall 153'' to partition a T-shaped fluid flow-passage 51B" (filling the crossing portion of the T-shaped fluid flow-passage 51B'') and provide a T-shaped orifice 152" (see Fig. 60) for connecting the partitioned first fluid flow-passage 51B₁", second fluid flow-passage 51B₂" and third fluid flow-passage 51B₃" to each other in mutual communication. In the other parts, it has the same fitting structure of the union-type and the fluid-flow-passage partition wall structure as those of the resin pipe fitting C10 in the third embodiment. In order to avoid duplicated explanation, identical constructions are designated by identical reference numerals.

Besides, the main body 151" is a product formed from fluorine resins such as PFA, PTFE or ETFE by injection-molding into a shape as shown in Fig. 59. The molded main body 151" can be provided in its wall 153" with a T-shaped orifice (fluid throttling one) 152" having a T-shaped axis (C)" for its center axis as shown in Fig. 60, by machining the wall 153", in more detail, performing the boring-work with the use of a drill from two directions perpendicular to one another along the T-shaped axis (C)". Thus the main body 151" can be formed by working into the state of use where the first fluid flow-passage 51B₁", the second fluid flow-passage 51B₂" ' and the third fluid flow-passage 51B₃"' partitioned by the wall 153" are connected in mutual communication through the orifice 152". The main body 151" after the orifice 152" has been added thereto can constitute the still another resin pipe fitting C30 according to the third embodiment, into the one with the orifice 152", by the press rings 53 as shown in Fig. 60.

Then the still another resin pipe fitting C30 with the orifice 152" according to the third embodiment has the same structure as that of the still another third resin pipe fitting C3 except that the orifice 152" is added in the midway of the fluid flow-passage 51B" of the main body 51" of the still another third resin pipe fitting C3, when it is in use. This makes it possible to connect three tubular members 12 mutually into T-shape or to connect three tubular members including the tubular members 12 and the tubular portion 24 of the fluid instrument 20 mutually into T-shape as well as in the case of the still another third resin pipe fitting C3. This connection itself becomes the provision of the orifice 152" onto the piping.

As mentioned above, the resin pipe fitting C10, C20 or C30 according to the third embodiment is a resin pipe fitting provided with a resin main body 151, 151' or 151" which includes a plurality of tubular-member push-in portions (connection ports) 54 and a fluid flow-passages 51B, 51B' or 51B" mutually connecting interior areas of the tubular-member push-in portions (connection ports) 54 in communication. The main body 151, 151' or 151'' is integrally formed with a wall 153, 153' or 153" to partition the fluid flow-passages 51B, 51B' or 51B" at right angles and provide an orifice 152, 152' or 152" for mutually connecting the thus partitioned fluid flow-passages 51B (51B₁, 51B₂), 51B' (51B₁', 51B₂') or 51B" (51B₁", 51B₂", 51B₃") in communication with each other. The orifices 152, 152' or 152'' can be integrally formed with the main body 151, 151' or 151", respectively by post-working to be provided therein.

Additionally, the resin pipe fitting C10, C20 or C30 according to the third embodiment is a resin pipe fitting provided with a resin main body 151, 151' or 151" which includes a plurality of tubular-member push-in portions (connection ports) 54 and a fluid flow-passage 51B, 51B' or 51B" mutually connecting interior areas of the tubular-member push-in portions (connection ports) 54 in communication. The main body 151, 151' or 151" is integrally formed with a wall 153, 153' or 153" which partitions the fluid flow-passages 51B, 51B' or 51B" at right angles and with an orifice 152, 152' or 152'' which mutually connects the thus partitioned fluid flow-passages 51B (51B₁, 51B₂), 51B' (51B₁' , 51B₂') or 51B" (51B₁", 51B₂", 51B₃") in communication with each other (the resin pipe fittings C10, C20 or C30 with the orifices 152, 152' or 152", respectively according to the third embodiment).

Like the resin pipe fittings C10, C20 and C30 according to the third embodiment, the main body 151, 151' or 151" is integrally formed with the orifice 152, 152' or 152" to thereby modify any one of the standard third resin pipe fittings C1, C2 or C3, which constitutes the piping, into the one with the orifice 152, 152' or 152". This enables the orifices 152, 152' or 152" to be arranged on the piping in the same space and by the same work as in the case of the standard third resin pipe fittings C1, C2 and C3 and allows the target flow amount to be more easily obtained.

Besides, when compared with those without the orifices 152, 152' and 152", the necessary orifice 152, 152' or 152" is added by post-working, so that the manufacturer can readily provide the resin pipe fitting of an orifice-diameter within a wide range (The smaller the minimum orifice-diameter and the larger the maximum orifice-diameter. For example, preparation of orifice diameters spaced from one another in length by 0.1 mm between the maximum orifice-diameter and the minimum one). The user himself can form and arrange the orifice 152, 152' or 152" of the diameter that he desires. Further, the metal mold can be made common, thereby allowing the main body 151, 151' and 151" to be formed by molding at a lower cost.

Moreover, the resin pipe fittings C10, C20 and C30 according to the third embodiment include the walls 153, 153' and 153", respectively, each of which is provided on its all surfaces with a plane 154 perpendicular to the fluid flow-passages 51B (51B₁, 51B₂), 51B' (51B₁', 51B₂') or 51B" (51B₁", 51B₂" , 51B₃"). The orifice 152, 152' or 152" is integrally formed with such wall 153, 153' or 153'', respectively to be provided therein, thereby enabling the orifice diameter to keep its length constant (with the wall 153, 153' or 153" of X mm in thickness, X mm) and vary only its diameter, differently from those provided by opening the tapered wall surfaces, and therefore allowing the target flow amount to be more readily gained.

Additionally, the resin pipe fittings C10, C20 and C30 according to the third embodiment each comprises a fitting structure for connecting an end portion of the main body 151, 151' or 151" to a tubular member 12 (a resin tube). Thus the orifice 152, 152' or 152" can be arranged at the tubular-member connection portion on the piping.

Besides, the resin pipe fittings C10, C20 and C30 according to the third embodiment each comprises a fitting structure for connecting an end portion of the main body 151, 151' or 151" to a fluid instrument 20. Thus the orifice 152, 152' or 152" can be arranged at the portion for connecting the fluid instrument on the piping.

Further, the resin pipe fittings C10, C20 and C30 according to the third embodiment each comprises a fitting structure which is of union-type using the press ring 53 (resin union nut), thereby enabling the tubular member 12 and the fluid instrument 20 on the piping to be easily attached and detached and therefore allowing the target flow amount to be more easily obtained.

Furthermore, the resin pipe fitting C10, C20 or C30 according to the third embodiment includes a main body 151, 151' or 151" made of fluorine resin for the material. This can apply to a portion of each of those pipe fittings C10, C20 and C30 according to the third embodiment in contact with the liquid, high heat-resistance, high pharmaceutical-resistant property (high corrosion-resistance), high friction-resistant property and non-adhesiveness. Therefore, it can be suitably used as the piping for the liquid of high-purity, the water of ultra-high purity and the pharmaceutical liquid to be treated during the production process of the semiconductor, the liquid crystal and the pharmaceutical products.

Fig. 61 is a sectional view showing another method of integrally forming a wall to provide an orifice in the main body, which is prepared for the resin pipe fitting according to the third embodiment. As the another method for integrally forming the wall 153 to provide the orifice 152 in the main body 151, as shown in Fig. 61, a main body 151a having a solid barrel portion 51A is formed by injection-molding and the thus formed main body 151a has its barrel portion 51A formed at its mid portion with a first fluid flow-passage 51B₁ and a second fluid flow-passage 51B₂, each of which has the axis (C) as its center axis and is like a cap, by using a drill thicker than the drill for forming the orifice, from two directions along the axis (C). This method can also integrally form the wall 153 between the first fluid flow-passage 51B₁ and the second fluid flow-passage 51B₂. As such, a boring-work (a secondary working) is conducted for the wall 153 formed by machining (a primary working) through using a drill thinner than that for forming the fluid flow-passage to thereby provide the orifice 152 as shown in Fig. 53. This method for forming the wall 153 of the resin pipe fitting C10 is available for forming the wall 153' of the main body 151' of the another resin pipe fitting C20 as well as for the wall 153' of the main body 151" of the still another resin pipe fitting C30.

Next, an embodiment (hereafter referred to as 'a fourth embodiment') of the present invention (as defined in claim 6) is explained below with reference to Fig. 62-Fig. 64. Fig. 62 is a sectional view showing how a resin pipe fitting according to the fourth embodiment is assembled. Fig. 63 is a sectional view showing how another resin pipe fitting (elbow) according to the fourth embodiment is assembled. Fig. 64 is a sectional view showing how still another resin pipe fitting (T) according to the fourth embodiment is assembled.

The resin pipe fitting A100 of the fourth embodiment shown in Fig. 62 is the same as the resin pipe fitting A10 with the orifice 102 of the first embodiment shown in Fig. 29 in structure. Similarly, the another resin pipe fitting A200 (elbow) of the fourth embodiment shown in Fig. 63 and the still another resin pipe fitting A300 (T) of the fourth embodiment shown in Fig. 64 are the same as the resin pipe fitting A20 (elbow) with the orifice 102' of the first embodiment shown in Fig. 33 and the resin pipe fitting A30 (T) with the orifice 102" of the first embodiment shown in Fig. 35, respectively, in structure. In order to avoid duplicated explanation, identical constructions are designated by identical reference numerals.

And while the resin pipe fitting A10, A20 or A30 according to the first embodiment includes a main body 101, 101' or 101" formed by injection-molding and having a wall 103, 103' or 103" to be formed with an orifice 102, 102' or 102" by post-working, the resin pipe fitting A100, A200 or A300 according to the fourth embodiment includes a main body 101b, 101b' or 101b" integrally formed with the orifice 102, 102' or 102" as well by injection-molding. In short, when forming the main body 101b, 101b' or 101b" by injection-molding, the orifice 102, 102' or 102" is integrally formed therewith.

Next, another embodiment (hereafter referred to as 'a fifth embodiment') of the present invention (as defined in claim 6) is explained below with reference to Fig. 65-Fig. 67. Fig. 65 is a sectional view showing how a resin pipe fitting according to the fifth embodiment is assembled. Fig. 66 is a sectional view showing how another resin pipe fitting (elbow) according to the fifth embodiment is assembled. Fig. 67 is a sectional view showing how still another resin pipe fitting (T) according to the fifth embodiment is assembled.

The resin pipe fitting B100 of the fifth embodiment shown in Fig. 65 is the same as the resin pipe fitting B10 with the orifice 132 of the second embodiment shown in Fig. 42, in structure. Similarly, the another resin pipe fitting B200 (elbow) of the fifth embodiment shown in Fig. 66 and the still another resin pipe fitting B300 (T) of the fifth embodiment shown in Fig. 67 are the same as the resin pipe fitting B20 (elbow) with the orifice 132' of the second embodiment shown in Fig. 46 and the resin pipe fitting B30 (T) with the orifice 132" of the second embodiment shown in Fig. 48, respectively, in structure. In order to avoid duplicated explanation, identical constructions are designated by identical reference numerals.

And while the resin pipe fitting B10, B20 or B30 according to the second embodiment includes a main body 131, 131' or 131" formed by injection-molding and having a wall 133, 133' or 133" to be formed with an orifice 132, 132' or 132" by post-working, the resin pipe fitting B100, B200 or B300 according to the fifth embodiment includes a main body 131b, 131b' or 131b" integrally formed with the orifice 132, 132' or 132" as well by injection-molding. In short, when forming the main body 131b, 131b' or 131b" by injection-molding, the orifice 132, 132' or 132" is integrally formed therewith.

Next, still another embodiment (hereafter referred to as 'a sixth embodiment') of the present invention (as defined in claim 6) is explained below with reference to Fig. 68-Fig. 70. Fig. 68 is a sectional view showing how a resin pipe fitting according to the sixth embodiment is assembled. Fig. 69 is a sectional view showing how another resin pipe fitting (elbow) according to the sixth embodiment is assembled. Fig. 70 is a sectional view showing how still another resin pipe fitting (T) according to the sixth embodiment is assembled.

The resin pipe fitting C100 of the sixth embodiment shown in Fig. 68 is the same as the resin pipe fitting C10 with the orifice 152 of the third embodiment shown in Fig. 54, in structure. Similarly, the another resin pipe fitting C200 (elbow) of the sixth embodiment shown in Fig. 69 and the still another resin pipe fitting C300 (T) of the sixth embodiment shown in Fig. 70 are the same as the resin pipe fitting C20 (elbow) with the orifice 152' of the third embodiment shown in Fig. 58 and the resin pipe fitting C30 (T) with the orifice 152'' of the third embodiment shown in Fig. 60, respectively, in structure. In order to avoid duplicated explanation, identical constructions are designated by identical reference numerals.

And while the resin pipe fitting C10, C20 or C30 according to the third embodiment includes a main body 151, 151' or 151" formed by injection-molding and having a wall 153, 153' or 153" to be formed with an orifice 152, 152' or 152" by post-working, the resin pipe fitting C100, C200 or C300 according to the sixth embodiment includes a main body 151b, 151b' or 151b" integrally formed with the orifice 152, 152' or 152" as well by injection-molding. In short, when forming the main body 151b, 151b' or 151b" by injection-molding, the orifice 152, 152' or 152" is integrally formed therewith.

As mentioned above, for an embodiment according to the present invention there is shown a resin pipe fitting and a method for producing the same. However, the present invention is not limited to this embodiment but may be variously modified for realization as far as it does not deviate from its subject matter as disclosed in the appended claims. For example, although the resin pipe fittings according to the first to the sixth embodiments are each made to have the same structure as that of each of three kinds of the standard resin pipe fittings (with no orifice), namely the first to the third resin pipe fittings illustrated for example, it does not intend to prohibit the resin pipe fitting from having the same structure as that of each of various sorts of resin pipe fittings other than the illustrated ones for example. Further, the resin pipe fitting according to the present invention may be used for adjusting not only the flow amount of the fluid in the piping system but also for regulating the pressure. In addition, the resin pipe fitting of the present invention is not inhibited from being used for mutually connecting fluid instruments other than for connecting tubes to each other and connecting a tube to a fluid instrument.

## Claims

1. A resin pipe fitting (A10, A20, A30, B10, B20, B30, C10, C20, C30, A100, A200, A300, B100, B200, B300, C100, C200, C300) comprising a main body (101, 101', 101", 131, 131', 131", 151, 151', 151", 101b, 101b', 101b", 131b, 131b', 131b", 151b, 151b', 151b") made of fluorine resin which includes a plurality of connection ports (4) and a fluid flow-passage (1B, 1B', 1B", 31B, 31B', 31B", 51B, 51B', 51B") for connecting these connection ports (4) in mutual communication, the main body (101, 101', 101", 131, 131', 131", 151, 151',151", 101b, 101b', 101b", 131b, 131b', 131b", 151b, 151b', 151b") being integrally formed with a wall (103, 103', 103", 133, 133', 133", 153, 153', 153") to partition the fluid flow-passage (1B, 1B', 1B", 31B, 31B', 31B", 51B, 51B', 51B") and with an orifice (102, 102',102", 132, 132',132", 152, 152', 152") for connecting the fluid flow-passages (1B, 1B', 1B", 31B, 31B', 31B", 51B, 51B', 51B") partitioned by the wall (103, 103', 103", 133, 133', 133", 153, 153', 153") to each other in mutual communication
**characterized in that**
each of all the surfaces of the wall (103, 103', 103", 133, 133', 133", 153, 153', 153") of the main body is provided with a circular plane (104, 134, 154) perpendicular to an axis (A) of each of the fluid flow-passages (1B, 1B', 1B", 31B, 31B', 31B", 51B, 51B', 51B"), and has the axis (A) of the fluid flow-passages (1B, 1B', 1B", 31B, 31B', 31B", 51B, 51B', 51B") as its center;
the plane (104, 134, 154) has a periphery provided with a tapered surface (105, 135, 155) progressively increasing its diameter axially outwards and being in continuity with a peripheral wall surface of each of the fluid flow-passages (1B, 1B' 1B");
the wall (103, 103', 103", 133, 133', 133", 153, 153', 153") is formed constant in thickness except vicinities of the tapered surface; and
the wall (103, 103', 130", 133, 133', 133", 153, 153', 153") is provided with the orifice (102, 102', 102", 132, 132', 132", 152, 152', 152") having the axis (A) as its center axis in such a manner that a length of the orifice is kept constant.

2. A resin pipe fitting as defined in claim 1, which comprises a fitting structure for connecting either of the end portions of the main body (101, 101', 101", 131, 131', 131", 151, 151', 151", 101b, 101b', 101b", 131b, 131b', 131b", 151b, 151b', 151b") to a resin tube (12),

3. A resin pipe fitting as defined in claim 1, which comprises a fitting structure for connecting either of the end portions of the main body (101, 101', 101", 131, 131', 131", 151, 151', 151", 101b, 101b', 101b", 131b, 131b', 131b", 151b, 151b', 151b") to a fluid instrument (20).

4. A resin pipe fitting as defined in claim 2 or claim 3, wherein a fitting structure is of a union-type which employs a resin union nut (3),

5. A method for producing the resin pipe fitting according to any one of claims 1 to 4, which comprises forming the main body (101, 101', 101", 131, 131', 131", 151, 151', 151", 101b, 101b', 101b", 131b, 131b', 131b", 151b, 151b', 151b") by injection-molding and providing the orifice (102, 102', 102", 132, 132', 132", 152, 152', 152") in a wall (103, 103', 103", 133, 133', 133", 153, 153', 153") of the main body (101, 101', 101", 131, 131', 131", 151, 151', 151", 101b, 101b', 101b", 131b, 131b', 131b", 151b, 151b', 151b") through a post-working.

6. A method of producing the resin pipe fitting according to any one of claims 1 to 4, which comprises integrally forming the orifice as well when forming the main body by injection-molding,

## Patentansprüche

1. Harzrohranschlussstück (A10, A20, A30, B10, B20, B30, C10, C20, C30, A100, A200, A300, B100, B200, B300, C100, C200, C300), das einen aus Fluorharz hergestellten Hauptkörper (101, 101', 101", 131, 131', 131", 151,151', 151", 101b, 101b', 101b", 131b, 131b', 131b", 151b, 151b', 151b") mit mehreren Verbindungsanschlüssen (4) und einem Fluidströmungskanal (1B, 1B', 1B", 31B, 31B', 31B", 51B, 51B', 51B") zum Verbinden dieser Verbindungsanschlüsse (4) in wechselseitiger Kommunikation aufweist, wobei der Hauptkörper (101, 101', 101", 131, 131', 131", 151, 151', 151", 101b, 101b', 101b", 131b, 131b', 131b", 151b, 151b', 151b") integral mit einer Wand (103, 103', 103", 133, 133', 133", 153, 153', 153") zum Teilen des Fluidströmungskanals (1B, 1B', 1B", 31B, 31B', 31B", 51B, 51B', 51B") und mit einer Öffnung (102,102', 102", 132, 132', 132", 152, 152', 152"), um die durch die Wand (103, 103', 103", 133, 133', 133", 153,153', 153") geteilten Fluidströmungskanäle (1B, 1B', 1B", 31B, 31B', 31B", 51B, 51B', 51B") miteinander in wechselseitiger Kommunikation zu verbinden, gebildet ist,
**dadurch gekennzeichnet, dass**
von allen Oberflächen der Wand (103, 103', 103", 133, 133', 133", 153, 153', 153") des Hauptkörpers jede mit einer kreisförmigen Ebene (104, 134, 154) versehen ist, die zu einer Achse (A) eines jeden der Fluidströmungskanäle (1B, 1B', 1B", 31B, 31B', 31B", 51B, 51B', 51B") senkrecht steht und die Achse (A) der Fluidströmungskanäle (1B, 1B', 1B", 31B, 31B', 31B", 51B, 51B', 51B") als ihren Mittelpunkt hat;
die Ebene (104, 134, 154) einen Umfang hat, der mit einer zulaufenden Oberfläche (105, 135,155) versehen ist, die ihren Durchmesser fortschreitend axial nach außen erhöht und mit einer Umfangswandoberfläche eines jeden der Fluidströmungskanäle (1B, 1B' 1B") kontinuierlich ist;
die Wand (103, 103', 103", 133, 133', 133", 153, 153', 153"), außer in der Nähe der zulaufenden Oberfläche, mit konstanter Dicke gebildet ist und
die Wand (103, 103', 130", 133, 133', 133", 153, 153', 153") mit der Öffnung (102, 102', 102", 132, 132', 132", 152,152', 152") versehen ist, welche die Achse (A) als ihre Mittelachse hat, so dass eine Länge der Öffnung konstant gehalten ist.

2. Harzrohranschlussstück gemäß Anspruch 1, das eine Anschlussstück-Struktur zum Verbinden eines der Endabschnitte des Hauptkörpers (101, 101', 101", 131, 131', 131", 151, 151', 151", 101b, 101b', 101b", 131b, 131b', 131b", 151b, 151b', 151b") mit einer Harzröhre (12) aufweist.

3. Harzrohranschlussstück gemäß Anspruch 1, das eine Anschlussstück-Struktur zum Verbinden eines der Endabschnitte des Hauptkörpers (101, 101', 101", 131, 131', 131", 151, 151', 151", 101b, 101b', 101b", 131b, 131b', 131b", 151b, 151b', 151b") mit einem Fluidinstrument (20) aufweist.

4. Harzrohranschlussstück gemäß Anspruch 2 oder Anspruch 3, bei dem eine Anschlussstück-Struktur einem Muffentyp angehört, bei dem eine Harzmuffe (3) eingesetzt wird.

5. Verfahren zur Herstellung des Harzrohranschlussstücks gemäß einem der Ansprüche 1 bis 4, das aufweist, den Hauptkörper (101, 101', 101", 131, 131', 131", 151, 151', 151", 101b, 101b', 101b", 131b, 131b', 131b", 151b, 151b', 151b") durch Spritzgießen zu bilden und die Öffnung (102, 102', 102", 132, 132', 132", 152, 152', 152") in einer Wand (103,103', 103", 133, 133', 133", 153, 153', 153") des Hauptkörpers (101, 101', 101", 131, 131', 131", 151,151', 151", 101b, 101b', 101b", 131b, 131b', 131b", 151b, 151b', 151b") durch eine Nachbearbeitung anzubringen.

6. Verfahren zur Herstellung des Harzrohranschlussstücks gemäß einem der Ansprüche 1 bis 4, das aufweist, auch die Öffnung beim Bilden des Hauptkörpers durch Spritzgießen zu bilden.

## Revendications

1. Raccord de tuyau en résine (A10, A20, A30, B10, B20, B30, C10, C20, C30, A100, A200, A300, B100, B200, B300, C100, C200, C300) comprenant un corps principal (101, 101', 101", 131, 131', 131", 151, 151', 151", 101b, 101b', 101b", 131b, 131b', 131b", 151b, 151b', 151b") fabriqué en résine fluorine, qui comporte une pluralité de ports de connexion (4) et un passage d'écoulement de fluide (1B, 1B', 1B", 31B, 31B', 31B", 51B, 51B', 51B") en vue de connecter lesdits ports de connexion (4) en communication mutuelle, le corps principal (101, 101', 101", 131, 131', 131", 151, 151', 151", 101b, 101b', 101b", 131b, 131b', 131b", 151b, 151b', 151b") étant formé intégralement avec une paroi (103, 103', 103", 133, 133', 133", 153, 153', 153") en vue de cloisonner le passage d'écoulement de fluide (1B, 1B', 1B", 31B, 31B', 31B", 51B, 51B', 51B") et avec un orifice (102, 102', 102", 132, 132', 132", 152, 152', 152") en vue de connecter les passages d'écoulement de fluide (1B, 1B', 1B", 31B, 31B', 31B", 51B, 51B', 51B") cloisonnés par la paroi (103, 103', 103", 133, 133', 133", 153, 153', 153") les uns aux autres en communication mutuelle,
**caractérisé en ce que**
chacune de toutes les surfaces de la paroi (103, 103', 103", 133, 133', 133", 153, 153', 153") du corps principal est dotée d'un plan circulaire (104, 134, 154) perpendiculaire à un axe (A) de chacun des passages d'écoulement de fluide (1B, 1B', 1B", 31B, 31B', 31B", 51B, 51B', 51B"), et possède l'axe (A) des passages d'écoulement de fluide (1B, 1B', 1B", 31B, 31B', 31B", 51B, 51B', 51B") comme son centre;
le plan (104, 134, 154) possède une périphérie dotée d'une surface effilée (105, 135, 155) accroissant progressivement son diamètre axialement vers l'extérieur et étant en continuité avec une surface de paroi périphérique de chacun des passages d'écoulement de fluide (1B, 1B', 1B") ;
la paroi (103, 103', 103", 133, 133', 133", 153, 153', 153") est formée avec épaisseur constante à l'exception des proximités de la surface effilée ; et
la paroi (103, 103', 130", 133, 133', 133", 153, 153', 153") est dotée de l'orifice (102, 102', 102", 132, 132', 132", 152, 152', 152") possédant l'axe (A) comme son axe central d'une telle manière qu'une longueur de l'orifice est gardée constante.

2. Raccord de tuyau en résine tel que défini dans la revendication 1, qui comprend une structure de raccord en vue de la connexion de l'une ou l'autre des parties d'extrémité du corps principal (101, 101', 101", 131, 131', 131", 151, 151', 151", 101b, 101b', 101b", 131b, 131b', 131b", 151b, 151b', 151b") à un tuyau en résine (12).

3. Raccord de tuyau en résine tel que défini dans la revendication 1, qui comprend une structure de raccord en vue de la connexion de l'une ou l'autre des parties d'extrémité du corps principal (101, 101', 101", 131, 131', 131", 151, 151', 151", 101b, 101b', 101b", 131b, 131b', 131b", 151b, 151b', 151b") à un instrument à fluide (20).

4. Raccord de tuyau en résine tel que défini dans les revendications 2 ou 3, dans lequel une structure de raccord est d'un type de raccordement qui emploie un écrou de raccordement en résine (3).

5. Méthode de production du raccord de tuyau en résine selon une quelconque des revendications 1 à 4, qui comprend la formation du corps principal (101, 101', 101", 131, 131', 131", 151, 151', 151", 101b, 101b', 101b", 131b, 131b', 131b", 151b, 151b', 151b") par moulage par injection et la livraison de l'orifice (102, 102', 102", 132, 132', 132", 152, 152', 152") dans une paroi (103, 103', 103", 133, 133', 133", 153, 153', 153") du corps principal (101, 101', 101", 131, 131', 131", 151, 151', 151", 101b, 101b', 101b", 131b, 131b', 131b", 151b, 151b', 151b") par un traitement ultérieur.

6. Méthode de production du raccord de tuyau en résine selon une quelconque des revendications 1 à 4, qui comprend la formation intégrale de l'orifice également par moulage par injection lors de la formation du corps principal.
